(19)

Europäisches
Patentamt
European
Patent Office
Office européen
des brevets

(11)  **EP 4 091 893 A1**

(12)  **EUROPEAN PATENT APPLICATION**
published in accordance with Art. 153(4) EPC

(43) Date of publication:
**23.11.2022  Bulletin 2022/47**

(21) Application number: **21741043.0**

(22) Date of filing: **06.01.2021**

(51) International Patent Classification (IPC):
**B60W 20/40** (2016.01)        **B60K 6/46** (2007.10)

(52) Cooperative Patent Classification (CPC):
**B60K 6/46; B60L 7/10; B60L 7/18; B60W 20/40;
B60W 30/182; B60W 50/00;** Y02T 10/62

(86) International application number:
**PCT/CN2021/070458**

(87) International publication number:
**WO 2021/143594 (22.07.2021 Gazette 2021/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **17.01.2020  CN 202010055674**

(71) Applicants:
• **LCB International Inc.
Tortola, VG1110 (VG)**

• **Gesang, Wangjie
Shanghai 201603 (CN)**
• **Cha, Wei
Shanghai 201603 (CN)**

(72) Inventors:
• **GESANG, Wangjie
Shanghai 201603 (CN)**
• **CHA, Wei
Shanghai 201603 (CN)**

(74) Representative: **Murgitroyd & Company
Murgitroyd House
165-169 Scotland Street
Glasgow G5 8PL (GB)**

(54)  **HEAVY TRUCK WITH FUEL-SAVING SYSTEM, AND FUEL-SAVING CONTROL METHOD THEREFOR**

(57)    An ACE heavy truck fuel saving system provided by the present disclosure is based on a double-motor mixed hybrid powertrain system architecture, especially an electrical power split device. Under the condition that no new hardware device is added, the transmission path, direction and amplitude of hundred-kilowatt-level mechanical or electric power flow among all vehicle-mounted power subsystems are dynamically regulated and controlled through software definition or remote iteration updating, new functions of vehicle longitudinal driving control and electromechanical energy management are flexibly established or the existing functions are timely improved, the SAE LI-level automatic driving function is achieved, therefore, the power performance, fuel consumption, pollutant emission and active safety of the complete vehicle can be optimized at the same time, and the actual energy-saving and emission-reducing effect of ACE heavy truck operation is basically decoupled from the performance of a vehicle engine and the driving level of a driver. A cloud-end and vehicle-end collaborative fuel saving data set is combined with a machine learning fuel saving algorithm, so that the fuel saving system has the capabilities of automatic learning and autonomous evolution in the life cycle of the vehicle, and energy saving and emission reduction of the vehicle can be continuously optimized.

FIG. 1

EP 4 091 893 A1

## Description

### Field

Disclosed is an ACE (Automated, Connected, Electrified) heavy duty truck fuel saving system focusing on a long haul logistics application scenario. The cyber physical system based on a hybrid powertrain of an engine plus dual motors adopts an intelligent stop-start technical solution in a series hybrid mode or an intelligent power switching technical solution in a parallel hybrid mode to realize the pulse-code modulation of a time-varying function of engine output power. The engine and dual motors provide dynamic collaborative driving to ensure that the vehicle road load power meets the vehicle dynamic equation in real time. The onboard IOT, satellite navigation and 3D electronic map are used in combination with vehicle configuration parameters and dynamic driving data to realize L1 automatic driving of the vehicle running in the same highway lane through predictive adaptive cruise control strategy, generate a fuel saving data set of the ACE heavy duty truck, upload the fuel saving data set to the cloud in time, and transform the energy management problem of the ACE heavy duty truck into the equivalent problem of AlphaGo. The heavy duty truck fuel saving robot uses the machine learning algorithm, the cloud fuel saving big data as well as an integration of the cloud-end and vehicle-end computing power to realize the autonomous learning and evolution of vehicle energy management and achieve the beneficial effects of optimal vehicle energy-saving and emission reduction, improvement of the active safety of driving, reduction of the labor intensity of the human driver for long-distance driving, guarantee of meeting the emission standard within 700,000 km of the after-treatment system performance of the vehicle in the real driving environment (RDE) and the like.

### Background

Road logistics is crucial to all major economies in the world. Long haul logistics (with average daily driving of more than 500 km; more than 80% of the driving mileage for highways) heavy trucks are both the backbone of the road logistics industry and the major fuel consumers and polluters in the transportation field. They are one of the focuses of energy-saving and emission reduction supervision and rectification in various countries throughout the year. At present, the mandatory regulations of Europe and America on emissions from large commercial vehicles (with a gross weight of more than 15 tons) including highway heavy duty trucks ("heavy duty trucks" for short) have turned from the Euro VI standard (fully implemented in Europe, 2014) focusing on reducing exhaust pollutant emissions and EPA-2010 (fully implemented in America, 2010) to a series of new emission regulations focusing on reducing carbon emissions of greenhouse gas (GHG) dominated by carbon dioxide ($CO_2$) in tail gas. The carbon emission ($CO_2$ g/km) of the vehicle is proportional to the fuel consumption (L/100 km) of the vehicle, and reducing fuel consumption (or improving fuel economy MPG; in mile/gallon) is equivalent to reducing carbon emissions.

The regulations on greenhouse gas from medium duty/heavy duty engines and commercial vehicles (GHG Phase II) issued by the U.S. federal government in 2016 explicitly specify the detailed mandatory standards for fuel economy (FE, mile/gallon) of all new medium duty/heavy duty engines and commercial vehicles sold in America is improved year by year and the fuel consumption (FC, L/100 km) and carbon emissions (g/km) are reduced from 2021 to 2027 on the premise of maintaining the emission limits for exhaust pollutants in EPA2010 unchanged. In early 2019, the EU passed its first European mandatory regulations on carbon emissions from heavy duty trucks (i.e. Euro VII). On the premise of maintaining the emission limits for exhaust pollutants in Euro VI unchanged, the regulations require that the carbon emissions (g $CO_2$/km) from new heavy duty trucks in Europe will be reduced by 15% by 2025 and the carbon emissions from new heavy duty trucks will be reduced by 30% by 2030 with heavy duty diesel trucks in 2019 as a benchmark. China began to implement the China V mandatory regulations on emissions from large commercial vehicles nationwide in 2017, and will implement the China VI mandatory regulations on emissions nationwide from July 2021. The China VI vehicle emission standards are basically the same as Euro VI and EPA-2010 in the aspect of limits for emissions of exhaust pollutants, and some limits are even stricter.

Emission regulations are the main driving force of vehicle powertrain technology development all over the world. The powertrain of heavy duty trucks that meet the China VI vehicle emission standards will be at the same technical platform level as that of North America and Europe for the first time in history. Based on the historical experience in the past 20 years that all the regulations China I to VI are formulated and promulgated by reference to regulations Euro I to VI, it is expected that China will follow the EU and quickly introduce the China VII regulations focusing on carbon emission intensity and fuel consumption of heavy duty trucks. After 2020, the mandatory emission regulations and industry focus of China, America and European Union as the three major heavy duty truck markets in the world will be turned to reduction of fuel consumption and carbon emissions of the heavy duty trucks from reduction of their exhaust pollutant emissions.

Heavy duty trucks are major polluters and fuel consumers around the world, and are the focuses of governments in various countries in energy-saving and emission reduction governance throughout the year. The fuel for heavy duty trucks in long haul logistics is a high frequency and massive rigid demand. The average fuel cost of a heavy duty truck for long haul logistics is approximately USD 60 thousands per year in Europe and America, and approximately RMB 400 thousands per year in China. The total fuel cost of more than 2 million heavy duty trucks in America is more than USD 100 billion per year, and the total fuel cost of more than 4 million heavy duty trucks in China is more than RMB 1 trillion per year. The fuel consumption and emissions of the heavy duty trucks are reduced through technical innovation, which is of great significance to OEMs, drivers, fleets, shippers, governments, societies and other stakeholders.

America leads the world in the development of the regulations and technologies on emissions from the heavy duty trucks and reduction of fuel consumption. As a part of the SuperTruck I, 2010-2016 project led and subsidized by the United States Department of Energy, four technical teams led by top four major heavy duty truck OEMs in America created four super heavy duty truck prototypes through five years of research and development, and achieved the goal of improving the fuel economy (gallon/ton-mile) by 50% for freight heavy duty trucks by the end of 2016 compared with 2009.

The SuperTruck I, 2010-2016 project of America integrates various energy-saving and emission reduction technologies for heavy duty trucks which may be subjected to commercial mass production before 2025. The future main challenge is to improve the comprehensive cost effectiveness of implementation of various energy-saving technologies. At present, the medium and long-term challenges in the U.S. heavy duty truck industry are how to achieve the mandatory requirements for 2027 heavy duty truck fuel consumption of GHG Phase II on the premise of controlling the price rise of new heavy duty trucks effectively. The stakeholders of the heavy duty truck industry in China need to face the severe test that the retail prices of new heavy duty trucks meeting the requirements of the Limits and Measurement Methods for Emissions from Light-duty Vehicles (China VI) and sold from 2019 are estimated to rise greatly compared with the selling price of current heavy duty trucks meeting the requirements of the Limits and Measurement Methods for Emissions from Light-duty Vehicles (China V).

In last ten years, in the world's major automobile markets, especially the world's largest Chinese automobile market, there are successful cases of mass commercial use of electric or hybrid passenger vehicles and large buses heavily subsidized by the government. However, on the Chinese/American/European Union's markets of the largest, most technologically advanced heavy duty truck for long haul logistics, domestic and foreign industry experts agreed that the mass commercial use of electric heavy duty trucks or hybrid heavy duty trucks for long haul logistics cannot be achieved without subsidies before 2030 due to limitations of industrializable power battery technologies and performance limits. See the following unclassified industry research reports for details: 1) Ricardo (2017), "Heavy Duty Vehicle Technology Potential and Cost Study", Final Report for ICCT; 2) "European Heavy-Duty Vehicles: Cost Effectiveness of Fuel-Efficiency Technologies for Long-Haul Tractor-Trailers in the 2025-2030 Timeframe" published by Oscar Delgado et al from ICCT in January 2018; 3) "HDV Fuel Efficiency Technologies" published by Doctor Felipe Rrodriguez from ICCT on June 28, 2018; 4) "Adoption of New Fuel Efficient Technologies from SuperTruck" presented by the United States Department of Energy to the United States Congress on June 2016.

The actual fuel consumption (L/100 km) of a hybrid vehicle is closely related to its driving conditions. Vehicles under urban conditions have low average speed and frequent active acceleration, deceleration or braking; vehicles under high-speed conditions have high average speed and infrequent active acceleration, deceleration or braking. Hybrid vehicles recover energy mainly through regenerative braking of the driving motors to achieve the beneficial effects of energy saving and emission reduction. The global automotive industrial and academic circles have the following "consensus" on the fuel saving potential of hybrid vehicles (light-duty vehicles and large commercial vehicles) for a long time: hybrid vehicles have a more obvious fuel saving effect than traditional fuel vehicles under urban conditions, and the overall fuel consumption can be reduced by more than 30%; however, hybrid vehicles have a less obvious fuel saving effect than traditional fuel vehicles under full high-speed conditions (average speed is above 60 km/h; active acceleration or braking is infrequent), and it is impossible to reduce the overall fuel consumption by more than 10%, especially for tandem hybrid vehicles, because the engine power generation drive has to undergo multiple energy conversions, the fuel saving effect is lower than that of parallel hybrid vehicles and may even consume more fuel than traditional fuel vehicles under high-speed conditions.

Diesel engines account for more than 95% of internal combustion engines for heavy duty trucks in use all over the world. The diesel engines of heavy duty trucks can stably work in their high efficiency combustion area under high-speed conditions. After decades of continuous improvements, the fuel saving benefits decrease progressively, the technical challenge of further reducing the fuel consumption of traditional diesel engines is growing, and the increase in cost also reaches a higher level. In the past 25 years, the annual decline in average fuel consumption (L/100 km) improvement was less than 1.5% for the industry of heavy duty trucks for long haul logistics in America, Europe and China. With regard to heavy duty truck manufacturers in Europe, America and China, it is a very big technical and commercial challenge to continuously reduce the actual comprehensive fuel consumption (L/100 km) of heavy duty trucks for long haul logistics annually at the market-proven cost and paid effectiveness. Refer to the position paper "The European Commission Proposal on CO2 Standards for New Heavy-Duty Vehicles" issued by Association des Constructeurs Européens d'Automobiles (ACEA) in August 2018 for EU's Euro VII emission standard legislation for heavy duty trucks. According to ACEA, the target of reducing fuel consumption by 15% in 2025 and 30% in 2030 in the Euro VII carbon emission standard to be approved by the EU is too radical. The development of new heavy duty truck powertrain takes a long time, and there is no cost-effective and timely mass-produced technical route available to achieve the EU fuel saving regulations target for 2025.

Any fuel-saving technology has the dual benefits of reducing vehicle exhaust pollutant emissions and greenhouse gas (or carbon) emissions. In addition to the two constant challenges of energy saving and emission reduction, driving safety is also the most important for heavy duty trucks for long haul logistics. The vast majority (90%+) of traffic accidents occurring to heavy duty trucks are originated from distraction to drivers, fatigue driving, operation errors and other human factors. One of the main purposes of developing L3/L4 automatic driving commercial vehicles for long haul logistics is to eliminate human factors and improve driving safety. In order to meet the functional safety level requirements of vehicles as specified in ISO 26262, L3/L4 automatic driving commercial vehicles must be configured with redundant dynamic systems and braking systems.

On the premise of ensuring the power of the vehicle, optimizing energy saving, emission reduction and active safety are the three ultimate goals relentless pursued by the global automotive industry for a long time. In the past two decades, Mainstream heavy duty truck OEMs in Europe and America and relevant research institutions have invested a lot of manpower and materials to actively explore and develop a variety of heavy duty truck fuel saving technologies, but mainstream heavy duty truck OEMs and tier one suppliers in Europe and America by the end of 2019 have not published a timely industrializable mainstream technical routes or scheme for heavy duty truck powertrain that can meet the 2025 carbon emission target or standard value of the Euro VII regulation and/or the 2027 carbon emission target value of the American GHG-II regulation.

After the Volkswagen "dieselgate" event, governments of all countries strengthened the monitoring of actual pollutant emission from diesel vehicles in use; they rely on the portable emissions measurement system (PEMS) to check diesel vehicles randomly and measure their Real Drive Emission (RDE) onboard. The EU's Euro VI and new Euro VII regulations on emissions, EPA-2010 of America and new GHG Phase II regulations on emissions specify that the post-processing system of the diesel heavy duty truck powertrain must guarantee the emission meeting the durability standard of 700,000 km (435,000 miles) under Real Drive Emission (RDE); otherwise, mandatory recall is required. The mandatory requirement for emission from heavy duty truck meeting the durability standard of 700,000 km under RDE are also provided in the China VI regulations on' emissions that will be implemented in an all-round way, and this durability requirement is extremely challenging for the OEMs and tier one suppliers in China's heavy duty truck industry to develop, produce and sell the China VI heavy duty trucks or powertrain subsystems. Higher requirements are also put forward to fairly, strictly and consistently regulatory governance of major traffic energy consumers and polluters such as highway heavy duty trucks and other large commercial vehicles by environmental protection and traffic police authorities at all levels in various regions in China.

In 2018, Cummins, a famous enterprise of diesel engines of heavy duty trucks in the world actively recalled the 500,000 diesel engines of heavy duty trucks manufactured and sold from 2010 to 2015 in North America (America, Canada) due to the durability design defect in its diesel engine post-processing system, which made it impossible to guarantee that all of its diesel engines met the emission meeting the durability standard under RDE of EPA-2010 within 700,000 km. The U.S. Environmental Protection Agency (EPA) particularly promoted the Cummins diesel engine recall as a good model of truly meeting the regulations on emission over the long term by government and enterprise cooperation. Although mass production of new China VI diesel engines of heavy duty trucks is difficult, it is more difficult to guarantee that all the China VI heavy duty diesel engines meet the requirement for emission meeting the durability standard under RDE within 700,000 km, and the only way to verify whether the emissions from heavy duty trucks that meet the China VI vehicle emission standards meet the durability standard under RDE is to rely on the big data on actual driving of hundreds of thousands of heavy duty trucks that meet the China VI vehicle emission standards over the past five years of service. China seriously emphasizes regulatory governance of environmental protection according to law and pays attention to the actual effect. A few years later, it may be a high probability event that some brands of heavy duty trucks that meet the China VI vehicle emission standards are recalled in batches because the fact that the exhaust emission under the real driving environment (RDE) cannot all meet the China VI vehicle emission standards within the 700,000-kilometer warranty period.

The information in the Background Section is only intended to promote the understanding of the overall technical background of the disclosure, and should not be deemed to recognize or imply in any form that the information has become the prior art well known to those skilled in the art.

## Summary

The present disclosure provides a novel and unique heavy duty truck fuel saving robot system for long haul logistics and aims to solve the worldwide problem that it is difficult to find a technical route for highly cost effective heavy duty truck powertrain capable of mass production and commercialization, which can meet the 2025 carbon emission target of the new Euro VII regulation for emissions and the 2027 carbon emission target of the American greenhouse gas Phase II (GHG-II) regulation due to slow improvement in fuel consumption (annual decline is less than 1.5% on average) of the new heavy duty truck with internal combustion engine year by year in the prior art. In the application scenarios of long haul logistics, the overall fuel consumption (L/100 km) of an Automated-Connected-Electrified (ACE) heavy duty truck with fuel saving robot under the real driving environment (RDE) can be reduced by more than 25% on the premise of ensuring the power, active safety and rate of attendance of the vehicle compared with the traditional diesel heavy duty truck in the same period. In addition, the active safety of vehicle driving can also be improved, and it can even ensure that the exhaust emission under the RDE meets the standard stably within 700,000 km. All the main subsystems of the fuel saving robot of the ACE heavy duty truck in the present disclosure have been industrialized, which can realize mass production and commercial application in recent years and meet the 2025 carbon emission target of the Euro VII regulation or the 2027 carbon emission target of the American greenhouse gas Phase II (GHG-II) regulation in advance without relying on any products or technologies that are not mature or cannot be industrialized in the near future. The fuel saving robot of the present disclosure can also improve the power and active safety of the vehicle by dynamically switching the series hybrid mode or parallel hybrid mode of the ACE heavy duty truck. This will be described in detail later.

In order to solve the above technical problems and achieve the above advantageous technical effects, the present disclosure is realized through the following technical solution:

The energy of current various hybrid passenger vehicles or large commercial vehicles is effectively recovered by restricting the engine to operate at the high efficiency range and regenerative braking of a driving motor to charge the battery pack under the urban or suburban conditions where the vehicles need to actively accelerate and apply brakes frequently at the average speed less than 40 km/h, which greatly reduces the overall fuel consumption (by 30%~60%) compared with traditional engine vehicles, with obvious energy saving and emission reduction effects and high cost effectiveness, thus having achieved the mass commercial use of the hybrid vehicles in the world's major automotive markets. However, with regard to heavy duty trucks for long haul logistics, most of the run time and mileage (over 85%) within their product life cycles are under highway conditions, with few active acceleration or braking, the highway networks in economically developed regions in China are congested throughout the year, the average speed of heavy duty trucks for long haul logistics is about 60 km/h, while the average speed of heavy duty trucks for long haul logistics in America is about 95 km/h. The engines of traditional diesel heavy duty trucks with few active acceleration or braking stably work at the high efficiency range for a long time under the expressway conditions, with optimized overall fuel consumption and limited further improvement space; while the regenerative braking energy recovery function of the hybrid vehicles is useless due to infrequent active braking of the vehicles; in addition, the hybrid vehicles, especially range-extended series hybrid vehicles, have additional loss due to multiple energy conversions among chemical energy, mechanical energy, electric energy and mechanical energy, so there has been a "consensus" in the global automobile and road transportation industry for a long time that the drop of the overall fuel consumption of hybrid heavy duty trucks for long haul logistics (hereinafter referred to as "hybrid heavy duty trucks") is limited compared with the traditional diesel trucks, it is unlikely that the largest fuel saving rate exceeds 10%, especially series hybrid vehicles which may even have slightly increased overall fuel consumption under high-speed conditions. According to the technical and industrial development status of current international/domestic three major powers (battery, motor and electronic control), compared with traditional heavy duty diesel trucks, the cost growth of hybrid heavy duty trucks is obvious, but the fuel saving effect is not obvious, and consequently the cost effectiveness of the hybrid heavy duty trucks is low (for example, the return on investment (ROI) of making up the comprehensive cost difference between hybrid heavy duty trucks and traditional fuel heavy duty trucks by saving fuel cost is longer than three years) without government subsidies, and the sustainable market competitiveness is insufficient.

As described above, experts in the global heavy duty truck industry reach a consensus that the mass commercial use of the hybrid heavy duty trucks for long haul logistics is difficult to achieve without government subsidies in the global markets of China, America and Europe, the three major heavy duty truck core markets, before 2030. In addition, electric heavy duty trucks for long haul logistics (a battery pack with an effective capacity of 1000 kWh is required) are difficult to be commercialized in batches before 2030 without high government subsidies subject to the technical limits of today's power lithium batteries and the limitations of industrial development. Hydrogen-electric hybrid heavy duty trucks with hydrogen fuel cells as low carbon clean range extenders cannot be commercially available in batches until 2030 due to the restrictions of technology, industrial chain, immaturity and high cost of hydrogen production/hydrogenation infrastructures and other factors.

The global highway freight industry faces another major challenge that the shortage of drivers and turnover rates are high throughout the year. For the same heavy duty trucks, loads and routes, drivers with different experiences and capabilities can result in the actual overall fuel consumption difference up to 25%. The actual fuel consumption of heavy duty trucks for long haul logistics varies from person to person, driver management consumes the fleet management resources and is inefficient, which are another major shortcoming of the industry. Lots of freight transport companies reduce the difference between the actual fuel consumption and the optimal fuel consumption caused by human factors of drivers though various methods, such as driver training, fuel-efficient rewards and punishments, installation of onboard sensors, big data analysis of driver's driving behavior and fuel saving guidance. But the above methods fix the symptom instead of the root cause, and "the actual fuel consumption of heavy duty trucks varying with each individual with high discreteness" is always a big industrial pain spot for most fleets of long haul logistics.

The cost effectiveness of ACE heavy duty trucks for long haul logistics must be greatly improved for the purpose of long-term sustainable competition with the traditional fuel heavy duty trucks without government subsidies to realize large-scale commercial use as soon as possible. The average selling price (retail price USD 150,000/vehicle in America or RMB 400,000/vehicle in China) of the heavy duty diesel trucks for long haul logistics is three to eight times the price of common passenger vehicles in the market of America or China, but the annual fuel cost of the hybrid heavy duty diesel trucks for long haul logistics is 30 to 50 times the annual fuel cost of family passenger vehicles. The retail price of gasoline or diesel in America and China is obviously lower than the retail price of the gasoline or diesel in Europe, and the proportion of the price of passenger vehicles to heavy duty trucks and the annual fuel expense in Europe is similar to that in China and America. Two effective methods for improving the cost effectiveness of the hybrid heavy duty diesel trucks for long haul logistics are provided, one is to increase the fuel saving ratio compared with that of traditional diesel vehicles, and the other is to reduce the price difference between the sum of the one-time purchase cost and the accumulated vehicle operation and maintenance cost of the hybrid heavy duty diesel trucks and that of the traditional diesel vehicles (i.e., Total Ownership Cost, TOC), i.e., to broaden sources of income and reduce expenditure. The saved fuel cost can be directly converted into the profit of the fleet on the premise of ensuring the power, safety and rate of attendance of the ACE heavy duty trucks.

Based on the objective fact that the fuel saving effect of most hybrid passenger vehicles (with gross weight of less than 3.5 tons; series, parallel, or mixed hybrid system architecture) is not obvious under full high-speed conditions, global automobile industry experts (especially heavy duty truck industry experts) make their extensional speculation and conclude that the actual overall fuel saving ratio of hybrid heavy duty trucks for long haul logistics, in particular the series hybrid heavy duty trucks, cannot be higher than 10%, and there may even be a slight increase in fuel consumption. So far (end of 2019), no public report or academic paper on comparative analysis of the fuel consumption of hybrid heavy duty trucks vs. traditional diesel heavy duty trucks, especially extended-range series or mixed hybrid heavy duty trucks after large-scale road tests of "three reals" (real vehicle, real road and real goods) in the scenario of long haul logistics has been found worldwide, not to mention commercial use in bulk. However, the above industry consensus, like the so-called "White Swan consensus" in history, has its limitations. The industry experts ignore the secret source for possibly reducing the actual fuel consumption of the hybrid heavy duty trucks for long haul logistics greatly, that is the time-varying function Pg(t) of grade power with amplitude of hundreds of kilowatts caused by small changes (1.0 degree) of the road longitudinal slope tilt ("longitudinal slope" for short) and many opportunities to recover kilowatt hour (KWh) electric energy through regenerative braking of 100 kW driving motor generated when the heavy duty truck is going downhill at high speed.

The core of the present disclosure is to create a new heavy duty truck species: Automated-Connected-Electrified (ACE) heavy duty truck based on a 100-kilowatt-class power electronic three-port network (ePSD - electrical power split device; also known as "electrical power diverter") through the effective integration of vehicle engine plus double-motor Mixed Hybrid powertrain technology, Global Navigation Satellite System (GNSS), 3D e-map (3D map), Internet of Things, Big Data, artificial intelligence (AI) and other emerging technologies, the vehicle is equipped with a "fuel saving robot" which enables automatic optimization and autonomous evolution of the heavy duty truck fuel saving strategy and commands the vehicle to implement the technical solution of predictive adaptive cruise (PAC) to realize the L1 automatic driving function of SAE, free the driver's feet, and achieve multiple beneficial effects of optimization of fuel consumption and emissions, improvement of power, promotion of active safety, reduction of the labor intensity of drivers during long-distance driving and the like. The actual overall fuel consumption drop of ACE heavy duty trucks is up to 30% compared with that of the traditional heavy duty diesel trucks in the application scenarios of long haul logistics, and it can also eliminate the long-term industrial pain point of high discreteness of overall fuel consumption value of the heavy duty truck due to "human factors" of drivers; moreover, ACE heavy duty trucks can also improve the existing functions of the vehicle and add new functions through software definition and over-the-air (OTA), greatly improve the cost effectiveness of ACE heavy duty trucks in the whole life cycle (up to 20 years in Europe and America), broaden sources of income and reduce expenditure, reduce cost and increase efficiency for the fleets. For the transport fleet, efficiency and safety are two eternal themes. Various electromechanical hardware and software on ACE heavy duty trucks plus the dynamically collaborative cloud-end AI training chip and vehicle-end AI inference chip combined with structured big data (i.e., fuel saving data set) about the operation of ACE heavy duty trucks on the cloud end and vehicle end and various fuel saving machine learning algorithms form a system device of "fuel saving robot for heavy duty trucks". This fuel saving robot will assist human drivers to automatically optimize the energy and power management of heavy duty trucks for long haul logistics in real time, reducing the overall fuel consumption by more than 25% compared with the traditional heavy duty diesel trucks, and has the capability of autonomous learning and evolution. It is estimated that the mass commercial use of the fuel saving robot of ACE heavy duty trucks for long haul road logistics can be realized in the three major heavy duty truck markets of America, China and the European Union in five years.

The first principle of the fuel saving robot technology of the ACE heavy duty trucks is the vehicle longitudinal dynamic equation (1-1) that the automobile industry is very familiar with:

$$P_v = \frac{V}{1000\eta}\left(Mgf_r\cos\alpha + \frac{1}{2}\rho_a C_D A_f V^2 + Mg\sin\alpha + M\delta\frac{dV}{dt}\right) \qquad (1\text{-}1),$$

Where, $P_v$ is the vehicle power or the road load power, and the unit of all power items is kilowatt (KW).

The rolling power $P_r$ refers to the required power for overcoming the tire rolling friction resistance when the vehicle runs, the rolling power is a nonnegative value and can be shown in the following formula (1-2):

$$P_r = \frac{V}{1000\eta}\left(Mgf_r\cos\alpha\right) \qquad (1\text{-}2),$$

The air drag power $P_d$ refers to the required power for overcoming air resistance (calm weather) when the vehicle runs, the air drag power is a nonnegative value and can be shown in the following formula (1-3):

$$P_d = \frac{V}{1000\eta}\left(\frac{1}{2}\rho_a C_D A_f V^2\right) \qquad (1\text{-}3),$$

The longitudinal slope power $P_g$ refers to the required driving power for overcoming gravity and increasing gravitational potential energy when the vehicle runs uphill, the driving power is a positive value, and the longitudinal slope power when the vehicle runs downhill is a negative value, representing the driving power generated by conversion between the potential energy and the kinetic energy of the vehicle; and the longitudinal slope power $P_g$ can be shown in the following formula (1-4):

$$P_g = \frac{V}{1000\eta}\left(Mg\sin\alpha\right) \qquad (1\text{-}4),$$

The acceleration power $P_a$ refers to the required additional power for the vehicle reaching the predetermined acceleration when running on a level road. When the acceleration is a negative value, it represents mechanical friction braking for converting the kinetic energy of the vehicle into thermal energy to be consumed, or regenerative non-friction braking for converting part of the kinetic energy of the vehicle into the electric energy to be recycled. The acceleration power $P_a$ can be shown in the following formula (1-5):

$$P_a = \frac{V}{1000\eta}\left(M\delta\frac{dV}{dt}\right) \qquad (1\text{-}5).$$

In the above formulas (1-1)-(1-5): V is the vehicle speed (m/s); $\eta$ is the vehicle drive train efficiency; M is the gross vehicle mass (kg); g is the acceleration of gravity, and is equal to 9.8 (m/s$^2$); $f_r$ is the tire rolling friction coefficient; $\alpha$ is the highway longitudinal slope angle; the positive value represents upslope, and the negative value represents downslope; $\rho_a$ is air density (kg/m$^3$); $C_D$ is the vehicle wind resistance coefficient; $A_f$ is the area (m$^2$) in front of the vehicle; $\delta$ is the rolling mass conversion coefficient; dV/dt is the vehicle acceleration (m/s$^2$), the positive value represents acceleration, and the negative value represents deceleration or braking. The longitudinal slope of each highway is only a spatial function. Unless the road is repaired, the longitudinal slope function does not vary with time. Because the longitudinal speed of the vehicle is a null function, the longitudinal slope power is a space-time function according to equation (1-4), and there is only one substantially and rapidly changing space-time function in the dynamic equation when the vehicle runs at constant speed.

Active braking deceleration or acceleration is seldom performed by the vehicle under the expressway running condition. When the vehicle runs at a basically constant speed, the acceleration power is basically zero, the rolling power is basically unchanged on a highway section with a small longitudinal slope (i.e., the longitudinal slope within several degrees), the air drag power can be approximated to a constant, only the longitudinal slope power is a time variable, and the change amplitude of the longitudinal slope power is proportional to the sine of longitudinal slope angle of the expressway section, vehicle speed and gross vehicle weight.

The gross weight limit of the heavy duty truck for long haul logistics in China is mostly below 41 tons, the maximum statutory speed limit is 90 km/h, maj or highways in China are often jammed, and the average speed of the heavy duty trucks in the road logistics industry is about 60 km/h; the gross weight limit of the heavy duty truck for long haul logistics in America is 36 tons, the maximum statutory speed limit is up to 125 km/h, and the average running speed of the heavy duty trucks in the road logistics industry is about 95 km/h. Most American transport companies generally limit the maximum speed of the heavy duty trucks to 105 km/h in view of fuel saving and safety.

For example, for a fully loaded heavy duty truck with the gross weight of 40 tons and the speed of 60 km/h, the required longitudinal slope power is up to 228 KW when the vehicle runs on a highway upslope with a longitudinal slope of 2.0 degrees at a constant speed, namely that the road longitudinal slope is 2.0. At the moment, the sum of the rolling resistance power and the air drag power of the vehicle is only 71 KW. If the power margin of the vehicle powertrain is insufficient, the driver needs to shift gears and speeds down to continuously run uphill. Compared with a passenger vehicle with the gross weight of 2 tons, when the passenger vehicle runs on a longitudinal slope at 2.0 degrees, the longitudinal slope power for the vehicle at the moment is only 11.4 KW (5.0% of the longitudinal slope power of the heavy duty truck), and the sum of the rolling friction power and the wind drag power is only 3.6 KW; for passenger vehicles with the peak power of 100 KW, there is no need to worry about this slope, and the vehicle runs as easily as walking on firm earth. In other words, for each fully loaded heavy duty truck running at high speed, every 1.0 degree change, which is hard to see by naked eyes, of the road longitudinal slope means that the road load power of the heavy duty truck (mainly originated from longitudinal slope power changes) will have a great change of more than 100 KW. Going uphill must be followed by going downhill. When going downhill, the 100 KW level longitudinal slope power of the heavy duty truck is negative, a constant vehicle speed can be maintained through the regenerative braking of the driving motor (equivalent to negative acceleration power during active braking), mechanical energy generated when the vehicle goes downhill can be converted into electrical energy to charge the battery pack and recover energy. Although there are few active brakes for ACE heavy duty trucks under high-speed conditions, there are still many opportunities to recover KWh level electrical energy by regenerative braking while going downhill for ACE heavy duty trucks running at basically uniform speed because slight changes of 1.0 degree level of the longitudinal slope along the longitudinal slope of the highway can bring 100 KW level longitudinal slope power changes. A small stream flows far, and many a little makes a mickle.

The "longitudinal slope" is short for the road longitudinal slope and there are two unit of measurement; one is the included angle between the road surface and the horizontal plane, and the other is the proportion of the road surface elevation to the horizontal projection distance of the road section, shown in %. Most countries limit the longitudinal slope within the range of -7.0%~+7.0% in highway design and construction, which is mainly based on consideration of ensuring that the full-load heavy duty truck runs on a highway safely and effectively.

When the vehicle is running at the speed of 60 km/h, the required acceleration or braking power is 67 kW for passenger vehicles with the gross weight of 2.0 tons to realize moderate-intensity braking with the deceleration of 2 m/s$^2$ (i.e., 0.2 g, g for the acceleration of gravity); however, for a heavy duty truck with the gross weight of 40 tons, the acceleration or braking power required is as high as 1,333 kW. The total mass of an urban electric bus is 20 tons, the average speed is less than 30 km/h, and the braking power required for the urban bus to achieve the deceleration of 0.2 g is below 333 kW. Limited by the peak power of the industrializable onboard driving motor and/or the motor control unit (power electronics), the peak power of hybrid vehicles to recover energy by regenerative braking is basically below 500 kW at present. However, the part of instantaneous vehicle braking power higher than 500 kW cannot be converted into electric energy by regenerative braking of the motors for charging the battery pack to recover energy, so this part of vehicle kinetic energy can only be converted into heat energy by the mechanical braking system of the vehicle and totally wasted. At present, the commercialized DC fast charging pile with the maximum power in the world is the 375 kW charging pile. Under the mixed running conditions of a city or a suburb where the acceleration/deceleration is frequent, the fuel saving of the hybrid vehicles (light-duty vehicles or large buses) is more obvious than that of traditional vehicles powered by engines, and the fuel saving ratio is 30%~60%.

Under the running conditions of closed highways with infrequent active acceleration and deceleration with an average vehicle speed of higher than 60 km/h, the traditional engine can work stably in its high efficiency range, compared with the fuel saving effect of the traditional vehicles powered by engines, the fuel saving effect of the hybrid vehicle is not obvious (the rate of fuel saving is less than 10%), especially the series hybrid vehicles, and the overall fuel consumption may be even surging rather than falling because of the additional energy loss caused by multiple energy conversions. The above-mentioned "consensus" of the global automobile industry is applicable for all hybrid passenger vehicles (with gross weight less than 3.5 tons) and parallel hybrid (an engine with the peak power of greater than 250 kW is mechanically connected in parallel with a medium-sized motor with the peak power of less than 200 kW) large commercial vehicles.

However, inventors believe that the "consensus" of the industry is not applicable for the ACE heavy duty trucks with a double-motor extended-range series hybrid or mixed hybrid (series-parallel) system architecture in the application scenario of long haul logistics. Although there are few active accelerations or brakes for ACE heavy duty trucks under high-speed conditions, there are many opportunities to recover KWh level electrical energy through regenerative braking of driving motor using the 100 kW level longitudinal slope power while going downhill due to the slight changes of 1.0 degree level along the longitudinal slope of the highway. A small stream flows far, and many a little make a mickle. In other words, when a loaded heavy duty truck runs along a highway at a constant speed, the small 0.1-degree-level change of the longitudinal slope function can lead to the 100 KW level longitudinal slope power changes, and the impact on road load power is equivalent to frequent acceleration or braking of a passenger vehicle or bus on an urban horizontal road.

All the series hybrid or mixed hybrid ACE heavy duty trucks of the present disclosure contain an engine (diesel or natural gas) of heavy duty truck with the peak power of greater than 250 kW and two large motors with the peak power of greater than 200 kW. One motor (MG1) is mainly used as the generator, and the other motor (MG2) is mainly used as the driving motor. The driving motor is one of the decisive factors for the power performance of hybrid heavy duty trucks, and its peak power shall be greater than 250 kW. The larger the driving motor, the better the vehicle power performance, and the better the effect of regenerative braking energy recovery. To solve the problem that the cost of the conventional large driving motor stays in a high position without going down, a three-motor hybrid system with a standard main driving motor (MG2) and an optional auxiliary driving motor (MG3) may be considered.

The hybrid heavy duty trucks for long haul logistics can make full use of the 100 kW level downhill longitudinal slope power generated by the slight changes of 1.0 degree level longitudinal slope along the highway to recover KWh level energy by charging the battery pack frequently and rapidly through regenerative braking power generation of the vehicle even if they are running at basically uniform speed, which is equivalent to energy recovery by the hybrid passenger vehicles or hybrid buses through regenerative braking during frequent active braking under urban conditions, and the fuel saving effect is more obvious than that of the traditional fuel vehicles. In other words, even in vast plain areas (where most longitudinal slopes of road are within the range of -2.0-+2.0 degrees), for an ACE heavy duty truck running at a basically constant (the absolute value of speed change rate is less than 10%) high speed, many opportunities to recover sub-kWh-level energy through 100 kW level regenerative braking and reduce the application of mechanical brake using the slight changes within 2.0 degrees of longitudinal slope along the highway can also be obtained. For energy recovery, a small stream flows far, and many a little make a mickle. This is the secret that ACE heavy duty trucks for long haul logistics have a more obvious fuel saving effect than that of the traditional diesel heavy duty trucks.

In the recent ten years, for some medium and high-end heavy duty trucks with engines in Europe and America, fuel has been saved through the predictive cruise control by using the vehicle-mounted 3D map comprising the road longitudinal slope information. However, the predictive cruise fuel saving of traditional heavy duty trucks has limitations: a pure mechanical power assembly is not applicable for substantially and suddenly changing the output power of the engine instantaneously (sub-second level), and the automatic transmission shifts gears frequently; the predictive cruise control is only applicable for long upslopes with the longitudinal slope angle of larger than 2.0 degrees and the slope length of above several kilometers; the traditional engine vehicle has no regenerative braking function, energy cannot be recycled when the vehicle is going down a long slope, and the actual overall fuel consumption decreases by less than 3.0%.

It is noted that there are no highways in the world that are absolutely horizontal. Even in vast plain areas, there are still road sections with non-ignorable length along the highway, and the absolute value of longitudinal slope is within the range of 0.2-3.0 degrees. For loaded heavy duty trucks running at basically constant speed under the highway conditions, the sum of the rolling resistance power $P_r$ and the air drag power $P_d$ is approximated as a constant, the biggest impact factor for the time variable of the road load total power $P_v$ is the longitudinal slope power $P_g$, which is proportional to the longitudinal slope sine. For every small upslope and downslope (with a longitudinal slope change of 1.0 degree) along the road, the change amplitude of longitudinal slope power is more than 100 kW, providing many opportunities to recover KWh level energy by 100 KWh level regenerative braking power for ACE heavy duty trucks. A small stream flows far, and many a little make a mickle. If there is a vehicle-mounted 3D map on which the highway longitudinal meter-level interval density, the road positioning meter-level precision (longitude and latitude) and the longitudinal slope measurement accuracy up to 0.1 degree, by the aid of the real time positioning (longitude and latitude) and attitude measurement (longitudinal slope) of Internet of Vehicles, the meter-level high-precision satellite navigation (GNSS) and inertial navigation (IMU) and according to the vehicle kinetic equation (1-1), the vehicle control unit (VCU) can rapidly and accurately predict the road load power variation of the vehicle within hundreds of kilometers, especially the 10-kilowatt precision time-varying function of the longitudinal slope power $P_g(t)$ and the road load power $P_v(t)$ within the range of hundreds of kilometers of the electronic horizon in front of the vehicle. The predictive refresh frequency of the VCU can be up to 10.0 hertz (Hz), that is to say, the VCU can refresh the power prediction every 2-3 meters that the vehicle runs.

Various ADAS e-maps that have been commercially available in batches all over the world can be basically used as the 3D map of the present disclosure to provide an Electronic Horizon for vehicles. The Electronic Horizon refers to the road information, especially the 3D information of longitude, latitude and longitudinal slope of the highways along the way, contained in the 3D map within the specified range in front of the heading of the vehicle. The predictive control is implemented for the traditional heavy duty diesel trucks, and only the electronic horizon within about 10 km can be used effectively because it is limited by the fact that the traditional heavy duty diesel trucks are not suitable for quick and continuous transformation of the working conditions of the engine and frequent gear shifting of transmissions and have no regenerative braking energy recovery function. However, the ACE heavy duty trucks of the present disclosure can effectively utilize various ranges of electronic horizons ranging from 10 km to 1,000 km. Refer to the following for details.

For the ACE heavy duty truck running on highways with active braking or acceleration seldom performed, its speed is basically constant, and the time variation of vehicle road load power is mainly originated from the longitudinal slope power change brought about by the longitudinal slope change of the highways. However, since both the vehicle running path and the distribution function of the longitudinal slope along the highway are fixed and known in advance, the VCU of ACE heavy duty truck can calculate the time-varying function of vehicle road load power within the electronic horizon in real time and effectively predict the change of demand for vehicle road load power in the future according to the vehicle kinetic equation (1-1), vehicle configuration parameters, driving data, electronic horizon and actual road conditions. The fuel saving robot system of ACE heavy duty truck of the present disclosure can transform the problem of fuel saving of heavy duty trucks for long haul logistics into the equivalent artificial intelligence (AI) problem of AlphaGo. The AI brains of cloud and vehicle-end fuel saving robots can be trained using the dedicated structured big data generated by operation of many ACE heavy duty trucks combined with various machine learning algorithms and cloud computing power, and the fuel saving robot of the heavy duty truck can achieve the minimum fuel consumption much more consistently than human drivers. The details will be described later.

According to the predictive power control system for the ACE heavy duty trucks presented by the present disclosure, an electrical power split device (ePSD) is commanded through a vehicle control unit (VCU), and the amplitude and flow direction of 100-kilowatt level electrical power can be accurately and continuously allocated among four electromechanical power sources (engine, generator, battery pack and driving motor) within tens of milliseconds of system response time so that the engine condition is stably set to its efficient range for a long time through pulse-code modulation (PCM) of the transient output power of the engine, making the battery pack smoothly switch between the three operating modes of Charge Sustaining (CS), Charge Depleting (CD) and Charge Increasing (CI); and the hundreds of kilowatt level transient change of the longitudinal slope power item within the sub-second time is offset through 100-kilowatt level high-rate charging and discharging of the battery pack in real time as well as peak-load shifting of the transient road load power, and the road load power required by a vehicle dynamic equation (1-1) is provided at any time. Compared with traditional heavy duty diesel vehicles, the overall fuel consumption for actual operation of the ACE heavy duty truck can be decreased by 30% on the premise of ensuring the power, freight timeliness and active safety of the vehicle.

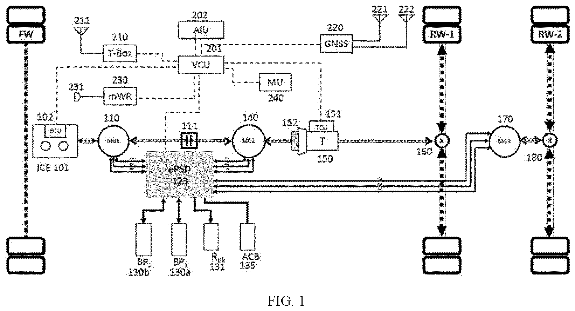

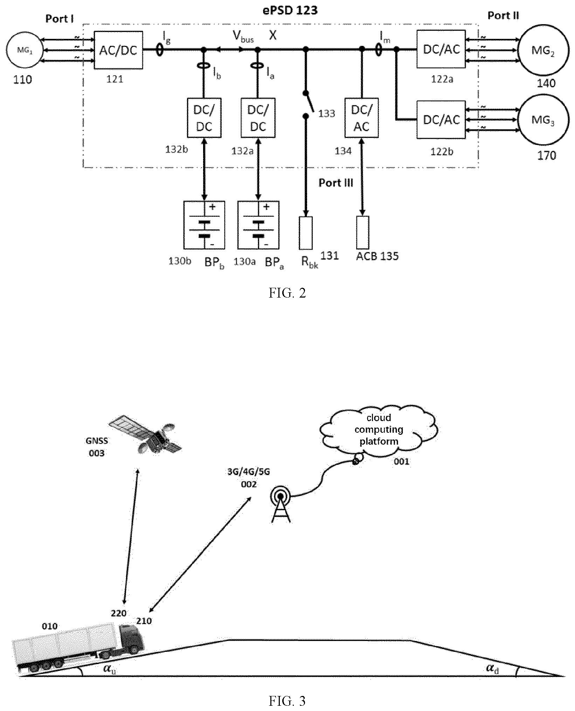

The ACE heavy duty truck of the present disclosure is of a double-motor and single-clutch mixed hybrid system architecture, as shown in subsequent Figures 1 and 2. The ACE heavy duty truck can command the clutch to be disengaged or engaged through the vehicle control unit (VCU) to realize the series hybrid mode and parallel hybrid mode separately. Vehicles under urban conditions have low average speed (less than 45 km/h) and frequent active acceleration or deceleration, the working conditions of the engine and the working conditions of the vehicle road load can be decoupled completely by using the series hybrid mode, so that the engine is enabled to stably work at its high-efficiency point, there are also many opportunities for the driving motor to recover energy through regenerative braking, and series hybrid vehicles have a more obvious fuel saving effect (more than 30%) than that of the traditional fuel vehicles. Vehicles under high speed conditions have high average speed (more than 50 km/h) and infrequent active acceleration or deceleration, the engine can stably work at its high-efficiency point even if it is directly and mechanically coupled with the driving wheel, and the parallel hybrid mode is preferred at this time. From the perspectives of fuel saving and power performance, the parallel hybrid mode of vehicles directly driven by engines is better than the series hybrid mode under high speed conditions. The power-split hybrid system represented by Toyota Prius has both series hybrid and parallel hybrid functions and gives consideration to optimization of both power and fuel saving of the vehicle. It has been the international benchmark of hybrid power for passenger vehicles for twenty years. However, it is difficult for the planetary gear, the core component of the power-split hybrid system, to bear the simultaneous force application of the engine with the peak power of greater than 150 kW, generator and driving motor subject to the current metal materials and production processes, so it is difficult for the mechanical power-split hybrid system based on planetary gear to be extended to large commercial vehicles in a cost-effective way. Even Toyota has not applied its unique power-split hybrid powertrain technology with single planetary gear unit to large commercial vehicles.

The present disclosure provides a mixed hybrid powertrain architecture capable of time division switching of series or parallel hybrid mode, see subsequent Figure 1 and Figure 2; the mixed hybrid powertrain architecture comprises: a generator directly driven by the engine, used for converting chemical energy of vehicle fuel into electric energy (in the series hybrid mode) or directly driven vehicles (in the parallel hybrid mode); an electrical power split device (ePSD), configured as a power electronic network with three ports, wherein the first port of the ePSD is in bidirectional AC electric connection with the output end of the generator set; the second port of ePSD is in bidirectional AC electric connection with at least one driving motor (MG2); the third port of ePSD is in bidirectional electric connection with at least one power type battery pack; an automatic transmission, with an output shaft connected with a driving axle of the vehicle bidirectionally and mechanically; a map unit, storing a 3D map in advance, containing the 3D information of longitude, latitude and longitudinal slope of the road where the vehicle is running; at least one main driving motor (MG2), connected with the second port of ePSD bidirectionally and electrically, with the output shaft of the driving motor connected with the input shaft of the automatic transmission bidirectionally and mechanically through a flexible coupling, wherein the main driving motor (MG2) can be operated for converting the electric energy into the mechanical energy for driving the vehicle (driving mode), or converting the mechanical energy of the vehicle into the electric energy (regenerative braking mode), and charging the battery pack through the ePSD, wherein the output shaft at the flywheel end of the engine is bidirectionally and mechanically connected with the mechanical shaft of the generator (MG1), and the mechanical connection is either a single shaft with the same speed (coaxial) or parallel double shaft plus a gear reducer; the output shaft of the engine is also bidirectionally and mechanically connected with the main driving motor (MG2) through a clutch, and the mechanical connection is either a single shaft in a coaxial mode or parallel double shaft plus a gear reducer; the main driving motor is also bidirectionally and mechanically connected with the input shaft of the automatic transmission through a flexible coupling, and the output shaft of the transmission is mechanically connected with the driving axle of the vehicle; the vehicle further comprises: a vehicle control unit (VCU), and the vehicle control unit is used for controlling at least one of the engine, the generator, the clutch, the ePSD, the driving motor, the automatic transmission and the battery pack based on 3D map data in a vehicle-mounted Global Navigation Satellite System (GNSS) and/or the map unit (MU) independently.

The ACE heavy duty truck hybrid system architecture of the disclosure is a double-motor and single-clutch mixed hybrid system, this hybrid system controls the amplitude and flow direction of mechanical or electric power among the 100 kW level engine, generator, battery pack and driving motor dynamically through the 100 kW level large clutch combined with the electrical power split device (ePSD), switches between series hybrid mode and parallel hybrid mode by disengaging and engaging the clutch, effectively integrates the respective advantages of series hybrid and parallel hybrid system architectures, overcomes their original disadvantages, and optimizes the power and fuel saving performance of the vehicle, and the comprehensive cost effectiveness of the hybrid system is higher than that of an extended-range series hybrid or parallel hybrid system. The generator (MG1) is configured in the hybrid position P1 (behind the flywheel of the engine and in front of the clutch), the main driving motor (Mg2) is configured in the hybrid position P2 (behind the clutch and in front of the transmission), and the optional auxiliary driving motor (GM3) is configured in either position P3 (behind the transmission, in front of the transmission shaft) or P4 (behind the transmission shaft, at the wheel side).

The ACE heavy duty truck of a mixed hybrid architecture realizes the all-digital software defined powertrain with ePSD as the core. During the hardware design of ePSD three-port power electronic network, a margin shall be reserved for the function and performance, the plasticity of the product in a later stage is increased, and the product is continuously upgraded and evolved through the software remote update iteration (OTA) of each ACE heavy duty truck throughout its full operation life cycle. Relying on continuous software remote update (OTA), the actual performance of the powertrain of each ACE heavy duty truck is corrected continuously in a tailored manner based on big data plus artificial intelligence of cloud-vehicle interaction, that is, ensure that each ACE heavy duty truck can not only meet the emission regulation limits (RDE) at all times and places, but also realize the optimization of the fuel saving effect of the heavy duty truck and intelligent operation and maintenance (M&R) within the 700,000 km warranty period required by the emission regulations.

The ePSD can be configured as a three-port power electronic network which contains three 100 kW level unique functional modules: the first port is internally connected with a bidirectional AC-DC converter (also known as an inverter), the second port is internally connected with at least one bidirectional AC-DC converter (also known as an inverter), and the third port is internally connected with at least one bidirectional Boost-Buck DC-DC converter (also known as a chopper). The present disclosure focuses on the main peripheral input/output characteristics of the ACE heavy duty truck ePSD and contains three functional modules. The collection of various topological structures of power electronic circuits realizing the above three functional modules belong to the scope of the present disclosure. The physical packaging form of ePSD is that the above three functional modules are either packaged in a metal box in a centralized way, or separately packaged and arranged with the generator (MG1), the main driving motor (MG2) and the battery pack in a decentralized way.

The above hybrid powertrain of the ACE heavy duty truck realizes two unique system architectures or working modes: series hybrid (clutch disengaged) and parallel hybrid (clutch engaged) respectively by controlling the on-off state of the clutch, and many different operation modes can also be further divided under each system architecture. The vehicle controller (VCU) commands the electromechanical Clutch-by-wire by electric control (rather than mechanically) to switch between series and parallel hybrid modes accurately and smoothly. The two architectures are separately described below. To optimize both fuel saving and power of the vehicle, the parallel hybrid mode is preferred under high speed conditions (smooth highway, at the speed of above 50 km/h, infrequent active acceleration or braking) or any conditions (at any speed, slowdown function is required) with long-distance downslope (the absolute value of longitudinal slope on the way is greater than 2.0 degrees, the slope length is greater than 10 km); and the series hybrid mode is preferred under urban conditions (at the speed of below 40 km/h, with frequent active acceleration or braking).

Firstly, under the series hybrid mode, the clutch is disengaged, there is only an electric power flow circuit rather than mechanical power flow circuit from the engine to the driving wheel, all the DC ports of the three functional modules inside the ePSD are connected to the DC bus junction X bidirectionally and electrically, the product of the DC voltage and current time-varying function at this junction is the time-varying function of the electric power of the corresponding energy conversion device, and these power items satisfy the following three equations in real time:

$$P_V = {}_{dt} P_{MG2} \qquad\qquad (2\text{-}1)$$

$$P_{BAT} + P_{MG1} + P_{MG2} = 0 \qquad\qquad (2\text{-}2)$$

$$P_{ICE} = -P_{MG1}/{}_g \qquad\qquad (2\text{-}3)$$

All the above power items are 100 kW level time-varying functions, and it is assumed that the energy conversion factor for a round trip of the generator (MG1), battery pack and driving motor (GM2) may be almost equal to 1.0. Those of ordinary skill in the art are able to easily deduce the corresponding formula when the conversion coefficient is less than 1.0.

Where,

$P_{MG1} > 0$, the driving power of the generator (MG1) (the load is the non-combustion idle speed or non-combustion brake of the engine, and the electric energy is converted into mechanical energy); $P_{MG1} < 0$, the generated power (power generation directly driven by the engine, mechanical energy is converted into electrical energy);

$P_{MG2} > 0$, the driving power (electric energy is converted into mechanical energy) of the main driving motor (MG2); $P_{MG2} < 0$, the regenerative braking power (mechanical energy is converted into electric energy), the battery pack is charged and energy is recovered;

$P_{BAT} > 0$, the total charging power of all battery packs (electric energy is converted into chemical energy); $P_{BAT} < 0$, the total discharge power (chemical energy is converted into electric energy);

$P_{ICE} > 0$, the net output power of the engine (chemical energy is converted into mechanical energy); $P_{ICE} < 0$, the equivalent load power of start-stop drag or in-cylinder braking when there is no fuel injection in the engine;

Preferred power configuration principle of four energy conversion devices: $P_{ICE-p} >= P_{MG2-m} >= P_{MG1-M}$; $P_{BAT-m} > P_{MG2-m}$. Where $P_{ICE-p}$ is the peak power (maximum continuous power) of the engine, $P_{MG1-m}$, $P_{MG2-m}$ and $P_{BAT-m}$ are the power ratings (i.e., maximum continuous power) of the generator, driving motor and battery pack, respectively. The difference between the motor and the engine is that the motor can withstand short time overload, and its pulse peak power (minute level) is usually more than 25% higher than the rated power; the pulse peak power (10 or 15 seconds) of the battery pack can be nearly 100% higher than its rated power. The system peak power (i.e., maximum continuous driving power) of the powertrain is completely determined by the $P_{MG2-m}$ of the standard main driving motor under the series hybrid mode. An optional auxiliary driving motor (MG3) may be considered in order to improve the power, fuel saving and safety of the vehicle. MG3 is arranged in the hybrid position P3 (between the transmission output shaft and the first driving axle or the input shaft of the second driving axle). Of course, the addition of a third motor will not only improve the vehicle power performance, but also increase the system cost.

Under the series hybrid mode, PMG2 is an independent variable, which is directly proportional to the road load power $P_v$ of the vehicle, $\eta dt$ is the drive train efficiency (a positive number less than 1.0). $P_{MG1}$ is another independent variable, which is directly proportional to the net output power $P_{ICE}$ of the engine, and $\eta_g$ is the engine efficiency (a positive number less than 1.0). The engine (ICE) and the generator (MG1) can be actively set to operate at the high-efficiency operating points of specific speed and torque to ensure the highest combustion thermal efficiency of the engine and optimized exhaust emission at this moment; under the unified command of the vehicle control unit (VCU), the three power electronics function modules inside the ePSD and related subsystems such as engine, generator, driving motor, automatic transmission and battery pack dynamically adjust the independent variable $P_{BAT}$ and perform peak load shifting on the transient road load power according to the power control strategy of the whole vehicle to meet the vehicle dynamics equation (1-1) in real time and achieve the optimal fuel saving effect on the premise of ensuring the power performance and freight timeliness of the vehicle.

The preferred range of rated voltage $V_{bus0}$ of ePSD internal DC bus is between 600V and 800V. The third port of the ePSD can be connected to at least one power type battery pack bidirectionally and electrically, the rated voltage of each battery pack $V_{bat} < V_{bus0}$, and the third port can also be connected with a 100 kW brake resistor $R_{bk}$ equipped with a radiator unidirectionally and electrically as the effective electrical load for the driving motor to realize the retarder function through regenerative braking power generation when the ACE heavy duty truck runs on a long-downhill path and the battery pack is fully charged (SOC is nearly 100%).

In some embodiments, the port III of ePSD can be connected with multiple battery packs with different rated voltages or even cells with different electrochemical components bidirectionally and electrically, which brings multiple benefits to optimize the cost effectiveness of ACE heavy duty truck system. The battery pack of the ACE heavy duty truck is a Peak Power Source with ultra long cycle life and sustainable high-rate (greater than 3C) charge and discharge at both high and low temperatures. Its main function is to provide 100 kW "peak load shifting" transient electric power, superimposed with the steady-state average electric power supplied by the generator set to ensure that the driving motor can provide the required vehicle road load power in real time and satisfy the vehicle dynamics equation (1-1). The capacity of this power type battery pack is generally within 100 kWh. This will be described in detail later.

The battery pack capacity of the hybrid heavy duty truck is generally only dozens of kWh. If the heavy duty truck under the series hybrid mode encounters the extreme case of climbing a mountain (with the longitudinal slope of greater than 2.0 degrees) continuously for dozens of kilometers, it is likely that the battery pack charge is exhausted before the vehicle reaches the summit of the mountain, and the gradeability of the vehicle will depend on the maximum continuous power of the generator set at this moment. To maintain the same power performance as the traditional heavy duty truck with engine in the extreme case of climbing a mountain, the series hybrid heavy duty truck should be equipped with the generator (MG1), driving motor (MG2) and inverter as options with power ratings equal to the maximum power of the engine. At present, the peak powers (the maximum continuous power of the engine) of engines (displacement 11 L~15 L) of all mainstream heavy duty trucks for long haul logistics exceed 350 kW, and the peak power of a top-level 15L engine can be up to 450 kW. However, although the onboard large generator or driving motor and inverter with the rated power (refers to the maximum continuous power of the motor) of more than 350 kW have been industrialized, they are still very expensive because they cannot be used with new energy passenger vehicles with greater consumption. The cost of a vehicle gauge level motor with the rated power of 350 kW is significantly higher than the total cost of two motors with the rated power of 175 kW. The cost of such high-power and high-configuration pure series hybrid systems will be high for a long time and difficult to fall, and the overall cost performance is unsatisfactory. When the ACE heavy duty truck is going uphill or climbing a large upslope, the series hybrid mode is a second-best choice.

Secondly, under the parallel hybrid mode, the clutch is closed and locked. From the engine to the driving wheel, both the mechanical power flow circuit and the electric power flow circuit are closed-loop, allowing joint force application. All the DC ports of the three functional modules inside the ePSD are connected to the DC bus junction X bidirectionally and electrically, the product of the DC voltage and current time-varying function at this junction is the time-varying function of the electric power of the corresponding energy conversion device, and these power items satisfy the following two equations at all times:

$$P_V = {}_{dt}\left(P_{ICE} + P_{MG1} + P_{MG2}\right) \qquad (3\text{-}1)$$

$$P_{BAT} + P_{MG1} + P_{MG2} = 0 \qquad (3\text{-}2)$$

There is a direct mechanical connection between the engine and the driving axle under the parallel hybrid mode. The road load power $P_V$ is an independent variable, which is directly proportional to the product of the speed and torque of the vehicle transmission shaft. In other words, when the vehicle is running normally (no tire slip detected), its tire speed is an independent variable. At this time, the speed of the engine is a dependent variable directly proportional to the tire speed, and its torque may be an independent variable within a certain range to be set independently according to the control strategy. From the perspective of fuel saving, the series hybrid mode is preferred under urban conditions (the average speed is less than 40 km/h, with frequent active acceleration and braking); while the parallel hybrid mode is preferred under high speed conditions (the average speed is greater than 50 km/h, with infrequent active acceleration and braking).

More than 90% of the engines of heavy duty trucks are diesel engines. The high efficiency range of the diesel engine of the heavy duty truck is generally in the speed range of 1,100-1,800 revolutions per minute (rpm), and the torque is within the maximum torque range of 50%~85%. The specific fuel consumption (gram/kilowatt hours; g/KWh) of the engine beyond the high efficiency range will significantly rise. Fuel consumption reduction through engine Down speed or Down size is a trend of the heavy duty truck industry in Europe and America in recent ten year, but these two measures contradict the improvement of vehicle power performance. Fortunately, two 100 kW level generators and driving motors can apply force together with the engine under the parallel hybrid mode, and at this time, the power performance of the mixed hybrid heavy duty truck is much better than that of the traditional heavy duty truck with engine or the pure series hybrid heavy duty truck.

When the mixed hybrid ACE heavy duty truck for long haul logistics encounters a limit road condition of climbing a mountain continuously for dozens of kilometers, the clutch may be engaged in advance to switch to the parallel hybrid mode according to the onboard 3D map and vehicle positioning when the vehicle gets to the bottom of the mountain, then the vehicle is directly driven by the engine, thus eliminating multiple energy conversion from the engine to the driving wheel and improving the driving efficiency. If the battery pack charge is exhausted before the mixed hybrid heavy duty truck reaches the summit, both the generator and the driving motor can be configured as no-load idling, and at this time, the power performance of the vehicle only depends on the peak power (greater than 350 kW) of the engine. Under the mixed hybrid architecture of the present disclosure, the configuration condition for peak power parameter is: $P_{ICE-p} > P_{MG2-m} > P_{MG1-m}$, with $P_{ICE-p} > 300$ KW, $P_{MG2-m} < 300$ KW and $P_{MG1-m} < 250$ KW as options. The cost of the motor and inverter can be significantly reduced at the motor rated power of less than 200 kW. In addition to the extreme case of climbing a mountain, the ACE heavy duty truck enables the batter pack to operate in a Charge-Sustaining (CS) mode for a long time on flat and hilly lands. The state of charge (SOC) of the battery pack is maintained within a reasonable range (e.g., 30% - 80%) through the intelligent power switching (iPS) of the transient output power of the engine combined with electronic horizon prior information. At this time, the engine and dual motors (MG1, MG2) can jointly apply force and drive the vehicle, and the minute-level maximum total driving power of the parallel hybrid powertrain can be up to more than 500 kW. The power performance and fuel saving of the mixed hybrid heavy duty truck are significantly better than those of both the traditional heavy duty truck with engine and the series hybrid heavy duty truck with high configuration.

All the accumulated effective work applied by the ACE heavy duty truck to complete the whole freight event directly or indirectly comes from the time integration of transient output power of the engine, i.e., accumulated mechanical energy. One of the keys to the fuel saving strategy of the ACE heavy duty truck is to keep the engine running stably for a long time in the high efficiency range of its universal characteristic curve to the greatest extent and minimize the engine running outside its high efficiency range, especially long-time idling. Stop start (SS) and cylinder deactivation (CDA), which are the existing energy-saving and emission reduction technologies currently well known to people in the global automotive industry, have been widely applied in the passenger vehicle industry. However, the disadvantages and limitations of usage of the two technologies are also well known in the industry.

The heavy duty trucks for long haul logistics do not often encounter traffic lights, and the vehicle stop start frequency is very low; the problem of noise vibration harshness (NVH) caused by the stop start switching of the engine of the heavy duty truck is prominent; when the engine stops running, various mechanical auxiliary subsystems (such as cooling fan, water pump, fuel pump, air pump, power steering pump, A/C compressor and the like) of the vehicle cannot obtain mechanical energy directly from the engine to maintain the normal operation; frequent stop start of the engine can shorten the life of the engine, starting motor, clutch, lead-acid battery and other subsystems; little improvement effect of energy saving and emission reduction has been achieved; therefore, the traditional engine stop start technology is not applicable to the heavy duty trucks for long haul logistics, and the engine stop start technology of the heavy duty trucks has basically not been commercialized on a global scale. When the heavy duty truck for long haul logistics runs normally, the engine stably works in its high-efficiency range for most of the time and works under its low-speed and low-load conditions for little time. Although the engine still operates at idle speed or low speed under low load when the road is congested or the heavy duty truck is waiting for trailer handling, the percentage of time is very small. If the engine of the heavy duty truck for long haul logistics uses the cylinder deactivation (CDA) technology, a set of complex variable valve actuation (VVA) devices are to be added. By dynamically cutting off the fuel injection of some cylinders of the engine (for example, 6 cylinders are changed to 3 cylinders) and normally closing all inlet/exhaust valves of these non-combustion cylinders during a full cycle of four strokes, the actual load factor of the remaining working cylinders is increased. The primary purpose is to raise the engine exhaust temperature, so that various catalysts inside the After-treatment System operate in their high efficiency range (250°C to 500°C), and vehicle pollutant emissions are reduced; the secondary purpose is actually to save fuel by adjusting the actual operating point of the working cylinder to the high efficiency range. The engine cylinder deactivation (CDA) technology significantly increases the structural complexity and cost of the engine. For heavy duty trucks for long haul logistics, however, the effect of overall energy saving and emission reduction is limited, and the cost effectiveness is not high. At present, the engine cylinder deactivation technology for heavy duty trucks has not been put into commercial use in bulk in the market of heavy duty trucks for long haul logistics worldwide.

The mechanical driving power circuit and electric driving power circuit of the ACE heavy duty truck can work independently or cooperatively to meet the vehicle dynamics equation (1-1) in real time. In addition, the vehicle can also be maintained in a running state at full load and high speed for several minutes even if the engine is in a non-combustion state and does not do positive work and the battery pack independently supplies power to the driving motor. For the time-varying function of engine output power, the running process of the ACE heavy duty truck is a high-inertia time-varying system with minute-level buffer time. Diversified digital control strategies of pulse-code modulation (PCM) (for example, pulse-width modulation (PWM) or pulse-amplitude modulation (PAM)) can be used for the transient output power of the engine of the ACE heavy duty truck based on an impulse equivalence principle. These strategies guarantee that the engine operates in the high efficiency range stably for a long time, and the battery pack can be commanded by the electrical power split device (ePSD) to supply power to the driving motor, perform peak load shifting on the road load power, and meet the vehicle dynamics equation (1-1) in real time; in addition, these strategies can pave the way for automatically optimizing the energy management of ACE heavy duty trucks by making full use of all kinds of digital signal processing technology, digital control technology, big data technology and machine learning technology. As an analogy for the upgrading and update of the telephone or television industry from an analog communication system to a digital communication system, the present disclosure upgrades the control strategy of the engine output power of the ACE heavy duty truck from the analog electronic control in the prior art to the pure digital electronic control based on pulse-width modulation (PWM) or pulse-amplitude modulation (PAM), and provides cost-effective technical basis, devices and methods for automatically optimizing the energy saving and emission reduction of the heavy duty trucks for long haul logistics by making full use of various emerging artificial intelligence, big data and cloud computing (ABC) technologies. The present disclosure illustrates two novel engine digital control technologies (Intelligent Stop Start (iSS) and Intelligent Power Switch (iPS)) that can not only overcome the original disadvantages of the existing engine stop start (SS) technology and cylinder deactivation (CDA) technology described above, but also retain their original advantages and optimize the energy saving and emission reduction of the ACE heavy duty truck.

The Intelligent Stop Start (iSS) is firstly described. The ACE heavy duty truck runs under the series hybrid mode (with the clutch disengaged), and its engine can stably operate at a special zero-emission operating point without fuel consumption: Non-Combustion Idle (NCI). The detailed implementing method is as follows: the VCU commands the engine to cut off the fuel injection of all the cylinders (Fuel Cutoff) while commanding the generator (MG1) to obtain electric energy from the power battery pack in the driving mode, and the non-combustion engine of the heavy duty truck is dragged to stably run at the specified idle point (a value within the range of 450 rpm to 750 rpm) to ensure all the auxiliary subsystems on the vehicle that must obtain mechanical energy directly from the engine can work normally. At this time, the engine acts as a one-input multiple-output transmission, transmits the 10 kW mechanical power that is output by the generator in the driving mode to each auxiliary subsystem of the vehicle, and enables these auxiliary subsystems to operate normally. Obviously, the engine has no fuel consumption with zero emission at the non-combustion idle operating point, but the power will be consumed.

For a basic engine without the variable valve actuation (VVA) function, the suction stroke and exhaust stroke will generate Pumping Loss within a full cycle of four strokes at the non-combustion idle point, the compression stroke and power stroke get benefit from one contraction and one extension of the in-cylinder air spring, and there is basically no Pumping Loss. The engine at the non-combustion idle point acts as a mechanical load with only 10 kW level power consumption, the generator with a 100 kW level rated power easily enables the reversing drag of engine operation, and the electricity consumption within a minute-level time is limit. For an advanced engine with the variable valve actuation (VVA) function, the inlet/exhaust valves of all the cylinders can be controlled to be normally opened or normally closed within a full cycle of four strokes, so that the pumping loss is substantially reduced, and the driving power consumption of the generator during non-combustion idling of the engine is further reduced.

In the series hybrid mode, the engine and the driving wheel of the vehicle are completely and mechanically decoupled, and the operating points (speed and torque) of the engine can be arbitrarily set. When the ACE heavy duty truck runs in the series hybrid mode, the engine can stably operate at the non-combustion idle point or optimal operating point in different time. When the engine operates stably at the non-combustion point, i.e., no fuel consumption and zero emission, the battery pack works in the Charge Depleting (CD) mode to supply power to the generator and driving motor in the driving mode; at the optimal operating point (near the engine base speed, the speed is about 1200 rpm, the high load rate is 80%~90%), the engine drives the generator to generate power with the maximum thermal efficiency and the minimum specific fuel consumption (g/kWh); in addition, the high temperature at the exhaust gas outlet is advantageous for the after-treatment system to operate stably and efficiently, the pollutant emission is minimized, the system life is prolonged, and the battery pack is working in the Charge-Sustaining (CS) mode or Charge Increasing (CI) mode at this time.

The Intelligent Stop Start (iSS) technology means that the vehicle control unit (VCU) commands the engine to stably operate at one of the "non-combustion idle point" and the "optimal operating point" and repeatedly and smoothly switch between the two points according to the configuration parameters, dynamic driving data, electronic horizon 3D road information and machine learning (AI) algorithm for energy saving and emission reduction; the time function of engine transient output power is controlled by the pulse-width modulation (PWM) method with settable minute-level pulse sequence cycle and dynamically and continuously adjustable duty cycle (0.0-1.0) to slowly and continuously adjust the minute-level average output mechanical power of the engine; the generator set (engine + generator) and the battery pack jointly supply power to the driving motor for pure electric driving to meet the vehicle dynamics equation in real time and realize energy saving and emission reduction on the premise of ensuring the power performance and safety of vehicle driving. The preferred switching mode is that the generator smoothly increases the speed of the non-combustion engine from the idle point to the optimal operating point in the driving mode, then the engine starts fuel injection and combustion to do work and stably operates at its high efficiency operating point; during reverse switching, the engine firstly cuts off the fuel injection at the optimal operating point and enters the non-combustion passive state, then the generator drags the engine to reduce the speed to the non-combustion idle point before the engine works stably. The series hybrid ACE heavy duty truck is electrically driven, its transient power performance is not affected by the dynamic switching of the engine operating points at all, and the transition time of the switching of the engine operating points is at the second level. For the ACE heavy duty truck, the engine operating in a non-combustion mode is the mechanical load of the generator in the driving mode, while the generator in the power generation mode is the mechanical load of the engine operating normally (during combustion to do work).

Essentially, the Intelligent Stop Start (iSS) technology extremely simplifies the actual operation area of the engine of the ACE heavy duty truck in the series hybrid mode to a single optimal operating point (fixed speed and torque, minimum specific fuel consumption). The average output mechanical power of the engine and the average output electric power of the generator are dynamically and continuously regulated by performing the pulse-width modulation (PWM) control on the constant output mechanical power generated by engine operation at this optimal operating point. With the battery pack as an electric energy buffer, the generator set (engine + generator) and the battery pack jointly supply power to ensure that the driving motor can meet the vehicle road load power requirement in real time. The vehicle energy management is optimized to realize energy saving and emission reduction on the premise of ensuring the driving power performance of the ACE heavy duty truck. The most concise and effective PWM control strategy is as follows: the non-combustion idle point and the optimal operating point are fixed once selected, and a continuous and adjustable average electric power of the generator set is realized by dynamically adjusting the duty cycle (the ratio of the run time at the optimal operating point to the pulse sequence cycle; any value between 0.0 and 1.0 can be taken) of PWM. Of course, the Intelligent Stop Start (iSS) function can also be expanded to other technical solutions for repeated switching between the non-combustion idle point of the engine and two or more high efficiency condition points, but the overall cost effectiveness of these iSS technical solutions with multiple operating points is not as good as that of the above ISS technical solution with two operating points.

The Intelligent Stop Start (iSS) technology is applicable not only to the basic engine without the variable valve actuation (VVA) function and with a fixed geometry turbocharger (FGT), but also to the advanced engine with the variable valve actuation (VVA) function and a variable geometry turbocharger (VGT). Although the two engines have obvious differences in the universal characteristic curve and price, the ACE heavy duty truck equipped with the basic engine can achieve the same vehicle power performance, energy saving and emission reduction effect compared with vehicles equipped with advanced engines under various operating conditions and application scenarios with the help of the Intelligent Stop Start (iSS) technology for the ACE heavy duty truck. In other words, the ACE heavy duty truck greatly reduces the stringent requirements for the technical sophistication and global performance of the engine compared with the traditional diesel heavy duty truck, so that the engine is no longer the most critical factor in the power performance of the complete vehicle. The new China VI ACE heavy duty truck can still optimize both the vehicle power performance and fuel economy reliably in the future on the premise of ensuring that the RDE emission meets the standard within extremely challenging 700,000 km for the heavy duty truck even the new China VI ACE heavy duty truck is configured with a low-cost basic engine. The output power value corresponding to the optimal operating point (i.e., the minimum specific fuel consumption point) of most engines is between 50% and 70% of the peak power. The specific fuel consumption (g/kWh) of the engine at full load or light load is not the minimum. In the universal characteristic curves of most heavy duty truck engines, the contours of specific fuel consumption (g/kWh) are a plurality of mutually non-intersecting irregular loop curves. The area contained in the global minimum contour of specific fuel consumption is called the optimal operating condition area, commonly known as the "Sweet Spot" of the engine, in which every point is the optimal operating condition point (specific speed and torque). The area contained in the contour with a specific fuel consumption equal to 103% of the minimum value can be called the high efficiency operating condition range (referred to as the high efficiency range). Of course, the area of the high-efficiency range is larger than and completely includes the Sweet Spot. The speed corresponding to the Sweet Spot of most heavy duty truck engines is in the range of 95% to 115% of its base speed (referring to the speed at the peak torque point), and the corresponding torque is between 60% and 80% of its peak torque. The area of the high efficiency range of the modern heavy duty truck engine (diesel or natural gas) Base Model is small, while the area of the high efficiency range of the Advanced Model is large. The minimum specific fuel consumption of both engines at the Sweet Spot is up to 186 g/kWh. In order to continuously reduce the fuel consumption (L/100 km), the general trend of heavy duty truck engine research and development in Europe and America in recent ten years is Down Size or Downspeeding. The base speed of the engine (i.e., speed at the peak torque point) decreases from 1200 rpm to below 1100 rpm year by year, and even approaches 1000 rpm.

Then the intelligent power switching (iPS) is described. The Intelligent Stop Start (iSS) technology cannot be used when the speed of the ACE heavy duty truck in the parallel hybrid mode (with the clutch disengaged) is completely determined by the transmission position and vehicle speed and varies with time because the vehicle is directly driven by the engine. Operation in a parallel hybrid mode is preferred when the ACE heavy duty truck is running normally on a highway (the average running speed is higher than 50 km/h). The average road load power of the ACE heavy duty truck is greater than 40% of the engine peak power in road sections without long slopes, the load is the medium-to-high load, the transient speed of the vehicle changes slowly with time in a narrow speed band, the change rate is generally less than 10%, so the change rate of the engine speed of the vehicle is also less than 10%. At this time, the transient output torque of the engine is still independently adjustable. The automatic gear shifting control strategy of the ACE heavy duty truck transmission enables the engine to run stably in a narrow range (high efficiency range) near the base speed (i.e., the speed at the peak torque point). At this time, both the speed of the generator (GM1) and the speed of the driving motor (GM2) are proportional to the speed of the engine, and the transient torques of the two motors are still independently adjustable. In the parallel hybrid mode, the transient road load power of the ACE heavy duty truck is equal to the sum of the output mechanical power (direct drive) of the engine and the driving electric power of the generator and driving motor. The transient output power of the engine can be controlled through pulse-code modulation (PCM). Several discrete values are taken, the generator or driving motor completes peak load shifting on the vehicle driving power, so that the transient road load power of the vehicle meets the vehicle dynamics equation (1-1) in real time.

In the parallel hybrid mode, the pulse-code modulation (PCM) is performed on the transient output power of the ACE heavy duty truck engine to realize the "intelligent power switching" (iPS) control function. The specific technical measures are as follows: one method is to perform the pulse-amplitude modulation (the abbreviated form is PAM) on the output power of the engine. The cycle of the pulse sequence is at the minute level, and the amplitude is arbitrarily adjustable between 30% and 90% of the peak power of the engine. The vehicle control unit (VCU) can command the engine control module (ECM) in real time to dynamically modulate the transient torque time function of the engine according to the inverse ratio of the engine speed time function, so that the product of the transient speed and torque of the engine (i.e., transient power) is a constant within one pulse cycle, and different constant values can be taken in different cycles. PAM is equivalent to commanding the engine to run smoothly or switch back and forth on one of many constant power curves in the high efficiency range of its universal characteristic curve, generating the engine output power pulse sequence and providing most of the minute-level time average power required to drive the vehicle, then the battery pack supplies power to the generator or driving motor to complete peak load shifting on the driving power, so that the transient road load power of the vehicle meets the vehicle dynamics equation (1-1) in real time. Another method is to perform pulse-width modulation (PWM) on the output power of the engine. The cycle of the pulse sequence is at the minute level. The low amplitude value can be set to 30% of the peak power of the engine, the high amplitude value can be set to 85% of the peak power, and the duty cycle is arbitrarily adjustable between 0 and 1. Finally, the minute-level time average output power of the engine is arbitrarily adjustable between the low amplitude value and the high amplitude value. The vehicle control unit (VCU) can command the engine control module (ECM) in real time to dynamically modulate the transient torque time function of the engine according to the inverse ratio of the engine speed time function, so that the product of the transient speed and torque of the engine (i.e., engine output power) is a constant within one pulse cycle, and one of the two values (high or low value) is selected as the specific value. According to the above PWM solution, the engine is commanded to run smoothly on the high constant power curve or low constant power curve within the high efficiency range of its universal characteristic curve or to smoothly switch back and forth between a high constant power curve and a low constant power curve to provide most of the minute-level average power required to drive the vehicle, then the battery pack supplies power to the generator or driving motor to complete peak load shifting on the driving power, so that the time-varying function (equal to the sum of transient mechanical power of the engine and the transient electric power of double motors) of the transient road load power of the vehicle meets the vehicle dynamics equation (1-1) in real time. Whether it is the PAM solution or the PWM solution, the engine can smoothly switch from the vertical direction (constant speed) or horizontal direction (constant torque) of one constant power curve to another by dynamically changing the torque or speed without being affected by the gear shifting of the transmission. In the parallel hybrid mode of the ACE heavy duty truck, the engine speed is a dependent variable function with second-level slight variations in a specific transmission position, while the torque is an independent variable function with 100 millisecond level great variations. If sudden gear shifting, especially shift down, is required during the operation of the parallel hybrid ACE heavy duty truck, the clutch is firstly disengaged temporarily. At this time, the generator generates electricity as an effective mechanical load of the engine, and the engine speed can be steadily increased in a second-level period of time. The clutch is not engaged until synchronized with the new transmission position, which is equivalent to smoothly switching from the horizontal direction (constant torque) of one constant power curve to another constant power curve. Because the driving motor can provide the ACE heavy duty truck with full electric driving power within a minute-level period of time, the adjustment speed of motor torque or speed is nearly ten times higher than that of the engine, there will be no obvious interruption of driving torque during gear shifting of the ACE heavy duty truck, and the sense of frustration during gear shifting of the traditional heavy duty truck transmission is basically eliminated.

The parallel hybrid mode is preferred when the ACE heavy duty truck is running normally on the highway (the average speed is higher than 50 km/h). The engine speed can always be adjusted to its high efficiency range (preferably at the Sweet Spot) by controlling the transmission position, and the engine output power is dynamically adjusted by controlling the transient torque of the engine. The output power of the engine in the parallel hybrid mode is mainly used to directly drive the vehicle. The generator and the driving motor can work in the same mode while being equivalent to a motor with higher peak torque and power, or they can obtain electric energy from the battery pack to drive the vehicle, or charge the battery pack and recover energy through regenerative braking. The gear shifting frequency of the heavy duty truck during normal driving on a highway mainly depends on the longitudinal slope function of the road and the peak power or torque of vehicle driving. The larger the engine is and the sufficient the torque or power margin is, the lower the gear shifting frequency is. In the parallel hybrid mode of the ACE heavy duty truck, the vehicle driving torques or powers of the engine, generator and driving motor can be superimposed, and the total driving torque or power of the engine, generator and driving motor is significantly greater than the driving torque or power of the 16L heavy duty truck with top level configuration currently on the market. Therefore, the gear shifting frequency of the ACE heavy duty truck during parallel hybrid operation is significantly lower than that of all traditional heavy duty trucks with internal combustion engine. Under some special road conditions, the generator and driving motor can also work in the opposite modes, one is the power generation mode and the other is the driving mode. Of course, the Intelligent Power Switching (iPS) function can also be realized through other technical measures, such as constant torque pulse-amplitude modulation of engine output power (pulse-amplitude modulation (PAM) of non-rectangular pulse sequence of substantial output power) or pulse-width modulation (PWM, pulse width modulation of non rectangular pulse sequence in essence) of dual constant torque of output power. Ordinary technicians in the industry can draw inferences from one instance without creativity and think of a variety of equivalent technical solutions or measures of pulse-code modulation (PCM) of engine output power with the help of mature digital communication or signal processing technology. However, the overall cost effectiveness of these technical solutions or measures is not as good as that of the above technical solutions of PWM or PAM of constant power (rectangular pulse). According to the basic model PWM technical solution, the high value and low value of pulse sequence amplitude of engine output power remain unchanged during operation of the vehicle on that day once set; according to the advanced model PWM technical solution, the high value and low value of pulse sequence amplitude of engine output power remain unchanged within at least 10 pulse cycles once set. However, the ACE heavy duty truck can also calculate and predict the road load power time function and time average road load power of the vehicle on the highway during non-congested hours in a period of more than one hour in real time according to the three-dimensional information (including longitude/latitude/longitudinal slope) of the road within the range of hundreds of kilometers of the electronic horizon, vehicle configuration parameters and operating data, and the predictive adaptive cruise (PAC) mode selected by the driver, and flexibly adjust the high and low values of the pulse sequence amplitude of PWM in order to achieve the optimal effect of energy saving and emission reduction.

The parallel hybrid ACE heavy duty truck can adjust the average electric power of the generator set (engine + generator) smoothly and continuously by performing intelligent power switching (iPS) on the transient power of the engine according to the configuration parameters, dynamic driving data, electronic horizon 3D road information and machine learning (AI) algorithm focusing on energy saving and emission reduction of heavy duty trucks, so that the battery pack stably operates in the Charge-Sustaining (CS) mode (the average power of the engine is approximately equal to the average road load power of the vehicle; also known as the Charge-Sustaining mode), Charge Depleting (CD) mode (the average power of the engine is less than the average road load power of the vehicle) or Charge-Increasing (CI) mode, the mode can be switched arbitrarily to maintain the state of charge (SoC) of the battery pack within a reasonable range all the time. The generator set and the driving motor provide collaborative driving to complete peak load shifting on the dynamic power and meet the requirements of vehicle road load power in real time. And energy saving and emission reduction are realized on the premise of optimizing the vehicle power performance. With the ACE heavy duty truck in the parallel hybrid mode, the total driving torques of the motor, generator and driving motor can be superimposed at the transmission input shaft, and the torque can easily break through 3000 Nm. Actually, the limit is mainly subject to the mechanical strength of the transmission, transmission shaft and driving axle, and the peak torques of all the mass-produced heavy duty truck engines below 16 L in the world are also less than 2500 Nm. In other words, the total short-term peak power (the sum of mechanical power and electric power) at the minute level of the complete vehicle of the ACE heavy duty truck in the parallel hybrid mode can easily exceed 450 kW even if the ACE heavy duty truck is only equipped with the attractive and affordable basic model engine and the mainstream cost effective generator and driving motor. The power performance of the ACE heavy duty truck is significantly superior to that of all the traditional engine heavy duty trucks in the global market. At present, all the maximum input torques of the mass-produced transmissions of commercial heavy duty trucks for long haul logistics are less than 3000 Nm. The existing heavy duty truck transmissions or other transmission subsystems should be enhanced in mechanical design in order to adapt to the ACE heavy duty trucks. The number of gears may also be reduced from 10-16 to 5-8.

Engine operation in all operating conditions is a very complex multivariable nonlinear system problem. So far, human beings cannot establish a complete dynamic mathematical or digital model of engine operation in all operating conditions to realize the high fidelity computer real-time analogue of engine operation. As an analogy for the upgrading from feature phones to smartphones, the fuel saving robot of the ACE heavy duty truck enables full Digitization of complex Analogue problems such as vehicle driving power performance or energy management through the Intelligent Stop Start (iSS) function in the series hybrid mode or the Intelligent Power Switching (iPS) function in the parallel hybrid mode, and then relies on computer programs to automatically and effectively solve the problem of energy saving and emission reduction of the vehicle and realize the software defined hybrid powertrain. It should be emphasized that any heavy duty truck engine that has been mass-produced in the three major heavy duty truck markets in Europe, America and China, whether basic model or advanced model, can meet the requirements of the ACE heavy duty truck in the present disclosure for the engine performance. The ACE heavy duty truck relies on the complementary advantages of the 100 kW level double motors and engine. On the premise that the vehicle power performance and active safety are improved, the vehicle energy consumption and emission are also optimized, and the final results of energy saving and emission reduction are basically irrelevant to the dynamic performance limit value (universal characteristic curve) of the engine in all operating conditions of the ACE heavy duty truck or the driving level of the driver. Therefore, the fuel saving robot of the ACE heavy duty truck can effectively solve the long-term industrial pain point of high discreteness of actual fuel consumption caused by different powertrain configurations or different driving levels of drivers in the traditional engine heavy duty trucks. Once the energy management process of the ACE heavy duty truck for long haul logistics is completely digitized, the energy optimization (i.e. fuel consumption minimization) problem becomes the same "equivalent problem" as AlphaGo of Google. It is very suitable to solve problems using the AI machine learning algorithms, especially a variety of Deep Learning algorithms. AlphaGo has surpassed the human drivers in play chess. The fuel saving robot of the ACE heavy duty truck can also surpass the human drivers in the specific vertical application field of minimizing the fuel consumption of heavy duty trucks for long haul logistics and becomes the best assistant of truck drivers.

In other words, the transient road load power of the ACE heavy duty truck 010 is a continuous time-varying function (i.e., analogue function). The total driving power of the vehicle is required to be equal to the road load power in order to meet the vehicle dynamics equation (1-1) in real time. Transient sudden changes or jittering of the total driving power of the vehicle shall be avoided as far as possible in order to ensure smooth vehicle running. The vehicle control unit (VCU) and the AI unit (AIU) jointly command the pulse-code modulation (PCM) of the transient output power of the ACE heavy duty truck engine, so that the transient output power of the engine becomes a digital pulse sequence. At the same time, the vehicle control unit (VCU) and the AI unit (AIU) command the electrical power split device to dynamically distribute 100 KW level electric power between its three-port external power sources or loads, so that the transient power for the battery pack to supply power to the driving motor also becomes a digital pulse sequence. According to the electromechanical power balance equations (2-1; 2-2; 2-3) in the series hybrid mode and the electromechanical power balance equations (3-1; 3-2) in the parallel hybrid mode, the above two power pulse sequences are integrated to form the total driving power of the ACE heavy duty truck, and the total driving power is still an analogue continuous time-varying function. As an analogy for almost infinite possible choices in each step of making a move when playing chess, the above two sets of electromechanical balance equations (2-1; 2-2; 2-3) or (3-1; 3-2) has infinitely many solutions for the four transient power functions (i.e., engine power, engine power, battery pack power, and driving motor power) in a group. Such a feature of multiple equation solutions provides a solid mathematical basis for the fuel saving robot of the ACE heavy duty truck to optimize the vehicle energy saving and emission reduction and surpass the human drivers by using the machine learning algorithm.

In the parallel hybrid mode, when the ACE heavy duty truck goes down a long slope (e.g., the absolute value of longitudinal slope is greater than 2.0 degrees, and the continuous downhill length is more than 5 km), the braking power of the engine and the total regenerative braking power of double motors (generator and driving motor) can be superimposed. At this time, the ACE heavy duty truck can have non-friction effective brake power of more than 500 kW stably for a long time in the case of going down a long slope at high or low speed, and its retarder function is obviously better than that of the extended-range series hybrid heavy duty truck and the traditional engine heavy duty truck (prior art) with retarder (e.g., hydraulic retarder, eddy-current electromagnetic retarder). It also overcomes the disadvantages of low non-friction braking power and weak slowdown function of the prior art, such as in-cylinder braking slowdown, hydraulic slowdown or eddy-current electromagnetic slowdown of the traditional heavy duty truck with engine while the vehicle is going down a slope at low speed (e.g., less than 30 km/h).

Routine examination and regular (calculated by accumulated mileage) replacement of brake pads are one of the main cost items of Maintenance and Repairs (M&R) for heavy duty trucks for long haul logistics. The mixed hybrid heavy duty trucks recover energy through regenerative braking, save fuel or slow down while going down slopes, obviously reduce the usage frequency of brake pads, prolong the service life of the brake pads by more than 100%, and obviously reduce the M&R costs of the vehicles.

Most of the new heavy duty trucks in Europe and America are configured with automatic transmissions, especially the automatic mechanical transmission (AMT) with more than ten gears. The proportion of automatic transmission options for new heavy duty trucks in China is also increased year by year. Most of the clutches of heavy duty trucks for long haul logistics are friction clutches, and hydraulic clutches are rarely used. The actual service life of the friction clutch is highly related to the driving habits of heavy duty truck drivers. The main reasons for the short service life of the friction clutch are the mechanical wear, vibration and impact brought by frequent disengagement or engagement at high speed difference and large torque. The service life of the friction clutch for the traditional heavy duty truck with engine is less than that of the engine and the automatic transmission, which is one of the high cost items in M&R of heavy duty trucks.

The clutch in the present disclosure is a novel Clutch-by-wire. The pressing, engagement, locking and separation and other control mechanisms of the clutch use electromechanical or electromagnetic control-by-wire instead of the traditional mechanical control. The drive end and the driven end of the clutch can transmit torque and power either in a flexible connection mode through frictional contact or in a rigid connection mode through dog engaged gear contact. Different from the clutch connection and control of the traditional heavy duty truck with engine, the drive end of the clutch of the mixed hybrid ACE heavy duty truck in the present disclosure is always mechanically connected with the driving motor in the position P2 and the input shaft of the transmission. Its driven end is always connected with the generator in the position P1 and the flywheel of the engine mechanically. The motor speed and the speed and accuracy of torque adjustment are significantly higher than those of the engine. During clutch switching, fuel injection of the engine is suspended to idle, the generator (MG1) in the position P1 gets electric energy from the battery pack in the driving mode and drags the engine to realize precise synchronization of the drive end and driven end of the clutch or maintain a small speed difference (the speed difference is less than 10 rpm), and the torque of the generator is gradually increased during the transient process of clutch engagement until the drive end and driven end of the clutch are completely and synchronously closed and locked. At this time, the engine restarts fuel injection and ignition (compression ignition for the diesel engine), gradual loading and output of mechanical power. When the clutch is disengaged, the control modes for the engine and the generator are similar, the engine stops injecting fuel, the generator towing engine and the driven end and its drive end of the clutch rotate synchronously, the torque is gradually reduced to interrupt the torque transmission between the drive end and driven end of the clutch (torque interrupt), and then the clutch is disengaged. In the parallel hybrid mode, the generator and driving motor can apply force to drive the vehicle simultaneously, the sum of the power ratings of the dual motors is much greater than the peak power of the engine, making it certainly possible to undertake 100% of the vehicle driving task in a short time (at minute level). At this time, the torque and net output power of the engine can be completely decoupled from the driving conditions of the vehicle, and the adverse consequence of flameout or irregular start-stop conversion and the like due to insufficient torque when fuel injection and compression ignition of the diesel engine again.

To optimize the fuel saving, power and active safety of the vehicle concurrently, the following clutch control strategy may be used: it is preferred to engage and lock the clutch under normal high speed conditions (at the speed of greater than 50 km/h) or under the condition of going down a long slope (without speed limitation; the absolute value of longitudinal slope is greater than 2.0 degrees, and the slope length is greater than 5 km) to realize the parallel hybrid mode. The clutch can be preferably disengaged under other road conditions and vehicle conditions, especially under the congested road condition with active acceleration and frequent braking, to realize the series hybrid mode.

"Non-combustion high speed" is also another special operating point of the engine operation for the ACE heavy duty truck of the present disclosure in the series hybrid mode. At this time, the generator drags the non-combustion engine to a point near the upper speed limit of the engine (more than 2,000 rpm) in the driving mode for stable operation. Of course, the power consumption at the non-combustion high speed point of the engine is higher than that at the non-combustion idle point according to the speed ratio. The non-combustion high speed and engine braking function are combined to form the "high speed braking" operating point of the engine, which is mainly applied to provide 100 kW level redundant and effective power loads for the driving motor running in the regenerative braking power generation mode when the zero friction slowdown function is required for the ACE heavy duty truck to go down a long slope in the series hybrid mode, while ensuring that all the auxiliary subsystems of the ACE heavy duty truck in need of mechanical energy can work normally.

From the butterfly valve exhaust brake (EB) with simple structure, low cost and limited braking power to the compression release (CR) brake with complex structure, high cost and high braking power, more and more heavy duty trucks are currently equipped with engines with the braking function. Fuel Cutoff must be firstly performed on all the cylinders in order to switch the engine from a combustion mode (doing work) to a non-combustion braking mode. The higher the engine speed is, the greater its effective braking power is. When the ACE heavy duty truck runs along a long-downhill path (the absolute value of longitudinal slope is greater than 2.0 degrees, and the downhill length is more than 5 km) in the parallel hybrid mode, the engine is switched from the Intelligent Power Switching (iPS) control mode to the non-combustion braking mode. At the same time, the generator and the driving motor jointly conduct regenerative braking. After being rectified by each inverter included in ePSD 123, the battery pack is charged, or power is supplied to the brake resistor and consumed as heat, so that the function of vehicle long-downhill retardance can be achieved redundantly and reliably. When the ACE heavy duty truck just begins to run along a long-downhill path in the series hybrid mode, the engine works at the non-combustion idle point. First, regenerative braking power generation by the driving motor is used to realize the slowdown function, and the battery pack is charged to recover energy. After the battery pack is basically fully charged (SoC touches the upper red line), the generator reversely drags the engine to switch from the non-combustion idle point to the non-combustion high speed point, the engine braking mode is started, and the engine enters its "high speed braking" operating point. The engine can be used as the 100 kW level mechanical load of the generator in the driving mode. The engine and the 100 kW level brake resistor jointly provide the necessary effective electric load for the regenerative braking power generation of the driving motor redundantly, reliably and continuously to realize the long-downhill retardance function indirectly and reliably.

The traditional engine heavy duty truck equipped with advanced driver assistance system (ADAS) can remind the driver by automatic cadence braking before the Autonomous Emergency Braking (AEB) function is started. However, since all the heavy duty trucks use the pneumatic braking system, the reaction is slow, and it is difficult to accurately control and adjust the frequency and amplitude of cadence braking.

When the distance between this vehicle and the vehicle ahead is less than the early warning distance and the automatic emergency braking is about to be triggered, the ACE heavy duty truck immediately switches the engine to the non-combustion idle point (series hybrid mode) or non-combustion operating point (parallel hybrid mode), adjusts the average driving torque of the driving motor to below 80% of its peak value, and dynamically controls the frequency and amplitude of its driving torque ripple. This triggers the vibration and noise at specific frequency and amplitude of a plurality of subsystems (such as steering wheel, seats, dashboard, floor and the like) in ACE heavy duty truck cab to remind the driver to pay attention and realize the intelligent cadence braking (iPB) function. The detailed implementing method is as follows: no matter in the series hybrid mode or parallel hybrid mode, the driving motor (MG2) of the ACE heavy duty truck always maintains bidirectional mechanical connection with the driving wheel through the transmission, and the torque ripple of the driving motor can be directly transmitted to the vehicle driving wheel. The vehicle control unit (VCU) can command the driving motor to superimpose a fast changing bipolar pulse-width modulation (bipolar PWM) pulse sequence over its slowly changing (sub-minute level) driving torque function to generate adjustable regular torque ripples and trigger the vibration and noise at a specific spectrum of the ACE heavy duty truck engine and cab. The duty cycle of the bipolar PWM pulse sequence is fixed at 50%, the repetition frequency is arbitrarily adjustable in the range of 1 Hz to 100 Hz, and the pulse amplitude is less than 25% of the peak torque. Since the average second-level time of the PWM pulse sequence is zero, that is, the average impulse is zero, the power performance and maneuverability of the vehicle will not be affected based on an impulse equivalence principle no matter how the driver adjusts and sets the frequency and amplitude of the torque ripple (PWM) to achieve the best vibration reminding effect. It should be emphasized that the main effect of the intelligent cadence braking (iPB) function is to effectively remind the driver to take immediate measures to avoid rear-end collision with the vehicle ahead by adjusting the preset specific vibration and noise through the engine and cab. For drivers, the intelligent cadence braking function is like the ring tone function of a mobile phone. When the dynamic distance between two vehicles is less than the emergency braking distance and the driver does not respond in time, ACE heavy duty truck starts the automatic emergency braking (AEB) function. The regenerative braking response of the driving motor is significantly faster than that of the pneumatic braking system. The driving motor and pneumatic braking system jointly apply emergency braking for deceleration to avoid rear-end collisions or reduce collision injuries. At this time, the intelligent cadence braking function is of no significance.

The ACE heavy duty truck in the present disclosure can be configured with a plurality of motors, and at least two large automotive-grade motors with rated power of more than 150 kW and independently and arbitrarily adjustable speed and torque are configured as standard devices. The main operation mode of one motor (MG1) is the power generation mode, which is referred to as the generator for short; the other motor (MG2) mainly operates in the driving mode, which is referred to as the "main driving motor" or driving motor for short. Of course, the generator can also operate in the driving mode, and the driving motor can also operate in the power generation mode (regenerative braking). An optional auxiliary driving motor (MG3) with a 100 kW level rated power can also be provided, the speed of the auxiliary driving motor (MG3) is proportional to the main driving motor, and the torque is arbitrarily adjustable. The system architecture of the ACE heavy duty truck is a double-motor hybrid architecture, in which the generator in the hybrid position P1 is connected with the flywheel of the engine bidirectionally and mechanically (coaxial at equal speed, or parallel axes at constant speed ratio) to form a generator set (Gen Set); the driving motor in the hybrid position P2 is connected with the input shaft of the transmission bidirectionally and mechanically (coaxial at equal speed, or parallel axes at constant speed ratio), as well as the flywheel of the engine and the mechanical shaft of the generator through a clutch-by-wire of the heavy duty truck bidirectionally and mechanically. Obviously, the extended-range series hybrid heavy duty truck can be regarded as a special case of the above mixed hybrid ACE heavy duty truck when the clutch is normally disengaged or the clutch is cancelled, while the parallel hybrid vehicle can be regarded as another special case of the above mixed hybrid ACE heavy duty truck when the clutch is normally engaged, but at this time, the generator and driving motor at a fixed speed ratio can be equivalent to a larger motor, and the rated power of the larger motor is the sum of that of the generator and that of the driving motor. It can be proved theoretically that the cost effectiveness of the Mixed Hybrid ACE heavy duty truck of the present disclosure is obviously higher than that of a series hybrid vehicle or parallel hybrid vehicle with the same configuration when the energy saving and emission reduction effect of the ACE heavy duty truck is optimized on the premise of ensuring the power performance and active safety of the complete vehicle in all operating conditions. Detailed embodiments of other system architectures will also be given later.

The ACE heavy duty truck further comprises a Global Navigation Satellite System (GNSS) which is a dual-antenna carrier phase real-time kinematic (RTK) differential receiver, capable of calculating the longitude, latitude, altitude, longitudinal slope, linear velocity and other parameters of a longitudinal road in the running process of the vehicle in real time; or a high precision single-antenna Global Navigation Satellite System, capable of calculating the longitude, latitude and linear velocity of the road at the meter-level positioning precision in the running process of the vehicle in real time; and an inertial measurement unit (IMU) containing a dynamic roll-angle sensor, capable of measuring the longitudinal slope of a road in real time with the measurement accuracy of 0.1%.

The vehicle control unit (VCU) or AIU of the ACE heavy duty truck is configured for predictive control over the generator set (engine + generator), clutch, driving motor, automatic transmission, ePSD and battery pack (collectively referred to as the "mixed hybrid powertrain") of the ACE heavy duty truck based on the longitude, latitude, longitudinal slope and speed calculated by the Global Navigation Satellite System (GNSS) in real time in the running process of the vehicle in combination with the 3D road information (longitude, latitude, longitudinal slope and the like) within the electronic horizon ahead of the vehicle stored in the 3D map; and/or predictive control over the mixed hybrid powertrain based on the longitude, latitude, longitudinal slope and linear velocity of the longitudinal road in the running process of the vehicle calculated by the RTK receiver in combination with the longitude, latitude and longitudinal slope of the longitudinal road within the electronic horizon ahead of the vehicle stored in the 3D map.

There are two kinds of charges stored in the battery pack: one is the high-cost charge from the generator set, i.e., "engine charge", and the other is the quasi-zero-cost charge recovered from the regenerative braking of the driving motor, i.e., "regenerative braking charge". The power control strategy for the fuel saving robot of the ACE heavy duty truck has two key points: the first is to maximize the charge throughput of the battery pack per mileage (kWh/highway) for driving the vehicle, and the second is to increase the proportion of regenerative braking charge as far as possible while reducing the proportion of engine charge. The ratio of the charge throughput to the effective capacity of the battery pack is the charge turnover rate.

VCU can command the Clutch-by-wire and dynamically switch the series or parallel hybrid mode of the vehicle according to the highway 3D data (longitude, latitude, longitudinal slope) and real-time traffic conditions within the electronic horizon. The mixed hybrid ACE heavy duty truck of the present disclosure can make the battery pack work stably in one of the three modes, i.e., Charge Sustaining (CS), Charge Depleting (CD) and Charge-Increasing (CI) which can be switched arbitrarily and smoothly through Predicative Control over the Intelligent Stop Start (iSS) function or Intelligent Power Switching (iPS) function of the engine under any architecture or at any speed to increase the total charge throughput of the battery pack, maximize the proportion of quasi-zero-cost regenerative braking charge and further reduce the fuel consumption of the vehicle on the premise of meeting the vehicle dynamics equation in real time.

The VCU is further configured for predictive control over the hybrid powertrain based on the longitudinal slope calculated by the RTK receiver and the data of the Electronic Horizon 3D map in the running process of the vehicle when it is detected that the difference between the longitudinal slope calculated by the RTK receiver and the longitudinal slope of the same position stored in the 3D map exceeds the allowable tolerance. Then, it distinguishes right from wrong timely according to the vehicle dynamics equation and makes a record at any time for subsequent update and error correction of the 3D map.

The VCU is further configured for calibrating built-in clocks comprising the built-in clocks of the VCU, of subsystem microprocessors based on the time service of the RTK receiver in real time, and annotating all operating data of ACE heavy duty trucks in the unique time series to measure and store signals with a sampling frequency of higher than 5 Hz; aligning and assembling into a data set the measurement parameters and/or operating parameters of at least two subsystems of the RTK receiver, the map unit, the generator set, the ePSD, the clutch, the driving motor, the automatic transmission and the battery pack on the first dimension; calibrating and arranging a plurality of data sets on the second dimension according to the time series provided by the calibrated clock so as to form a structured big data packet used for describing the dynamic operating condition of ACE heavy-duty trucks.

In other words, the VCU is configured for calibrating built-in clocks comprising the built-in clocks of the VCU, of subsystem microprocessors based on accurate time service of the RTK receiver, and annotating the data in the unique time series; assembling the measurement parameters and/or operating parameters of at least two subsystems of the RTK receiver, the map unit, the generator set, the ePSD, the clutch, the driving motor, the automatic transmission and the battery pack into the dedicated structured big data packet (i.e., fuel saving data packet) used for describing the dynamic operating condition of ACE heavy duty trucks.

Optionally, the dedicated structured big data packet can be encrypted, and accordingly uploaded in a safer way to the cloud computing platform for storage through the mobile Internet in real time (sub-second level delay) or in time (hour level delay) afterwards for subsequent big data analysis and processing.

The generator set of the ACE heavy duty truck is composed of an engine and an alternator, wherein the engine is directly connected to the alternator (MG1) bidirectionally and mechanically, and the alternator is connected to the AC terminal of the AC-DC converter module in the first port of ePSD unidirectionally and electrically. The output shaft of the engine is also connected with the input shaft of the automatic transmission through a clutch and a flexible coupling bidirectionally and mechanically; the mechanical shaft of the main driving motor (MG2) in the position P2 is connected with the clutch bidirectionally and mechanically and with the input shaft of the automatic transmission through a flexible coupling bidirectionally and mechanically. The hybrid powertrain with dual motors and single clutch can realize multiple driving modes separately under the two architectures of series hybrid and parallel hybrid which can be switched through the clutch, and optimize the power and fuel saving under various complex and changeable vehicle driving conditions and road longitudinal slope distribution functions according to the power control strategy selected by the driver.

In addition to the basic power generation mode of generator MG1 driven by the engine, the 100 kW MG1 can completely replace the 10 kW starting motor of the heavy duty truck configured for the traditional engine in the series hybrid mode (with the clutch disengaged) to further reduce the system cost. In the driving mode, MG1 can easily drive the engine from a static state without fuel injection to the designated speed quickly and accurately, followed by fuel injection and ignition (compression ignition for diesel oil) of the engine, and the Start-Stop mode switching of the engine of the heavy duty truck can be realized smoothly with high performance at any speed of the flywheel for the engine; the vehicle is driven by the driving motor (MG2) electrically in the battery pack charge consumption mode (CD); when the state of charge (SOC) of the battery pack drops to the optimal lower limit, the MG1 starts the engine to start generating power and enters the charge sustaining (CS) working mode or Charge Increasing (CI) mode for further fuel saving under urban conditions with serious highway congestion. MG1 can also take the engine having the function of in-cylinder braking as a payload for the generator in the driving mode, consume DC electrical energy through the inverter, and provide another redundant payload in addition to the battery pack and brake resistor for the main driving motor (MG2) to realize the retarder function through regenerative braking power generation when the heavy duty truck is going down a long slope.

The VCU can also be configured for control over at least one of the engine, the generator, the battery pack, the ePSD, the automatic transmission and the driving motor based on at least one of a path longitudinal slope distribution function within the electronic horizon of 3D map, a universal characteristic curve digital model of the engine, a digital model of generator characteristics, a digital model of the battery pack charge-discharge characteristic, a digital model of automatic transmission characteristics and a digital model of driving motor characteristics correspondingly.

The universal characteristic curve digital model of the ACE heavy duty truck engine comprises an idle working point without road load, and several high efficiency working points with the minimum specific fuel consumption in the engine, and the VCU is further configured for enabling the engine to work at the idle working point or several high efficiency working points, thus enabling the engine to work stably at several high efficiency working points for a long term; the surface condition is changed into the point condition, and smooth switching among different condition points can be achieved.

The VCU can also be further configured for commanding the Internet Of Vehicle (IOV) for real-time collection and local storage of the dedicated structured big data packet of the ACE heavy duty truck operations in the running process of the vehicle; and sending and storing the stored structured big data packet onboard to the remote cloud computing platform via a wireless mobile Internet in real time (sub-second delay) or in time (hour level delay) for subsequent cloud analysis and processing of big data. Deep learning algorithm, cloud platform computing power, and numerous ACE heavy duty truck operated structured big data are integrated on the cloud platform to train the cloud AI brain of the fuel saving robot of the ACE heavy duty truck and the local AI brain of a specific vehicle. According to a specific ACE heavy duty truck and a specific freight path combined with the operation big data of all ACE heavy duty trucks in the history of the same path, the cloud AI brain quickly calculates the default optimal fuel saving power control plan for the vehicle running on the path and downloads and pushes the plan to the vehicle, and then the vehicle AI brain makes real time correction according to the specific vehicle and road conditions.

The present disclosure also provides a cloud computing platform, comprising at least one cloud server; each server comprises a processing unit; and a memory, coupled to the processing unit and comprising computer program codes; when the computer program codes are executed through the processing unit, the server executes the following operations of:

receiving and storing the dedicated structured big data from multiple ACE heavy duty trucks via the wireless mobile Internet, wherein each ACE heavy duty truck is provided with a hybrid powertrain with dual motors and single clutch, and at least comprises:

- a generator set (generator in position P1 directly driven by the engine), used for converting chemical energy of vehicle fuel into electric energy;
- an electrical power split device (ePSD), configured as a power network with three ports, wherein the first port of the ePSD is connected with the output end of the generator set bidirectionally and electrically;
- at least one battery pack, connected with the third port of the ePSD bidirectionally and electrically;
- an automatic transmission, with its output shaft connected with a transmission shaft of the vehicle bidirectionally and mechanically;
- a map unit, used for prestoring an electronic navigation 3D map comprising the 3D information of the longitude, latitude and longitudinal slope of the longitudinal road at the road section where the vehicle runs;
- at least one driving motor in the position P2, connected with the second port of ePSD bidirectionally and electrically, with the output shaft of the driving motor connected with the transmission bidirectionally and mechanically. The driving motor can be operated to: convert the electric energy from the generator set and/or battery pack into mechanical energy for driving the vehicle; or convert the mechanical energy of the vehicle into electric energy through regenerative braking power generation, and charge the battery pack through ePSD. The flywheel for the engine is connected with the input shaft of the transmission through a clutch-by-wire bidirectionally and mechanically;

- a vehicle control unit (VCU) used for controlling at least one of the navigator, the generator set, the clutch, the ePSD, the driving motor, the automatic transmission and the battery pack based on 3D road data (especially longitudinal slope function in Electronic Horizon) from a global navigation satellite system (GNSS) and/or the map unit (MU) through a data bus (e.g., CAN bus) of the vehicle independently;

forming dedicated deep learning algorithms for the fuel saving robot of the heavy duty truck based on the dedicated structured big data of operation for multiple ACE heavy duty trucks stored on cloud;

conducting training on the artificial intelligence (AI) brain of a cloud fuel saving robot based on the formed dedicated deep learning algorithms through the computing capability of the cloud platform, wherein the structured big data comprises the operating data related to at least one of the generator set, the clutch, the ePSD, the driving motor, the automatic transmission and the battery pack; and

making a response to the request of a certain ACE heavy duty truck; aiming at the vehicle-specific driving path, the AI brain of the cloud fuel saving robot will give a customized power control scheme as the default initial control scheme for the fuel saving strategies of the VCU. The VCU of the vehicle modifies the default fuel saving control solution in real time according to the real-time road conditions to achieve the optimal fuel saving effect.

Each of the ACE heavy duty trucks further comprises: a high precision Global Navigation Satellite System (GNSS), configured as a dual-antenna carrier phase real-time kinematic (RTK) differential receiver or a single-antenna GNSS together with an inertial measurement unit (IMU) containing a dynamic longitudinal slope function, used for calculating the longitude, latitude, altitude, longitudinal slope and vehicle linear velocity of a longitudinal road in the running process of the vehicle in real time. The measurement data received from multiple vehicles further comprises: road 3D data comprising the longitude, latitude and longitudinal slope, measured by the multiple vehicles at the same road section of a running way, of a plurality of longitudinal roads, and the operations further comprise: dynamically judging the accuracy of 3D map through the vehicle dynamics equation, vehicle operation big data and the dynamic error value between measured road 3D data and 3D map road data, timely transmitting the updated values or out-of-limit error values of road 3D data to electronic navigation 3D map manufacturers; and updating the 3D map stored in the vehicle navigator. Thus, the precision of the 3D map can be improved in a crowd-sourcing mode continuously, and the freshness of the 3D map is kept; and the 3D map stored in the vehicle navigator is updated continuously.

The after-treatment system of the China VI diesel engine of the heavy duty truck consists of three subsystems: diesel oxidation catalyst (DOC), diesel particulate filter (DPF) and selective catalytic reducer (SCR) for eliminating nitrogen oxides (NOx), which are connected in series successively from front to back. The high efficiency temperature range for catalyst emission reduction conversion is generally between 250°C (Celsius degree) and 550°C. The exhaust temperature of the diesel engine is generally 300°C to 500°C. During cold start of the engine (which means that the surface temperature of the catalysts inside the after-treatment system is below 100°C), the surface temperature of various catalysts in the after-treatment system cannot reach 300°C immediately, and at this time, the conversion efficiency of the catalysts is not high (e.g., less than 50%), and the emission pollution of pollutants (particles, NOx, etc.) is high. A large portion of the accumulated emission pollution from the vehicle comes from the cold start of its engine and other transient states of sudden changes in speed and torque. Beijing Public Transport released a number of plug-in hybrid electric vehicles (PHEVs) from service in advance in 2018 in response to the "three-year action plan for winning the blue sky defense war" of the State Council mainly because the frequent zero starts of the diesel engine of the PHEV generated higher actual pollution emissions than those of the traditional diesel engine bus under urban conditions.

The modern heavy duty truck controlled by the On-Board Diagnostics-II (OBD-II) module for monitoring the vehicle exhaust emission in real time must stop to complete Active Regeneration of DPF and remove carbon particles deposited in DPF every once in a while. The frequency of Active Regeneration (times/100 km) mainly depends on the configuration parameters of the vehicle and its mainstream Duty Cycle. The Active Regeneration of DPF is both time consuming (idling stop of diesel engine for about 30 minutes) and fuel consuming with useless work, which has always been one of the pain points for European and American heavy duty truck drivers and transportation companies, and will also become one of the pain points for Chinese drivers and fleets using new China VI heavy duty trucks.

The mixed hybrid ACE heavy duty truck of the present disclosure can set the engine at its high efficiency operating point for combustion stably for a long time throughout its operational life cycle, and can reduce the active regeneration frequency by more than 80% compared with the plug-in parallel heavy duty truck or the traditional heavy duty truck with engine; it can also ensure that the surface temperature of catalysts inside the emission after-treatment system falls within the efficient conversion temperature range stably for a long time through the high speed stop start control strategy for the engine in the parallel hybrid mode (e.g., fuel injection switching at 1200 rpm) while optimizing the fuel consumption, so that the number of cold start times of the engine is controlled and reduced by more than 75% compared with the plug-in parallel heavy duty truck; it can not only reduce the fuel consumption, but also reduce the pollutant emission in the actual operation of heavy duty trucks to meet the Real Drive Emission (RDE) requirements under actual driving in the China VI emission regulations stably for a long time.

Various typical driving modes possessed by series hybrid vehicles, parallel hybrid vehicles and mixed hybrid (series-parallel) hybrid vehicles shall be familiar to those skilled in the art and will not be further introduced. As described above, the overall fuel consumption (L/100 km) of the double-motor single-clutch mixed hybrid heavy duty truck of the disclosure in the application scenarios of long haul logistics is reduced by 30% compared with that of the traditional heavy duty truck with engine, and the former has better power, active safety and RDE emission compliance. Also, the mixed hybrid heavy duty truck has more advantages in fuel saving, power, active safety, cost competitiveness, etc., compared with the extended-range mixed hybrid heavy duty truck (i.e., pure series hybrid heavy duty truck).

All the core subsystems or parts and components of the ACE heavy duty truck of the disclosure are based on industrialized products and technologies. Compared with the diesel heavy duty truck in the prior art, the ACE heavy duty truck of the disclosure can achieve the beneficial effects of energy saving and emission reduction with the overall fuel saving ratio of 30% in the application scenario of long haul logistics on highways on the premise of ensuring the power, active safety, freight timeliness and attendance of vehicles. ACE heavy duty trucks enable fleets or individual vehicle owners to recover the cost difference (refers to the price difference of Total Owning Cost (TOC) between ACE heavy duty truck and traditional diesel heavy duty truck) within two years or 500,000 km highway freight mileages by saving the fuel and M&R costs of the vehicles and improving the labor productivity of heavy duty truck drivers without government subsidies. The mass production of new ACE heavy duty trucks (i.e., original ACE heavy duty trucks) can meet the 2025 carbon emission target value of Euro VII regulations issued by EU in 2019 and the 2027 carbon emission target value of the American GHG-II two years in advance. In America, the total service life of a heavy duty truck is up to 15 years or 1.5 million miles, a set of frame of each heavy duty truck may be configured with two to three sets of powertrains throughout the life cycle (engine + transmission; reliable operation life of the powertrain is 500,000 mile), and the second or third set of powertrain is mostly an overhauled powertrain. The average annual sales of new heavy duty trucks in North America is about 200,000, while the number of modified heavy duty trucks (second-hand heavy duty trucks with replaced powertrains) exceeds 200,000 every year. Thanks to the "Easy in and Strict out" traffic laws and regulations system in America, which allows modified heavy duty trucks to run directly on the road for commercial operation without government re-certification, the fuel saving robot of the ACE heavy duty truck of the present disclosure can also be used for modifying nearly 2 million used heavy duty trucks in the market stock of America in batches, so that a large number of modified ACE heavy duty trucks can also achieve the 2027 carbon emission target value of GHG-II regulations several years in advance, just like the new original ACE heavy duty trucks. This is of great and far-reaching significance to the energy saving and emission reduction of American long haul logistics industry.

Although the summary of invention of the present disclosure focuses on the heavy duty trucks for long haul logistics, the problems to be solved, novel technical solutions and beneficial technical effects of the present disclosure also apply to the operation of large road commercial vehicles (trucks or buses) with a total weight of more than 10 tons under various driving conditions. The transient power pulse-code modulation (PCM) technology for engines also applies to the hybrid passenger vehicles.

**Brief Description of the Drawings**

Figure 1 illustrates a system block diagram of the ACE heavy duty truck disclosed by one embodiment of the invention;
Figure 2 illustrates a system block diagram of the electrical power split device (ePSD) of the ACE heavy duty truck disclosed by one embodiment of the invention; and
Figure 3 illustrates a system block diagram of networked communication between the ACE heavy duty truck and cloud computing platform through the mobile Internet disclosed by one embodiment of the invention.

In these figures, the same or similar reference symbols are used for representing the same or simile elements.

**Detailed Description of the Preferred Embodiments**

The following is the description of the embodiments by reference to some examples. It should be known that the description of these embodiments is only for those skilled in the art to properly understand the invention and accordingly achieve the invention, and are not hints of limitations to the invention.

For example, the term "including" and the variants thereof should be interpreted as the open term of "including but not limited to". The term "based on" should be interpreted as "at least partially based on". The terms "an embodiment" and "a kind of embodiment" should be interpreted as "at least one embodiment". The term "another embodiment" should be interpreted as "at least one other embodiment". The terms "first", "second" and the like can refer to different or the same objects. The followings may include other definite and implicit definitions. In this paper, "unidirectional" or "bidirectional" connection refers to whether the direction of the electrical or mechanical power flow or energy flow flowing from the power source to the load is reversible or not, and whether the roles of the power source and the load can be exchanged with each other or not. In the case of unidirectional connection, the roles of the power source and the load are fixed, and the power flow from the source to the load is unidirectional and irreversible; in the case of bidirectional connection, the roles of the power source and the load can be switched, and the direction of power flow is reversible or bidirectional. Unless otherwise specified, all electromechanical parts, modules or devices in the present disclosure are of automotive grade.

The following is the description of the basic principles and some embodiments of the invention by reference to the figures. Figure 1 illustrates the powertrain, vehicle control unit, core sensors and other devices of a Mixed Hybrid ACE heavy duty truck 010 according to one embodiment of the invention. The system can be configured either as a 6x2 powertrain system including double motors (generator 110 + main driving motor 140), an active driving axle 160 and a driven driving axle 180, or as a 6x4 powertrain system with three motors (generator 110 + main driving motor 140 + auxiliary driving motor 170), one main driving axle 160 and one auxiliary driving axle 180. In some embodiments, the heavy duty truck can be for example the hybrid heavy duty truck with its gross weight larger than 15 tons and mainly used for long haul logistics.

As shown in Figure 1, in general, the ACE heavy duty truck comprises an engine 101, an engine control unit (ECU) 102, a generator (MG1) 110, an electrical power split device (ePSD) 123, a clutch 111, at least one main battery pack 130a, an automatic transmission (Tran) 150, a transmission control unit (TCU) 151, at least one main driving motor (MG2) 140 and a vehicle control unit (VCU) 201. The main battery pack 130a and the main driving motor 140 are required (standard), while the auxiliary battery pack 130b and the auxiliary driving motor 170 are options (optional).

Specifically, the flywheel end of the engine 101 is bidirectionally and mechanically connected with the generator (MG1) 110 arranged in the hybrid position PI, and the engine is controlled by the engine control unit (ECU) 102 and mainly used for converting the chemical energy of onboard fuel such as diesel or natural gas into electrical energy. The combination of the engine 101 and the generator 110 may be collectively referred to as a generator set. The flywheel end of the engine 101 and the mechanical shaft of the generator 110 are also connected with one end (also known as the driven end) of the clutch-by-wire 111 bidirectionally and mechanically, and the bidirectional and mechanical connection among the three parts (101, 110, 111) is either a single Coaxial arrangement or a multi-parallel-axis arrangement plus gear connection. The multi-parallel-axis arrangement may be preferred. Here, the flywheel output end of the engine 101 is and mechanically connected with one end of the clutch 111 directly and bidirectionally. An cost effective automotive-grade generator 110 with medium-and-small torques (less than 500 Nm) is selected and connected with one end of the flywheel output end of the above engine 101 and one end of the clutch 111 bidirectionally and mechanically through a reducer with a fixed gear ratio.

As shown in Figure 2, the electrical power split device (ePSD) 123 is a Power Electronics Network with three ports, wherein the three-phase AC terminal of the 100 kW level inverter 121 in the port I (also called "the first port") of the ePSD is connected with the three-phase AC output end of the external generator 110 bidirectionally and electrically. The battery pack 130a or 130b is in DC connection with the low voltage terminal of the 100 kW level chopper (also known as DC-DC converter) 132a or 132b in the port III (also known as the "third port") of the ePSD 123 bidirectionally and electrically; the 100 kW level brake resistor 131 with radiator is in DC connection with one end of the 100 kW level soft switch 133 in the port III unidirectionally and electrically. The optional AC distribution panel 135 is connected with the AC terminal of the 10 kW level inverter in the port III bidirectionally and electrically. The driving motors 140 and 170 are AC-connected with the AC terminals of the inverters 122a and 122b inside the port II (also called the "second port") of the ePSD bidirectionally and electrically. All the DC terminals of the inverters 121, 122a and 122b are connected to the DC bus junction X bidirectionally and electrically. One end of the 100 kW level soft switch 133 is in DC connection with the junction X unidirectionally and electrically, and the other end is in DC connection with the brake resistor unidirectionally and electrically. The high voltage terminal of the chopper 132a or 132b is in DC connection with the junction X bidirectionally and electrically. The DC end of the inverter 134 is in DC connection with the junction X bidirectionally and electrically.

Referring back to Figure 1, the output shaft of the automatic transmission 150 is connected with an input shaft of a main driving axle 160 of the vehicle bidirectionally and mechanically, and controlled by the transmission control unit (TCU) 151. The output shaft of the standard main driving motor 140 configured in the hybrid position P2 is connected with the other end of the clutch 111 bidirectionally and mechanically, and also connected with the input shaft of the transmission 150 through the flexible coupling or clutch-by-wire 152 bidirectionally and mechanically. The active end of the clutch 111 and the mechanical shaft of the driving motor 140 are also connected with the input shaft of the transmission 150 bidirectionally and mechanically, and the bidirectional and mechanical connection among the three (clutch 111, main driving motor 140, transmission 150) can be either single-axis Coaxial arrangement or multi-axis parallel arrangement. When the multi-axis parallel arrangement is adopted, the output shaft of the driving motor 140 can be connected with the input shaft of the transmission 150 and the drive end of the clutch 111 bidirectionally and mechanically through a reducer with a fixed gear ratio. The main driving motor 140 can be operated for converting the electrical energy into the mechanical energy for driving the ACE heavy duty truck (electrical driving), or converting the mechanical energy of the ACE heavy duty truck into the electrical energy (regenerative braking) to charge the battery pack 130a or 130b through the inverter 122a or 122b and the chopper 132a or 132b in the ePSD 123. The optional auxiliary driving motor (MG3) 170 configured in the hybrid position P3 is connected with the second driving axle 180 bidirectionally and mechanically. MG3 may not be adopted, especially when considering reducing the system cost.

The vehicle control unit (VCU) 201 as one of the key components of the disclosure cooperates with AIU 202 to control one or more of the above-mentioned engine 101, generator 110, ePSD 123, clutch 111 or 112, driving motors 140 & 170, automatic transmission 150 and battery packs 130a & 130b separately or simultaneously in an "independent" manner, through for example the vehicle-mounted data bus (not shown, such as CAN bus or virtual data cable for wireless communication) and based on analysis and calculation of the vehicle locating 3D data (longitude, latitude and longitudinal slope) received by the onboard Global Navigation Satellite System (GNSS) 220 and the electronic horizon priori data stored in the map unit (MU) 240.

In some embodiments, the VCU 201 can be an automotive level high-performance embedded single-core or multi-core microprocessor. Similar to the graphic processing unit added to the early personal computer to enhance the image processing performance of the overall unit, VCU 201 can also use the plug-in vehicle-end AI inference chip (AIU) 202 to improve the fuel saving real-time inference computing power of the vehicle end artificial intelligence (AI) of the ACE heavy duty truck 010. It should be understood that, in the non-restriction manner, the VCU 201 or AIU 202 can be also an isomeric microelectronics hardware logic unit, comprising a general purpose microprocessor (CPU), a field-programmable gate array (FPGA), a graphic processing unit (GPU), an application-specific integrated circuit (ASIC), a digital signal processor (DSP), a system on chip (SOC), a complex programmable logic device (CPLD), etc.

Preferably, the engine 101 is a six-cylinder heavy duty truck diesel engine or natural gas engine with a displacement of 9 L to 13 L and a peak power between 280 kW and 380 kW. The engine with larger displacement (13 L-16 L) can also be used, and the peak power of such engine is higher than 400 kW, with a higher power margin, the climbing power performance of the vehicle is better when the vehicle encounters an uphill road condition on a highway (tens of kilometers of continuous uphill, with the longitudinal slope of greater than 2.0 degrees), but the fuel saving effect has no advantage over that of the engine with preferred displacement, and the volume, weight and cost of the engine are higher, and the cost effectiveness is suboptimal. The engine with smaller displacement (lower than 9 L) generally has a peak power of less than 300 kW; though the fuel saving effect is good and the volume, weight and cost are low, the power margin of the engine is insufficient; when the vehicle encounters a large uphill condition on a highway, if the power in the battery pack is exhausted and it is impossible to continue to supply power to the driving motor, the climbing power performance of the ACE heavy duty truck 010 will be obviously insufficient, and the vehicle cannot continue to go up a slope until it is shifted into a lower gear and slowed down; in addition, the engine displacement and power are not coordinated with the vehicle weight, which is unfavorable to the long life of the engine, and the cost effectiveness is suboptimal. It should be understood that, alternatively, the engine 101 can also be a vehicle gas turbine meeting the above power requirements. The gasoline engine is obviously inferior to the diesel engine in terms of both thermal efficiency of combustion and service life (kilometers for B10 life), so it is not suitable for heavy duty trucks for long haul logistics.

It is noted that, as shown in Figure 1, in the embodiments of the invention, the system is in a series hybrid mode when the clutch 111 is disengaged, no mechanical connection between the engine 101 and the driving shaft 160 of the vehicle is provided at this time, and accordingly the operating conditions of the internal combustion engine and the vehicle running conditions are decoupled completely, so that the engine 101 is enabled to stably work at several operating points (specified speed/torque) specified in the high efficiency range (including the optimal fuel efficiency range and/or the optimal emission range) of the universal characteristic curve for a long time. When the clutch 111 is engaged and locked, the ACE heavy duty truck powertrain is switched to the parallel hybrid mode. At this time, the engine 101 is connected with the first driving axle 160 of the vehicle through the transmission 150 bidirectionally and mechanically, the speed of the engine 101 is determined by the vehicle speed and the gear of the transmission 150, and the output torque of the engine 101 can still be set independently and is not constrained to the driving conditions of the vehicle. The engine can work in the high efficiency range stably under high-speed conditions. The sum of the rated power of the generator 110 and the driving motor 140 is greater than the peak power of the engine 101, and it is absolutely possible to realize peak load shifting of the transient driving power through dynamically adjusting the driving power of the dual motors (110 & 140), so as to meet the vehicle dynamics equation (1-1) in real time. For the control strategy of the clutch 111, the parallel hybrid mode (clutch engaged) is preferred under high speed conditions (average speed is above 50 km/h; active acceleration or braking is infrequent); the series hybrid mode (clutch disengaged) is preferred under urban conditions or during driving on a congested highway (the average speed is below 45 km/h; active acceleration or braking is frequent).

The difficulty in the electronic control of the traditional engine of the heavy duty truck is simultaneous optimization of multiple contradictory targets such as power, fuel saving, emission behavior and cost under global surface working conditions (all speed and torque ranges) to meet the increasingly stringent emission regulations (pollutant and carbon emissions) of all countries in the world. If the operating range of the engine can be changed from the global surface working condition to the point condition or line condition with a limit range, it will open up a new field for it to break through the current upper limit of thermal efficiency of the engine and optimize the fuel consumption and emissions to the maximum extent through technological innovation, and it is also possible to effectively meet the severe challenges of surging complexity and costs of design, calibration and manufacturing of the engine body, ECU and tail gas processing system of the heavy duty truck in order to meet the stricter mandatory regulations on new vehicle emissions (pollutant and carbon emissions) continuously introduced by all countries in the world in the next 20 years.

Compared with a spark-ignition gasoline engine (SI), a compression ignition diesel engine (CI), with the advantages of fuel saving, low speed, large torque, practicality, durability, ultra-long life, high performance cost and the like, becomes the preferred engine for most heavy duty trucks (exceeding 95%) in the world. However, in the aspect of pollutant emissions, especially pollutant emissions of nitrogen oxides (NOx) and particulate matter (PM) harmful to atmospheric environment and human health, the diesel engine is inferior to the gasoline engine. The world's mainstream after-treatment technologies that meet the EPA-2010, Euro VI and China VI mandatory emission regulations for reducing exhaust pollutant NOx and PM emissions from the diesel engines of heavy duty trucks include selective catalytic reduction (SCR) and diesel particulate filter (DPF), and the catalyst in the after-treatment system can work normally and efficiently provided that both the SCR and the DPF reach the specified high temperature (Light-off) inside such as above 250 degrees Celsius. Both the pollutant emissions and specific fuel consumption (g/KWH) of the diesel engine are greatly increased in a short term during cold start, low-load operation and instantaneous substantial regulation of output power; while under the working condition of highways, the engine can work stably in the high efficiency range of its universal characteristic curve, and both the pollutant emissions and the specific fuel consumption of the diesel engine are small at the moment. For the traditional heavy duty truck, it is difficult to optimize both the fuel consumption and the pollutant emission within the whole range of speed/torque of the universal characteristic curve of the engine. Through the Intelligent Stop Start (iSS) control of the engine in the series hybrid mode or the Intelligent Power Switching (iPS) control in the parallel hybrid mode, the ACE heavy duty truck of the present disclosure enables the engine 101 to stably work at the optimal operating point or several constant power condition lines within the high efficiency range of the universal characteristic curve of the engine 101, so that the transient conditions of engine cold start and rapid change in the speed and torque are basically eliminated, and the emissions of pollutants (NOx, PM) can be reduced effectively while the specific fuel consumption and carbon emissions are reduced to realize the beneficial effect of energy saving and emission reduction. The SCR system can reduce the consumption of the consumable, i.e., AdBlue (g/100 km), due to less NOx in the tail gas of the ACE heavy duty truck, thus further reducing the operating costs. The diesel particulate filter (DPF) of the hybrid heavy duty truck also works stably in its high efficiency range for a long time, DPF system Active Regeneration performed through periodic mandatory parking for 30-45 minutes and the idling of the diesel engine with excessive injected diesel is basically eliminated to eliminate the industrial user long-term shortcoming of deposition of a large number of particles inside the DPF with excessive time and fuel consumption, further reduce the fleet operating cost, and improve the freight efficiency.

Different from the traditional heavy duty truck with diesel engine, the engine of the ACE heavy duty truck can have the function of clean cold start (CCS). When the ACE heavy duty truck is cold started after long-term parking outdoors in a severe cold region (at temperature below minus 10 degrees Celsius), the clutch 111 is firstly disengaged, and the vehicle enters the series hybrid mode. The 10 kWh level effective power of the battery pack can be utilized to output alternating current above 10 kW through the ePSD 123. After the SCR part of the exhaust after-treatment system is rapidly heated to 250 degrees Celsius at a minute level through the onboard Electrically Heated Catalyst (EHC) at the level of tens of kilowatts, the generator 110 in the electric driving mode drags the engine 101 to be started under the non-combustion condition to an idle speed of 500 rpm~800 rpm, followed by fuel injection and compression ignition. Then Intelligent Stop Start (iSS) is performed on the engine. The time period from the engine cold start ignition to the time for the exhaust after-treatment system to reach its high efficiency operating temperature (i.e., "Light-off Time") is greatly reduced from the minute level to the second level, and the pollutant emission can be reduced by more than 80% compared with that of the traditional diesel engine heavy duty truck during cold start. During cold start of the traditional diesel engine heavy duty truck, the gear is engaged and the vehicle starts to run only after the vehicle is parked to warm up the engine at idle speed for several minutes (i.e., warm-up time). The warm-up time of the SCR part of the exhaust after-treatment system for parking warm-up during clean cold start (CCS) of the ACE heavy duty truck should be less than the warm-up time of the traditional heavy duty truck. Neither the driving motor 140 nor the driving motor 170 works within the warm-up time during parking of the ACE heavy duty truck. The AC terminal of the inverter 122a or 122b with 100 kW level power ratings contained in the ePSD 123 can be temporarily utilized to supply power to the onboard Electrically Heated Catalyst (EHC) at the level of tens of kilowatts. The EHC is not required for electric heating during hot start of the engine.

For most domestic engines and key power assembly component suppliers with insufficient technological accumulation, the Limits and Measurement Methods for Emissions from Light-duty Vehicles (China VI) coming into force in China in 2021 for heavy duty diesel trucks are huge technical and business challenges. On the premise of ensuring that the complete vehicle when leaving the factory reaches and continuously meets the requirements of China VI, especially the warranty period of the 700,000 km for the discharge system, the technical performance requirements of the diesel engine used by the ACE heavy duty truck of the present disclosure are much lower or relaxed than the general technical requirements of traditional heavy duty diesel trucks after dimensional reduction from surface condition to point condition or line condition. There are many feasible high cost effectiveness technologies, which provides another new field for survival and development of broad heavy duty truck powertrain and key component suppliers in China in the later period of China VI.

The power of the motor is directly proportional to the product of its speed and torque, and the volume, weight and cost of the motor have positive association with its maximum torque. Hybrid or electric passenger vehicles (with a gross weight of less than 3.5 tons) mostly use motors with a high speed (with peak value of greater than 12,000 rpm) and a low torque (with peak value of less than 350 Nm); hybrid heavy duty trucks usually use motors with a low speed (with peak value of less than 3000 rpm) and a high torque (with peak value of greater than 1,500 Nm). Both the output power of the motor I with the speed of 1,200 rpm and peak torque of 2000 Nm and that of the motor II with the speed of 12,000 rpm and peak torque of 200 Nm are 251 kW. However, the volume, weight and cost of the motor I are significantly higher than those of the motor II. Compared with the applications of passenger vehicles, the heavy duty truck has less restrictions on the volumes and weights of its motor and other subsystems, but both are very sensitive to cost. The annual production and sales of passenger vehicles are more than 10 times higher than those of heavy duty trucks. Currently, all power ratings of high-speed and low-torque motors used in new energy passenger vehicles are less than 180 kW, and the cost is obviously decreased year by year. The low-speed and high-torque large motors with the power rating up to more than 250 kW used in hybrid commercial vehicles (with a gross weight of more than 15t) will still be expensive in the next decade. If the hybrid heavy duty truck keeps close to the requirements of new energy passenger vehicles in terms of model selection of three major electronic systems (motor, battery and electric control), it will be in favor of cost reduction and quality and supply guarantee for the supply chain of the three electronic systems of the hybrid heavy duty truck year by year by making full use of the scale effect of new energy passenger vehicles.

Preferably, for the embodiment in Figure 1, the standard alternator (MG1) 110 is a permanent magnet synchronous motor (PMSM), and the rated power is 150-250 kilowatts; and the AC induction motor or reluctance motor meeting the above rated power requirements can also be selected. The standard main driving motor (MG2) 140 can be selected from a permanent magnet synchronous motor (PMSM), AC asynchronous motor or switched reluctance motor with rated power of 200 kW to 320 kW. The optional auxiliary driving motor (MG3) 170 can be selected from a permanent magnet synchronous motor (PMSM), AC asynchronous motor or switched reluctance motor with rated power of 150 kW to 250 kW. The ACE heavy duty truck can still work normally when the power ratings of the three motors (110, 140 and 170) exceed the above preferred parameter range respectively in various embodiments in Figure 1. The motor cost, volume and weight are reduced when the rated power is lower than the preferred lower limit, but the power and fuel saving ratio of the vehicle will also be significantly degraded; the power and fuel saving ratio of the vehicle are improved when the rated power is higher than the upper limit, but the motor cost, volume and weight are significantly increased.

The electrical power split device (ePSD) 123 shown in Figure 2 is an electronics network with three ports and 100 kW level power rating, wherein the power electronics network comprises at least two insulated gate bipolar transistor (IGBT) or silicon carbide (SiC) power module, but can exclude any power source or electric energy storage device. Various power electronics circuit topology designs are available to achieve the input/output characteristic and various system functions of the three-port network. It should be noted that the invention is not aimed at limiting the implementation of specific circuit topology of the three-port network comprising the IGBT or SiC module, rather, all power electronic circuit topology designs capable of realizing the core input/output functions of the ePSD in the invention should be within the range of the invention. In view of the integrated design flexibility of the power electronics modules, the inverters 121, 122a & 122b and the choppers 132a & 132b inside the ePSD123 can be either integrated in one metal box, or distributed in multiple metal boxes, and packaged and arranged in a decentralized way in order to improve the system performance and/or reduce the cost. At present, IGBT is the most cost-effective global mainstream automotive-grade power electronic power module. The SiC module is a rising star with better performance but higher cost in the near future. Its commercial proportion will increase year by year. The IGBT modules mentioned in the invention can generally refer to various industrialized power electronic power modules, including IGBT or SiC.

In the embodiment shown in Figure 2, the AC port of the inverter 121 connected in the port I of the ePSD is connected with the three-phase AC output end of the external generator (MG1) 110 bidirectionally and electrically; the AC port of the inverter 122a connected in the port II is connected with the three-phase AC output terminal of the external main driving motor (MG2) 140 bidirectionally and electrically, and the AC port of the inverter 122b is connected with the three-phase AC output end of the external auxiliary driving motor (MG3) 170 bidirectionally and electrically; one end (the end with lower DC voltage) of the chopper 132a connected in the port III is DC-connected with the external battery pack 130a bidirectionally and electrically; and one end (the end with lower DC voltage) of the chopper 132b is DC-connected with the external battery pack 130b bidirectionally and electrically. The DC ends of all the inverters (121, 122a, 122b) are DC-connected to the DC bus junction X of the ePSD bidirectionally, and the other ends (generally the ends with higher DC voltage) of all the choppers (132a, 132b) are also DC-connected to the DC bus junction X of the ePSD bidirectionally and electrically. One end of the 100 kW level electronic soft switch 133 is connected with the junction X unidirectionally and electrically, and the other end is connected with the external 100 kW level brake resistor 131 with radiator electrically. The DC end of the 10 kW level inverter 134 is connected with the DC bus junction X bidirectionally and electrically, and the AC end of the 10 kW level inverter 134 is connected with the external AC switchboard 135 bidirectionally and electrically.

When the rated voltage $V_{bp}$ of the battery pack 130a or 130b is equal to the rated voltage $V_{bus0}$ of the DC bus of the ePSD, it is considered that the chopper 132a or 132b is omitted in order to simplify the system and reduce the cost, and the battery packs are directly connected to the junction X bidirectionally and electrically. However, the rated voltage of the battery packs must be equal to the rated voltage of the DC bus, and the battery pack will lose the function of flexibly and actively adjusting the 100 kW level transient charge-discharge power; moreover, ePSD 123 also loses the capability of flexibly matching various battery packs with high cost effectiveness and different rated voltages through software definition (on-site or OTA remote iteration). It is a suboptimal option.

The DC bus junction X in the ePSD of the present disclosure is the power nerve center of the ACE heavy duty truck mixed hybrid powertrain. The only time-varying function of DC voltage at this junction and a set of all time-varying functions of DC current to and from the junction mathematically describe the dynamic working state of the electric power circuit of the ACE heavy duty truck completely and accurately, which point is the key point of energy saving, emission reduction and safety control of ACE heavy duty truck operation. The junction X is a point on circuit topology, but it may be a metal busbar or a section of multi-joint high-power cable in physical implementation.

The ePSD 123 can realize accurate and continuously adjustable dynamic distribution of the 10 millisecond level response time and 100 kW level electric power among its three ports through digital control over several major power electronic function modules (inverter 121, 122a & 122b, 134; choppers 132a & 132b; soft switch 133) to dynamically match the time-varying function of Road Load Power $P_v$ in the vehicle running process and satisfy the vehicle dynamics equation (1-1) in real time. Thus, the clutch 111 and ePSD 123 are jointly controlled by the VCU 201 and AIU 202, enabling smooth switching between the two different working modes: series hybrid and parallel hybrid; and the fuel consumption and emissions of the engine are optimized (i.e., minimized) on the premise of meeting the vehicle driving power performance, safety and freight timeliness. The frequency of switching between the series hybrid mode and parallel hybrid mode of the vehicle is low under the application scenarios of long haul logistics for the ACE heavy duty truck.

Optionally or additionally, the ePSD 123 can be further provided with a plurality of sensors and memories so as to measure and record a time sequence of dynamic voltage $V_{bus}(t)$ and currents $I_g(t)$, $I_m(t)$ and $I_b(t)$ at the DC bus junction X at the measuring frequency higher than 10 Hz, and the data of the sensors and the memories is regarded as a part of the fuel saving data set, and uploaded to the cloud computing platform 001 for storage through the vehicle-mounted wireless communication gateway 210 in time for subsequent analysis and processing. The following is the detailed description of the implementation mode of the fuel saving data set.

It is known that the electric power equilibrium equation at the DC bus junction X in the ePSD 123 is: $P_g+P_b+P_m=0$ (4-1). Where, $P_g \in [ -P_{igx}, P_{igx} ]$, $P_b \in [-P_{bx}, P_{bx}]$, $P_m \in [-P_{imx}, P_{imx}]$. Pigx is the peak power of the inverter 121, $P_{bx}$ is the total peak charge-discharge power of the main battery pack 130a and the auxiliary battery pack 130b, $P_{imx}$ is the total peak power of the inverter 122a and 122b, $P_{bx}>P_{imx}> P_{igx}$. $P_g$ is the electric power of the generator (MG1) 110, $P_{gx}$ is its peak power ($P_{igx} > P_{gx}$), the positive value is the driving power (electric energy into mechanical energy), and the negative value is the generated power (mechanical energy into electric energy). $P_b$ is the battery power, the positive value is charging power (electric energy into chemical energy), and the negative value is discharge power (chemical energy into electric energy). $P_m$ is the electric power of the driving motor (MG2) 140, $P_{mx}$ is its peak power (Pimx > $P_{mx}$), the positive value is the driving power (electric energy into mechanical energy), and the negative value is the regenerative braking power (mechanical energy into electric energy, recovered energy). In the present disclosure, the peak power is the maximum continuous mechanical power for the engine unless specially noted; the peak power refers to the maximum pulse electric power in 10 or 15 seconds for the motor, inverter, chopper or battery pack.

The embodiment of the invention is described by focusing on the scenario in which there are only the standard main driving motor (MG2) 140 and main battery pack 130a. If the ACE heavy duty truck system also comprises the optional auxiliary driving motor (MG3) 170 and/or the auxiliary battery pack 130b, it is easy for ordinary technicians in the industry to extend the description. It is preferred to engage the clutch 111 to realize the parallel hybrid mode for the ACE heavy duty truck under high speed conditions (the average speed is above 50 km/h, with few active acceleration or braking); it is preferred to disengage the clutch 111 to realize the series hybrid mode under urban/suburban conditions and on congested highways (the average speed is below 45 km/h, with frequent active acceleration or braking). For vehicle driving safety and power considerations, the parallel hybrid mode is preferred regardless of average speed when the ACE heavy duty truck is climbing a large upslope or going uphill (the absolute value of longitudinal slope is greater than 2.0 degrees, the continuous uphill or downhill journey is more than 10 km). In the application scenario of long haul logistics, nearly 90% of mileages are high speed conditions, and the clutch 111 of the ACE heavy duty truck for long haul logistics does not need to be switched frequently. Thanks to the dual motors (MG1 and MG2), neither obvious interruption of driving torque nor a sense of vehicle frustration will occur to the vehicle powertrain in the transient state of switching between engaged and disengaged states of the clutch 111. Various subdivision working modes are also available for the ACE heavy duty truck in the series hybrid mode (A) or parallel hybrid mode (B). The two modes are briefly described below.

- In the series hybrid mode (A), the clutch 111 is disengaged and the vehicle is electrically driven, and at this time $P_m = P_v$.
- Working mode A-1: The vehicle is static, $P_m = P_v = 0$, $P_g + P_b = 0$, the engine 101 drives the generator 110 to charge the battery packs 130a & 130b through the ePSD 123.
- Working mode A-2: The vehicle is running on a flat road, $P_g + P_b + P_m = 0$. When $|P_g| > P_m > 0$, the generator 110 first supplies power to the driving motor 140 to provide the power required by the vehicle, and charges the battery packs 130a & 130b with the remaining electric power. When $|P_g| < P_m$, the generator 110 and the battery pack 130a need to supply power to the driving motor 140 simultaneously, and then the power requirements of the vehicle can be met. If the fuel saving needs to be maximized, the engine 101 should work at several specified high efficiency condition points (constant torque/speed) stably for a long time, or the engine works at the non-combustion idle point. By dynamically adjusting the 100 kW level electric power through the ePSD 123, $P_b$ can follow the real-time inverse change of $P_m$, and maintain $P_g$ as a constant ($P_g(t) = -P_m(t)-P_b(t)$) on the premise of meeting the vehicle power requirements at all times. In other words, the VCU 201 can be used for stably setting the working point of the engine 101 to be at the high efficiency point where the specific fuel consumption (g/KWH) is minimum for a long time, and commanding the electrical power split device (ePSD) 123 to precisely regulate the direction and value of charge and discharge power of the battery packs 130a & 130b in real time for peak load shifting, so as to offset the transient change of the power of the driving motors 140 and 170 and achieve the objective of fuel saving. If the vehicle is going uphill or climbing a large upslope (with the longitudinal slope of more than +2.0 degrees and the slope length of more than 10 km), the parallel hybrid mode is preferred, while the series hybrid mode is a second-best choice. Since the total capacity of the battery packs 130a & 130b is limited, the battery packs may be run off in the Charge Depleting working mode and temporarily lose the ability to continue to provide upgrade power assistance; at the moment, the vehicle can only be directly driven by the generator $P_{gx}$ if it runs in the series hybrid mode, the power is insufficient, the vehicle fails to constantly reach the road load power $P_v$ for running uphill at constant speed, and the vehicle cannot continue to go up a slope until it is shifted into a lower gear and slowed down. At the moment, the power and freight timeliness of the ACE heavy duty truck are reduced momentarily. The ACE heavy duty truck for long haul logistics will not encounter large and long slopes on most highways. For ACE heavy duty trucks which often run on highways in mountainous areas, installation of one or more power type auxiliary battery packs with a capacity of more than 10 KWh may be considered to improve the power performance of the vehicles which often work in the scenario of going up a long slope at high speed under heavy loads.
- Working mode A-3: When the vehicle runs on a downhill, the engine can be shut down, and the electric power output $P_g$ of the engine is zero; at the moment, the grade power item $P_{gd}$ is negative, and the longitudinal slope power part exceeding the power $P_r + P_d$ for driving the vehicle can be absorbed through the regenerative braking function of the driving motors 140 and 170 and used for charging the battery packs 130a & 130b. At the moment, the vehicle runs downhill, and can reach the maximum speed allowed by laws for making up for part of lost time taken by the vehicle speeding down on an upslope. When the vehicle runs on a large downhill, the regenerative braking of the driving motors will fully charge (SOC approaches 100%) all battery packs when the vehicle is on the way down the slope. At the moment, the high-power power electronic switch (SS) 133 in the ePSD 123 three-port Power Electronics Network is on, the choppers 132a & 132b disconnect the battery packs 130a & 130b, switch the charging current generated by regenerative braking of the driving motor 140 to the 100-kilowatt-class brake resistor 131 with radiator, and the electric energy is changed into heat energy and consumed to realize the retarder function of the ACE heavy duty truck (non-mechanical braking). At the moment, the inverter 121 can also drive the motor 110, take the in-cylinder braking function of the engine 101 as the effective load of the motor 110, consume the excess regenerative electric energy from the main driving motor 140 to realize the retarder function, and provide redundant load for the high-power brake resistor 131.

In the series hybrid mode, the Intelligent Stop Start (iSS) is preferably performed on the transient output power of the engine 101, and the sequence cycle value of PWM preferably ranges from 1 minute to 3 minutes. The time average power amplitude of the engine can be continuously adjusted by adjusting the duty cycle of the PWM sequence.

The ACE heavy duty truck in Figure 1 can realize the parallel hybrid mode by engaging the clutch 111. In the parallel hybrid mode, the mechanical driving power of the engine 101 and the electric driving power of the dual motors 110 and 140 can be directly superimposed, and at this time, the total driving continuous power of the ACE heavy duty truck powertrain can be higher than 500 kW, and its power performance (overtaking capability on flat roads or full-load high-speed climbing capability) is significantly better than that of the traditional 15L diesel heavy duty truck with large displacement and top level configuration, and the peak value of the total driving power is limited by the bearing capability of the transmission and the transmission shaft. The total capacity of the battery packs 130a & 130b carried on the ACE heavy duty truck generally ranges from 25 kWh to 85 kWh, which can support the high power electric driving of the vehicle for 15-40 km. Ordinary technicians in the industry are familiar with various typical working modes of parallel hybrid vehicles, which will not be repeated one by one.

The electric energy recovered by regenerative braking of the battery packs 130a & 130b is "quasi zero cost electric energy", while the electric energy provided by the generator 110 driven by the engine 101 is "high cost electric energy". The key to fuel saving control for the ACE heavy duty truck is to, on the one hand, continuously improve the total charge turnover rate of battery packs 130a & 130b throughout the freight time, and to, on the other hand, maximize the charge turnover rate of regenerative braking while minimizing the charge turnover rate of the engine. The turnover rate is defined as the ratio of the total accumulated charge throughput of the battery packs 130a & 130b to the effective capacity of the battery packs throughout the freight event (from the starting point to the finishing point).

The VCU 201 of the ACE heavy duty truck and the AIU 202 jointly perform pulse-code modulation (PCM) on the transient output power of the engine 101 according to the road 3D information (longitude, latitude, longitudinal slope and the like) within the 100 km level electronic horizon ahead, the predictive adaptive cruise mode (fuel saving mode Eco, normal mode N, high-performance mode P) selected by the driver, actual road conditions and vehicle configuration parameters and operation data. More specifically, the vehicle uses the Intelligent Stop Start (iSS) in the series hybrid mode and uses the Intelligent Power Switching (iPS) in the parallel hybrid mode to continuously adjust the minute level time average output power of the engine 101; the battery packs 130a & 130b are enabled to operate stably in one of the Charge Depleting (CD), Charge-Sustaining (CS) and Charge-Increasing (CI) modes and smoothly switch among the three modes, making it possible to charge and discharge the battery packs whenever we like, power is supplied to the driving motor 140 or 170, and peak load shifting is performed on the total vehicle driving power to meet the vehicle dynamics equation 1-1 in real time; the machine learning fuel saving control algorithm in the AIU 202 can automatically seek to maximize the turnover rate of the regenerative braking charge at a near-zero cost throughout the freight event, while effectively controlling the charge turnover rate of the high-cost generator unit to realize the beneficial effect of minimizing the actual overall fuel consumption and pollutant emission on the premise of ensuring the vehicle power performance and active safety of driving.

The power type battery packs 130a & 130b are one of the most expensive subsystems in the ACE heavy duty truck, and they are often one of the weaknesses in performance and life in various important subsystems of the complete vehicle. The three major problems of cost, performance and life of the power type battery pack must be simultaneously solved in order to realize the large-scale commercial use of the ACE heavy duty trucks. The technical requirements for battery cell and battery pack of ACE heavy duty trucks are obviously different from those of hybrid passenger vehicles. The requirements for weight or volume and the like are less strict, but the requirements for resistance to high and low temperatures and vibration, especially for the cycle life under the high-rate charging and discharging (HRPSoC) condition and the like, are higher. The ACE heavy duty truck needs to be provided with the power type battery pack with super long cycle life, low temperature resistance, high safety and high cost effectiveness; its battery cell must withstand 5C-10C rate of continuous charge-discharge and 10C-25C rate of peak charge-discharge (10s or 15s pulse) in the case of partial charge-discharge (e.g. SoC 25%~80%); the battery cell should work under the most challenging high rate partial charge-discharge (HRPSoC) condition for a long time, and its charge rate is often higher than the discharge rate; the working environment temperature outside the vehicle is -30°C~+55°C; the equivalent deep charge-discharge (DoD 100%) cycle life is more than 12,000 times. The battery pack shall be able to work normally after the vehicle is turned off for 24 hours outdoors at -30°C in cold winter and the engine 101 is cold started, within three minutes of warm-up at idle speed in place, and after the vehicle is started to run; at the moment, the charge and discharge ability of the battery pack is allowed to be temporarily reduced. When the internal temperature of the battery cell rises to 10°C, the full charge and discharge ability is restored. However, the battery cell is not allowed to be damaged due to low temperature and high rate charging, or even lead to the major hidden danger of thermal runaway of the battery cell.

Mainstream lithium-ion power cells, such as lithium iron phosphate (LFP) and ternary lithium (NCM or NCA), are generally protected against cold. When the cell temperature is lower than 0°C, the high rate discharge ability above 2C of the cell decreases obviously. The low-temperature discharge does not damage the cell; however, charging at low temperature (especially below 0 degree Celsius) in the battery cell with the high rate of above 2C easily causes Lithium Plating on the negative electrode of the cell and serious damage to the cell life. The damage mechanism is that the metallic lithium dendrites of the negative electrode puncture the diaphragm, which results in a short circuit in the cell and leads to the hidden danger of thermal runaway. The battery management system (BMS) will monitor the temperature of the battery cell in real time. It is forbidden to charge the battery cell at high rate at low temperature. It is difficult for the LFP, NCM or NCA mainstream automobile power cell to undertake the important mission of the ACE heavy duty truck battery pack alone.

The lithium titanate oxide (LTO; positive ternary lithium/negative lithium titanate oxide) cell is currently the only mass-production automobile power cell that can fully meet all technical requirements of the ACE heavy duty truck. After comparing the several mainstream lithium-ion cells mentioned above, LTO has the disadvantages of low specific energy (less than 65 wh/KG) and high cost ($/KWh four times more than LFP). There is no need to worry about the disadvantage of low specific energy of LTO and large volume because the ACE heavy duty truck has no arrangement limitation on the volume and weight of the battery pack only with a total capacity of dozens of KWH; however, the disadvantage of high cost may seriously affect the mass commercial use of ACE heavy duty trucks. By mixing and matching LTO main battery pack 130a (with a capacity of 10-20 kWh) and the low-cost LFP or NCM auxiliary battery pack 130b (20-50 kWh), the cost effectiveness of ACE heavy duty truck system can be optimized according to the specific application scenarios of the ACE heavy duty truck 010. The LTO main battery pack 130a can be involved in work immediately after cold start of the vehicle parked outdoors for a long time in winter (below minus 10 degrees Celsius); the auxiliary battery pack 130b of LFP or ternary lithium is controlled by the chopper 132b and not involved in work temporarily. After the internal cell of the auxiliary battery pack 130b is heated to above 10°C after the vehicle runs for more than ten minutes, the auxiliary battery pack 130b is involved in work. The battery packs 130a & 130b are the most expensive subsystems in the ACE heavy duty truck. Mixing and matching two or more battery packs with different electrochemical cells is good for improving the overall performance of battery packs, reducing the total cost of battery packs and crucial to optimize the comprehensive cost effectiveness of the ACE heavy duty truck. Through pulse-width modulation (PWM), the chopper 132a or 132b can adjust the charge-discharge current value of the battery pack 130a or 130b dynamically and continuously according to the charge-discharge curve and various protective limitations of the battery cell at different temperatures.

The single cell voltage of the LTO is only 2.2V, which is lower than the single cell voltage 3.3V of the LFP and the single cell voltage 3.7V of the NCM. Compared with a battery pack of a structure with low rated voltage and more cells connected in parallel and less cells connected in series, battery pack of a structure with high rated voltage, more cells connected in parallel and less cells connected in series and the same capacity is complex in design and control of the battery management system (BMS), high in material and manufacturing cost of the complete battery pack, and poor in system redundancy and robustness. Mixing and matching two or more battery packs with at least two different electrochemical cells connected in parallel is good for improving the cost effectiveness of the ACE heavy duty truck system. At present, the rated voltages of the Li-ion power battery packs used in global mainstream new energy passenger vehicles range from 300V to 500V. There is a mature supply chain. The total annual production and sales of automotive-grade Li-ion power batteries of more than ten leading manufacturers in China, Japan and South Korea accounts for more than 85% of the global market share, while the annual production of battery packs with a voltage rating higher than 600V is less, and the cost is higher. The peak electric power of the ePSD 123 of the present disclosure is up to 500 kW, and the preferred range of rated voltage of the DC bus is 600 V-800 V. The preferred rated voltage value of the battery packs (130a & 130b) used in the invention is between 350V and 500V, as far as possible to coincide with the rated voltage range of the battery packs used in popular new energy passenger vehicles with the huge annual total production and sales to facilitate making full use of the mature power battery supply chain of the new energy passenger vehicles nowadays, reducing the cost and guaranteeing the supply. These battery packs 130a or 130b can match the voltage rating of the ePSD 123 DC bus through the 100 kW level bidirectional Boost-Buck DC-DC converter (Boost-Buck, also called the chopper) 132a or 132b in the port III of the ePSD 123. In addition to DC voltage transformation, the chopper (132a & 132b) has another beneficial function of regulating the charge-discharge current amplitude and direction of the battery packs 130a & 130b automatically and accurately through pulse-width modulation (PWM) within 0%~100% of the charge-discharge current peak value according to the charge-discharge characteristic curves of various battery cells at different temperatures or in different life cycle stages as well as the manufacturer's various limitations on the operating conditions for life and safety protection of the battery cell through the software definition and remote update iteration (OTA) of the microprocessor contained in the chopper (132a & 132b) to ensure that both the performance and life of the battery pack meet the design requirements in the full life cycle.

Preferably, the main battery pack 130a can adopt a combination of lithium titanate oxide (LTO) cells with the capacity of 12 KWh~30 KWh, and can be charged and discharged for 5C~10C continuously; the peak charge-discharge current is 15C-30C in 10 or 15 seconds, and the equivalent deep charge-discharge (100% DoD) life (i.e., the accumulated total power throughput in the full life cycle) exceeds 12, 000 times; and the outdoor working environment temperature is -30~+55°C. Among known commercialized automotive power cells of various electrochemical formulations, only a set of lithium titanate oxide (LTO) cells can meet the above strict requirements, especially the requirements of ultra-long cycle life. The disadvantage of low specific energy (Wh/KG) of LTO cells has little effect on the application of ACE heavy duty trucks, but the cost (yuan/Wh) of the cells per kilowatt-hour (KWh or degree) is above three times the cost of other mainstream automotive lithium ion cells (such as LFP, NCM, NCA), which will lead to high cost of LTO battery packs and seriously limit the wide application of ACE heavy duty truck. The following power cells, such as NiMH battery, LFP battery, NCM/NCA battery or PbC battery, suitable for HRPSoC applications in severe working environment can be further selected. Two sets of such four kinds of cells may be required for meeting the requirements of the (100% DoD) ultra-long cycle life exceeding 12 thousand times. And the costs (yuan/Wh) for the four kinds of cells are all obviously lower than that of the lithium titanate oxide (LTO) cells. The parallel hybrid collocation of battery packs of the above several kinds of cells with different electrochemical components can be taken into consideration, as shown in Figure 2, and the gross capacity of the battery packs (130a and 130b) is increased to 50 KWh~95 KWh so as to achieve the optimal cost effectiveness of the battery pack within the whole life cycle of ACE heavy duty trucks.

Preferably, the auxiliary battery pack 130b can adopt mainstream lithium ion power type cells (continuous charge-discharge 3C+) with the capacity of 20 KWh~60 KWh, such as lithium iron phosphate (LFP) or ternary lithium (NCM or NCA). Of course, an auxiliary battery pack with a capacity of larger than 80 KWh can be also selected, which is in favor of improving the power performance of the complete vehicle and reducing the upper limit value and the charge-discharge rate peak of the equivalent cycle life of the battery pack, but the weight, volume and cost of the large battery pack are all obviously increased, the overall cost effectiveness is not optimal, and comprehensive consideration is required. In the present disclosure, the function of the battery pack is like a high-power engine with a small fuel tank, which has the characteristic of extremely high explosive power but insufficient endurance. The battery pack 130a & 130b can be used for not only providing the 100-kilowatt level rated electric power of the driving motor (140 or 170) for a long time (more than 10 minutes) continuously, but also providing the peak electric power of the driving motor above 300 kW within a short time (at the minute level). Provided that the total available capacity of the battery pack is 30 KWh, and the rated power of the driving motor is 300 KW; with zero power output from the generator set in the series hybrid mode, the battery pack is continuously discharged at 10C from the upper red line (URL) of its state of charge (SoC) to the lower red line (LRL), the driving motor can be continuously supplied with power at the intensity of 300 KW for 6 minutes to allow the electric driving of the fully loaded (with a gross weight of 40 tons) ACE heavy duty truck on a smooth and non-congested highway at the speed of 90 km/h for nearly 10 km.

The ACE heavy duty truck is provided with the power type battery pack that needs to support the charge-discharge demand of the driving motor for total continuous power of nearly 200 KW or 10-second peak power of nearly 400 KW. When the preferred effective capacity of the battery pack ranges from 25 KWh to 65 KWh, the average continuous charge-discharge rate of the battery pack ranges from 3C to 8C, the 10-second peak charge-discharge rate ranges from 6C to 16C, and the charge rate (continuous or peak charge rate) of the battery pack is often higher than the discharge rate. To achieve the goal of accumulated fuel saving by 30% during the operation for a distance of 500,000 miles compared with the traditional diesel heavy duty truck, the equivalent accumulated charge throughput of the battery pack of the ACE heavy duty truck in the full life cycle (500,000 miles) should be up to 300,000 KWh. If the battery pack with an effective capacity of 30 KWh in the beginning of life (BOL) is used, the equivalent depth charge-discharge (100% DoD) cycle life of the battery pack should be up to 12,000 times considering that the capacity of the battery pack is decreased by 20% at the end of life (EOL). The requirements of the battery pack of the ACE heavy duty truck for the performance and life of the battery cell are significantly higher than those of the new energy passenger vehicle for the battery cell. Subject to the current industrial development level of automotive-grade Li-ion battery cells in the world, the actual charge-discharge conditions (SoC, voltage, charge-discharge current rate, temperature and the like of the battery cell) of the battery pack of the ACE heavy duty truck should be controlled continuously and carefully to ensure that the performance of the battery pack reaches the standard and the life is ultra-long.

In order to achieve an ultra-long life of the power type battery pack, the state of charge (SoC) of all the cells of the battery pack must be controlled strictly under the high-rate partial state of charge (HRPSoC) condition. The upper red line (URL) of the state of charge (SoC) of the power type cell is generally between 80% and 90%, the lower red line (LRL) is generally between 10% and 20%, the best upper limit (BUL) is between 65% and 75%, and the best lower limit (BLL) is between 30% and 40%. The performance, safety and cycle life of all cells are optimal when the SoC of the battery pack works between the best lower limit (BLL) and the best upper limit (BUL). If the high rate charge-discharge is continued beyond the red line range of the SoC of the battery pack, it will have a serious long-term negative impact on the transient performance, safety and cycle life of the battery cell.

The battery pack of the ACE heavy duty truck can work in three different modes: 1) In the Charge-Sustaining (CS) mode, both the transient SoC and minute-level time average SoC of the battery pack are always maintained to continuously change between the best upper limit (BUL) and the best lower limit (BLL) of the battery pack. 2) In the Charge Depleting (CD) mode, both the transient SoC and minute-level time average SoC of the battery pack are always maintained to continuously change between the upper red line (URL) and the lower red line (LRL), and the minute-level time average SoC value of the battery pack continues to decline over time. 3) In the Charge-Increasing (CI) mode, both the transient SoC and minute-level time average SoC of the battery pack are always maintained to continuously change between the upper red line (URL) and the lower red line (LRL), and the minute-level time average SoC value of the battery pack continues to increase over time.

For the ACE heavy duty truck 010 in the series hybrid mode (with the clutch 111 disengaged) or parallel hybrid mode (with the clutch 111 engaged), the VCU 201 and the AIU 202 jointly perform Intelligent Stop Start (iSS) or Intelligent Power Switching (iPS) on the transient output power of the engine 101 according to the vehicle parameter configuration, operating condition, transient road load power and three-dimensional information (especially the longitudinal slope function) of the road within the range of electronic horizon to continuously adjust the time average value (e.g., rolling time average in five or ten minutes) of the engine output power. The continuous operation of the vehicle in any one of the above-mentioned three charge modes (CS, CD, CI) and the smooth switching between the modes can be realized by controlling the 100 kW-level dynamic distribution of electric power among the tree ports of the ePSD 123. In the Charge-Sustaining (CS) mode, the minute-level time average output power of the engine 101 is basically equal to the minute-level time average value of the vehicle road load power, the vehicle driving (series or parallel hybrid) is dominated by the engine 101, the battery pack 130a or 130b supplies power to the driving motor 140 or 170 to realize peak load shifting on the transient road load power and meet the vehicle dynamics equation (1-1) in real time. In the Charge Depleting (CD) mode, the minute-level time average output power of the engine is obviously less than the minute-level time average value of the vehicle road load power, the vehicle driving (series or parallel hybrid) is supplemented by the engine 101, the driving motor 140 or 170 is mainly supplied with power by the battery pack 130a or 130b to realize peak load shifting on the transient road load power and meet the vehicle dynamics equation (1-1) in real time. At this time, the minute-level average value of the SoC of the battery pack continuously declines over time. In the Charge-Increasing (CI) mode, the minute-level time average output power of the engine is obviously greater than the minute-level time average value of the vehicle road load power, the vehicle driving (series or parallel hybrid) is dominated by the engine 101 and supplemented by peak load shifting of the driving motor to meet the vehicle dynamics equation (1-1) in real time. Most of the mechanical power of the engine is used directly used for driving the vehicle in the parallel hybrid mode or indirectly used for driving the vehicle in the series hybrid mode, and the remaining mechanical power is used for continuously charging the battery pack 130a or 130b through the alternator 110, thereby ensuring that the SoC minute-level average value of the battery pack continuously rises over time.

There are two types of electric energy stored in battery packs 130a & 130b, one is the "engine charge" generated by the alternator 110 driven by the engine 101, which is "high cost electric energy"; the other is the "regenerative braking charge" generated by the regenerative braking and energy recovery of the driving motor 140 and 170, which can be regarded as "quasi-zero cost electric energy". To minimize the overall fuel consumption of the ACE heavy duty truck in each transportation event, the electric energy (i.e., charge) in the battery pack (130a or 130b) needs to be discharged and charged whenever we like to improve the accumulated throughput capacity or turnover rate of charge of the battery pack. The core of the fuel saving strategy for the ACE heavy duty truck is to dynamically adjust the mechanical power flow and electric power flow of the vehicle through SAE L1 predictive adaptive cruise control (PAC) by making full use of the a priori three-dimensional data of the road in the electronic horizon and the 100 kW level longitudinal slope power brought by the longitudinal slope change along the road on the premise of ensuring the power performance and active safety of the vehicle to meet the vehicle dynamics equation (1-1) in real time. The hybrid vehicle continuously switches among the three modes of Charge-Sustaining (CS), Charge Depleting (CD) and Charge-Increasing (CI), seeks to maximize the accumulated regenerative braking charge throughput or turnover rate of the battery pack while minimizing the accumulated charge throughput or turnover rate of the engine to achieve the best fuel saving effect.

When the battery pack 130a & 130b are discharged, driving power is supplied to the ACE heavy duty truck 010 through the driving motors 140 and 170, and when charging, the energy is recovered through the regenerative braking of the driving motors 140 and 170. In the parallel hybrid mode (clutch 111 is engaged and locked), the alternator 110 can also contribute to regenerative braking to recover energy, which can further increase the regenerative braking charge throughput and improve the fuel saving effect. When the ACE heavy duty truck is climbing a long slope and the battery packs 130a & 130b are basically exhausted (SoC approaches 0%), the power performance of the vehicle at this time depends entirely on the peak power of the engine 101. If the peak power of the engine 101 is not large enough, it has to shift to a lower gear to speed down and continue to climb the slope, temporarily reducing the power performance and freight timeliness of the vehicle. The alternator 110 and/or the driving motors 140 & 170 can have a chance for charging the battery packs 130a & 130b by regenerative braking again until there is a level road or downslope ahead of the vehicle considered.

In the next 20 years, the annual cost effectiveness improvement rate of power electronic power module based on silicon IGBT or silicon carbide (SiC) MOSFET will be significantly higher than that of motors or battery packs. Continuously refer to Figure 2, priority should be given during the design of several 100 kW-class power electronic power modules of the ePSD 123 (the port I is internally connected with the inverter 121 of the standard generator 110, the port II is internally connected with the standard main inverter 122a and the optional auxiliary inverter 122b, the port III is internally connected with the soft switch 133, the standard main chopper 132a and the optional auxiliary chopper 132b and the like) to leave adequate room in the function and performance of power electronic hardware (Over-design) in order to improve the existing performance and functions of each subsystem or add new functions through the software remote upgrade iteration (OTA). The peak power $P_{igx}$ of the inverter 121 should be nearly 20% higher than the peak power $P_{gx}$ of the generator 110, the peak power $P_{imx}$ of the main inverter 122a should be nearly 15% higher than the peak power $P_{pmx}$ of the main driving motor 140, and the peak power of the auxiliary inverter 122b should be nearly 20% higher than the peak power Psmx of the auxiliary driving motor 170, $P_{pmx} > P_{smx}$. The sum of the peak power of main chopper 132a and the auxiliary chopper 132b should be nearly 30% higher than the peak power $P_{pmx}$ of the main driving motor 140.

Power semiconductor modules such as IGBT or SiC can improve the average cost effectiveness per year more quickly than the battery pack, motor and brake resistor. The continuous innovation and upgrading of the global high-power semiconductor industry can be fully utilized to achieve a cost-effective electrical power split device (ePSD) 123 by using a variety of power electronic circuit topologies. The ePSD 123 with hardware design margin is a software defined electrical power split device from the beginning, and the ePSD can continuously improve and evolve the existing functions or add new functions through remote software upgrade iteration (OTA). With the above modular design strategy, the three ports of the ePSD and external electrical loads such as motors and battery packs adopt standard mechanical and electrical interfaces in the industry, which are convenient and flexible for adapting to various motors and battery packs provided by many high-quality automotive suppliers that meet the performance requirements and target cost; the cost effectiveness of ACE heavy duty trucks can be continuously improved, and the quality and supply can be guaranteed for a long term.

The inverter is the critical part of the MCU. In this disclosure, the inverter shall be understood as follows: there are a variety of mature circuit topologies that are achievable for a complete three-phase AC motor controller with the inverter as the core, so that there is no ambiguity for those skilled in the art. The inverters (121, 122a, 122b) control the speed and torque of the three-phase AC motors (110, 140, 170) in a Vector Control mode accurately, so that the amplitude and flow direction of 100 kW level motor power can be regulated continuously in real time (millisecond-level). The chopper (132a, 132b) is a bidirectional buck boost DC-DC converter (Boost-Buck), the high-voltage side is bidirectionally and electrically connected with the DC bus of ePSD 123, preferably the rated voltage range of the DC bus is 600 V~750 V; the low-voltage side is bidirectionally and electrically connected with the battery packs 130a & 130b, preferably the rated voltage range of the battery pack is 320 V~450 V, the low-voltage side should be close to the voltage platform of the mainstream new energy passenger vehicle as much as possible, and a higher voltage rating range (500 V~700 V) of the battery pack is also optional. The choppers 132a & 132b can not only flexibly match the battery packs 130a & 130b with different rated voltages (320 V~750 V), but also automatically customize and update the charge-discharge control solution for each battery pack through the heavy duty truck program for software definition and remote upgrade iteration (OTA) of the choppers according to the different technical charge-discharge requirements put forward by the power battery supplier for the cells at different internal temperature and states of charge of the cells in order to ensure the performance, safety and cycle life of the cells in the full life cycle. The VCU 201 and AIU202 of the ACE heavy duty truck can command ePSD 123 to regulate three correlative 100 kW level electric power time functions (including generator power $P_g(t)$ with independent variables, driving motor power $P_m(t)$ with independent variables, and battery pack charge/discharge power $P_b(t)$ with dependent variables) continuously in real time according to the fuel saving control strategy to meet the electric power balance equation at the ePSD DC bus junction X at any time:

$$P_m(t) + P_g(t) + P_b(t) = 0. \qquad (5\text{-}1)$$

The electric power balance equation is equivalent to the previous equation (2-2) in the series hybrid mode and the equation (3-2) in the parallel hybrid mode.

Preferably, the standard main driving motor 140 is a permanent magnet synchronous motor, with a rated power range of 200 KW~300 KW, peak power range of 300 KW~450 KW and peak torque range of 1,800 NM - 2,500 NM. The driving motor 140 can be also an AC induction motor or a reluctance motor meeting the power and torque requirements. The peak power of the main inverter 122a shall be more than 15% higher than that of the main driving motor, and a margin is reserved. Since the annual sales of the hybrid passenger vehicles is higher two orders of magnitude than the annual sales of the hybrid commercial vehicles, some core components shared with the commercial vehicles are selected as far as possible, the cost of the hybrid commercial vehicles can be reduced effectively and supply in batch can be assured. The rated power of a single motor and inverter for the electric (hybrid) passenger vehicles is generally lower than 180 KW. An optional permanent magnet synchronous motor (with a rated power of 180 KW~250 KW, maximum torque of 350 NM~500 NM) for large new energy passenger vehicles can also be provided for the driving motor 140. The parallel-axis arrangement may be used, and the permanent magnet synchronous motor is connected with the input shaft of the transmission bidirectionally and mechanically through a reducer with a gear ratio ranging from 4 to 8.

For the 6x2 or 6x4 ACE heavy duty truck system block diagram in Figure 1, a standard engine motor (MG1) 110 is connected bidirectionally and mechanically to the flywheel end of the engine 101 (the so-called hybrid P1 position) and to the end of the clutch 111. The specific mechanical connection structure can be divided into two types: Type I is the single-axis coaxial structure, in which the three (engine, generator and clutch) are connected to the same mechanical transmission shaft. At this time, the speed of the generator 110 is exactly the same as that of the engine 101 (speed ratio 1.0), and the permanent magnet synchronous motor with a rated power of 160 KW~250 KW and a maximum torque of 1,500 NM~2,300 NM can be preferred; Type II is the parallel axis structure (multi-axis), and the three are connected through gears bidirectional and mechanically. At this time, the generator 110 and the engine 101 are connected through gear reducers, and the speed ratio is fixed. The speed of high efficiency area of heavy duty truck engine is generally: 1,000 rpm~1,800 rpm. The engine has a stable low speed and its specific fuel consumption (diesel g/KWh) is the lowest when working under high load. The power of the engine and motor is proportional to the product of its speed and torque. At the same time, the maximum torque of the engine and generator is positively correlated with its volume, mass and price. The use of Type II multi-parallel shaft structure can increase the speed ratio between generator 110 and engine 101 to 3.0-8.0 through the constant speed ratio reducer, so that it is possible to select a high-power permanent magnet synchronous motor in the mature supply chain system of new energy passenger vehicles, which greatly reduces the volume, mass and price of the generator 110 and guarantee the quality and supply. The generator 110 can also be provided with an optional medium-speed (maximum speed 12,000 RPM) automotive-grade permanent magnet synchronous motor with a rated power of 150 KW~250 KW and a peak torque of less than 500 NM.

The standard main driving motor (MG2)140 is connected with the other end of clutch 111 bidirectionally and mechanically (the so-called hybrid P2 position), and is connected with the input shaft of the automatic transmission 150 through the flexible coupler 152 bidirectionally and mechanically. The specific mechanical connection structure can be divided into two types: Type I is the single-axis coaxial structure, in which the three (clutch, generator and transmission) are connected to the same mechanical transmission shaft. At this time, the speed of driving motor 140 is exactly the same as the speed of the transmission 150 input shaft (speed ratio 1.0); Type II is parallel axis structure (multi-axis), and the three are connected through gears bidirectional and mechanically. At this time, the speed ratio of the driving motor 140 and the transmission 150 input shaft is fixed. When the clutch 111 is closed, the output shaft of the flywheel end of the engine 101 and the input shaft of the transmission 150 are bidirectionally and mechanically connected concentrically and coaxially. The speed of the two is the same, and the speed ratio is 1.0. The maximum input torque of the heavy duty truck transmission input shaft is generally less than 2,500NM. The use of Type II parallel shaft structure can increase the speed ratio between driving motor 140 and transmission 150 input shaft to 2.0-6.0 through the constant speed ratio reducer, so that it is possible to select a high-power permanent magnet synchronous motor in the new energy passenger vehicle system, which greatly reduces the volume and price of the driving motor 140. At the moment, the main driving motor (MG2) 140 can be preferably a permanent magnet synchronous motor with a rated power of 175 KW~280 KW. Under Type I structure, the driving motor 140 is a permanent magnet synchronous motor or AC asynchronous motor with a low speed (maximum speed below 3,000 rpm) and a high torque (peak torque above 1,500 NM); under Type II structure, the driving motor 140 is a permanent magnet synchronous motor or AC asynchronous motor with a medium-to-high speed (maximum speed below 12,000 rpm) and a medium torque (peak torque below 500 NM). The latter is smaller in size and mass and cheaper than the former.

The optional auxiliary driving motor (MG3) 170 can be configured between the output shaft of the transmission 150 and the driving axle 160 (the so-called hybrid position P3) or in front of the second driving axle 180 (the so-called hybrid position P3); both are connected bidirectionally and mechanically. The peak torque at the input end of the driving axle of heavy duty truck can be up to more than 20,000 NM. A speed reducer should be installed between the driving motor (MG3) 170 and the driving axle (160 or 180), and the speed ratio range is 5.0-15.0. The permanent magnet synchronous motor or AC asynchronous motor with a rated power of 100 KW~150 KW and peak torque less than 600 NM (Newton meter) are preferred.

In Figure 1, the input end of the transmission 150 is connected with the output end of the main driving motor 140 through the flexible mechanical coupler 152 bidirectionally and mechanically, and the output end of the transmission is connected with a first driving axle 160 bidirectionally and mechanically. Preferably, the heavy duty 5 to 12-speed automatic transmission (AMT-5 ~ AMT-12) with the input end maximum torque of less than 2500Nm is adopted, or the heavy-duty double-clutch transmission (DCT) or the automatic transmission (AT) with a hydraulic torque converter can also be selected. Different from the dynamic characteristic that the torque is smaller at low speed of the engine, the torque of the driving motor is the maximum at low speed, so the forward speed gears 5-8 of the automatic transmission are sufficient, and excessive gears are not required. However, the driving rotation system of the ACE heavy duty truck including the transmission in the present disclosure is not the traditional one-way mechanical power transfer of the traditional engine heavy duty truck but two-way mechanical power transfer, so the design and manufacturing of the main bearings and gears in the automatic transmission should be strengthened, and then it can be ensured that the performance and life of the automatic transmission can reach the standard.

In this disclosure, the auxiliary driving motor 170, the inverter 122b (i.e., motor control unit (MCU)) and the second mechanical driving axle 180 can be combined to form an "Integrated e-Axle". The traditional 6x2 heavy duty truck with diesel engine can also be equipped with an integrated e-axle to become a 6x4 hybrid heavy duty truck, but at this time, the pure mechanical powertrain of the engine and transmission and the integrated e-axle operate independently of each other, there is a lack of close coordination, and the fuel saving effect is not the best. Unlike the prior art, the integrated e-axle of the ACE heavy duty truck in Figure 1 of the present disclosure is dynamically strongly coupled and closely dynamically coordinated with at least one subsystem including the engine 101, engine control unit 101, generator 110, ePSD 123, main driving motor 140, battery packs 130a & 130b, clutches 111 & 112, transmission 150 and transmission control unit 151, and are jointly controlled by VCU 201. Depending on specific vehicle conditions and the road conditions, through the dynamic adjustment of the two major circuits of mechanical power flow and electrical power flow to jointly drive ACE heavy duty trucks to achieve the beneficial effect of simultaneously optimizing vehicle dynamics and fuel saving, while also improving vehicle dynamics and braking safety, and increasing the redundancy of the vehicle dynamic system and brake system.

A large heavy duty truck diesel engine or natural gas engine with a displacement of 11 L~15 L, peak power of 280 KW~450 KW and peak torque of 1,800 NM~2,500 NM can be selected for the engine 101; a medium and heavy duty truck diesel engine or natural gas engine with a displacement of 7 L~10 L, peak power of 250 KW~320 KW and peak torque of 1,200 NM~1,850 NM can also be selected. The mixed hybrid ACE heavy duty truck is provided with the mainstream diesel engine with a displacement of 11 L~13 L in the world. For example, the ACE heavy duty truck is equipped with a 11L diesel engine (base model or advanced model) (with a peak torque of 2,200 NM@1,200 rpm and a peak power of 300 KW@1,800 rpm) with the largest consumption in the current market; a permanent magnet synchronous generator with a rated power of 175 KW; a permanent magnet synchronous driving motor with a rated power of 200 KW; an ultra-long life power type battery pack with a continuous charge-discharge power of greater than 250 KW and an effective capacity of 30 KWh at the end of life (EOL); in the parallel hybrid mode and in the high efficiency area of the engine (1,100 rpm-1,800 rpm), the engine and double motors can apply force together, the total driving torque of the input shaft of the vehicle transmission can be up to more than 3,000 NM, and the vehicle power performance (high-speed climbing with goods, speed up to overtake, etc.) is obviously better than that of the traditional high-end heavy duty truck equipped with advanced model 16L diesel engine. The actual overall fuel consumption (L/100 km) of the ACE heavy duty truck in freight events with the same load and route is more than 25% lower than that of any traditional diesel heavy duty truck, and the optimal fuel consumption that the ACE heavy duty truck can achieve is independent of the driver's driving level.

The above content describes the ACE heavy duty truck system according to this disclosure, which is the hybrid system architecture and hardware system foundation to realize the ACE heavy duty truck fuel saving and emission reduction in the long haul logistics application scenario. Next, we will further describe how to use particularly the three-dimensional map, vehicle-mounted navigation equipment and ACE heavy duty truck structured big data stored on the cloud computing platform (such as the cloud server) in combination with the machine learning algorithm and cloud platform computing power for training the cloud and vehicle-mounted fuel saving AI brain to further achieve the predictive adaptive cruise (PAC) of the ACE heavy duty truck in the same lane on a highway and to achieve the beneficial effect of energy saving and emission reduction.

In some embodiments of Figure 1, the ACE heavy duty truck is equipped with a map unit (MU) 240 and a satellite navigation receiver (GNSS) 220. The map unit (or GNSS) 240 prestores a three-dimensional electronic map (or 3D map) covering all highways and other main semi-closed roads, while the 3D map information comprises, but not limited to: the longitude and latitude of a whole journey highway describing the absolute position of the vehicle, especially the information indicating the longitudinal slope of the road (such as the uphill Angle $\alpha_u$ and downhill Angle $\alpha_d$ shown in Figure 3). For example, the memory of the vehicle-mounted map unit 240 shown in Figure 1 can comprise the 3D map with the road meter-level positioning precision (longitude and latitude) and longitudinal slope precision with 0.1 degree accuracy. Various advanced driver assistance system (ADAS) maps containing the above road 3D information have already been commercialized in batches in major global automotive markets.

The Global Navigation Satellite System (GNSS) 220 is used for measuring in real time the longitude, latitude, altitude, longitudinal road slope, longitudinal linear speed and other information of the position (namely the current position) where the ACE heavy duty truck 010 is located. In some embodiments, the satellite navigation receiver adopting a dual-antenna 221 and 222 input carrier phase real-time kinematic (RTK) differential technology ("RTK receiver" for short) 220 can be used for real-time accurate positioning and attitude determination of the heavy duty truck at the measuring speed of ten times per second (the measuring frequency is 10 Hz). At present, GNSS has four independent systems, namely GPS of America, Glonass of Russia, Galileo of European Union and Beidou (BD) of China. At present, the Beidou Navigation Satellite System III can provide latest satellite navigation services for the Asian-Pacific region centered on China and for countries along "The Belt and Road", and it is predicted that the global coverage can be finished in 2020. In addition, the agreement of compatibility for the Beidou navigation satellite system in China with other three satellite navigation systems has been signed. Preferably, the satellite navigation receiver (GNSS) 220 comprising the latest BDS-3 RTK chip is matched with the two satellite antennas 221 and 222 installed on the top of the heavy duty truck cab at the interval of at least 1m, and the time service, speed, position (longitude/latitude), and longitudinal attitude (namely road longitudinal slope angle) of the vehicle are calculated in real time. The RTK chips can finish calculation of satellite navigation positioning and attitude determination according to the received independent signals of four navigation satellites combined in the four systems of the GNSS. The timing accuracy is 50 nanoseconds, and the speed measuring accuracy is 0.2 m/s; the longitude and latitude positioning accuracy of the horizontal plane is smaller than 2.5 m, and the longitudinal grade accuracy of the highway is smaller than 0.15 degree; and the maximum measuring frequency is 10 Hz. The vertical altitude of the road surface under the wheels cannot be measured through the RTK navigator real-timely and accurately. In addition, the surveying, mapping and issuing of accurate altitude information are controlled in many countries in the world strictly. Fortunately, the requirement for the absolute altitude measuring accuracy of the vehicle road surface in the present disclosure is not high, which should reach the 10-meter level. In some embodiments, the single-antenna GNSS plus inertial measurement unit (IMU) can also be used to complete vehicle 3D positioning and navigation. The automotive-grade mass-produced IMU based on multiple MEMS acceleration sensors and Gyro plus dedicated processing chip can measure the longitudinal slope function of the road where the ACE heavy duty truck runs in real time with the measurement frequency higher than 10Hz and the measurement accuracy of 0.1 degree. The GNSS 220 can be either a double-antenna RTK receiver or a single-antenna satellite navigator plus inertial navigation IMU. It needs to be emphasized that real-time and accurate measurement of longitudinal slope distribution function along the expressway by the GNSS 220 is essential for the implementation of the present disclosure because the instantaneous small 0.1-degree-level change of the road longitudinal slope function is the secret source of substantial fuel saving and emission reduction when the ACE heavy duty truck is running at high speed. Both the accuracy and speed of the road longitudinal slope measurement of GNSS 220 are much higher than those of the longitudinal slope sensor configured for the current automatic transmission of the heavy duty truck.

The actual fuel consumption of each ACE heavy duty truck is highly correlated to the configuration parameter constant of each important subsystem of the heavy duty truck, the discrete variable of gross vehicle weight (tractor and trailer), the two continuous variables of vehicle speed and acceleration, the continuous variable of longitude, latitude and longitudinal slope distribution function of the driving path and other parameters or variables, and is less correlated to the macro average fuel consumption which includes all ACE heavy duty trucks on all roads. Before an ACE heavy duty truck departs for freight transport, if the driver of the ACE heavy duty truck inputs the starting point and finishing point of the freight event path to the system, the fuel saving robot of the heavy duty truck can automatically request the cloud-based 001 artificial intelligence (AI) fuel saving brain to calculate and download the default optimal fuel saving control strategy customized for the vehicle and a specific path in real time with the help of all the cloud-stored fuel saving data sets about the operation of many ACE heavy duty trucks running in this road section in history, and edge computing is carried out combined with the vehicle-end AIU 202 (AI inference chip) to modify and optimize the fuel saving strategy in real time. Every ACE heavy duty truck can consistently achieve the optimal fuel consumption each time relying on the collective intelligence and wisdom of all ACE heavy duty trucks regardless of whether the driver has driving experience of the particular freight path.

The ACE heavy duty truck 010 can automatically collect, label, store at the vehicle end and upload at the cloud end the fuel saving data set of the entire freight event. The fuel saving data set includes the overall dynamic operation data of key subsystems such as ACE complete vehicle 010, engine 101, transmission 150, generator 110, driving motor 140 or 170, battery pack 130a or 130b, clutch 111, GNSS 220 and ePSD 123 in the entire freight event. The data is both the dedicated structured big data about the energy management of the ACE heavy duty truck and the "data oil" of the machine learning algorithm for training and continuous autonomous evolution of the fuel saving robot of the heavy duty truck.

One of the core parts of the structured big data of ACE heavy duty truck operation is the big data of ePSD 123 operation, including the following: the sampling and recording frequency is at least 10.0Hz, the clocks of all subsystem controllers are calibrated according to the timing of the satellite navigation receiver 220, and each microcontroller of the ACE heavy duty truck at each sampling time point ti commands the sensor to collect and store at least the following variable values locally: the longitude $L_{lg}(t_i)$, latitude $L_{lat}(t_i)$, longitudinal slope $G(t_i)$, vehicle speed $v(t_i)$, vehicle acceleration $a(t_i)$, generator 110 DC $I_g(t_i)$, driving motors 140 & 170 DC $I_m(t_i)$, battery packs 130a & 130b DC $I_{bat}(t_i)$, DC bus junction voltage $V_{bus}(t_i)$, battery packs 130a & 130b state of charge $C_{bat}(t_i)$, brake resistor 131 DC $I_{bk}(t_i)$, outside ambient temperature $T(t_i)$, ambient wind speed and wind direction $v_{xyz}(t_i)$ of the vehicle 010. The main time variable operating data (such as speed, torque, gear) of each motors (generator 110, main driving engine 140, auxiliary engine 170), the engine 101 and the automatic transmission 150 at sampling time point $(t_i)$ can also be sampled and stored locally. The cycle, amplitude, duty cycle and other data about the Intelligent Stop Start (iSS) pulse sequence in the series hybrid mode or the Intelligent Power Switching (iPS) pulse sequence in the parallel hybrid mode of the output power function of the engine 101 can also be collected and stored. It should be emphasized that the above fuel saving data set of the ACE heavy duty truck must be collected and stored onboard and dynamically once in real time in a concentrated way by using the mixed hybrid ACE heavy duty truck system shown in Figures 1 or 2 of the disclosure. It is not possible to collect or simulate the data in a decentralize way (in different time, road and subsystems on more than one heavy duty truck) before splicing to form the desired data. To complete the initial training and subsequent continuous improvement of the artificial intelligence (AI) brain of cloud-end or vehicle-end fuel saving robots, a variety of open source or dedicated learning algorithms and networked computer computing power (available when you need to buy it) can be used in combination with the above-mentioned dedicated structured big data. The structured big data of ACE heavy duty truck operation is non-public proprietary data. The more you accumulate, the greater value you get, which can continuously raise the advantage in competition for the enterprise using the present disclosure. In some embodiments, the VCU 201 can be configured for predictive power control over the ePSD 123, the engine 101, the generator 110, the driving motor 140 or 170, the clutch 111, the transmission 150 and the battery packs 130a or 130b in an "independent" way based on the longitude and latitude (equivalent meter-class positioning accuracy) of the electronic horizon (meter-level interval density), the longitudinal road slope ("longitudinal slope" for short, accuracy 0.1 degree) along the full freight event based on the 3D map prestored in the map unit 240, and/or based on the longitude, latitude, altitude and longitudinal slope measured by the GNSS 220 of the position where the vehicle is located in pursuit of minimized actual fuel consumption of ACE heavy duty truck on the premise of ensuring vehicle driving power performance and safety.

Optionally or additionally, under the condition that the deviation between the a priori road information prestored in the 3D map in the navigator 240 and the road information actually measured by the GNSS 220 is beyond the range of allowable tolerance, especially when the deviation of the current longitudinal slope data (as key information of fuel saving) of the vehicle is beyond the range of allowable tolerance, the VCU 201 can control the transient electric power distribution among the three ports of the ePSD 123 preferably subject to the longitudinal slope data actually measured by the GNSS 220 to meet the vehicle dynamics equation (1-1) in real time. If the speed or acceleration of the vehicle obviously deviates from the desired control value at this time, it indicates that the fact is that the GNSS 220 measurement data is wrong and the 3D map priori data is correct, the VCU 201 can make a judgment after vehicle-in-the-loop simulation calculation according to the transient power distribution parameters of the three ports of the ePSD 123 of the ACE heavy duty truck, the longitudinal linear speed and acceleration of the vehicle 010 and in combination with the vehicle dynamics equation, reelection shall be subject to the onboard 3D electronic map, so as to achieve the automatic error correction function.

The double-antenna RTK receiver solution used by the GNSS has a complex system and superior performance, but the cost is high. Of course, to reduce the system cost, a satellite navigation receiver 220 with only a single antenna 221 can be selected instead of no antenna 222; then, an inertial measurement unit (IMU) with single-axis or multi-axis dynamic tilt sensor can be selected to measure the running vehicle's absolute positioning (longitude/latitude) and road longitudinal slope in real time. There are many ways to realize the dynamic tilt sensor. One of the cost-effective embodiments is the Accelerometer of the automotive-grade micro-electro-mechanical system (MEMS), the Gyroscope and the special-purpose chip integration. In several embodiments below, the following is the exemplary description on how to achieve the automatic predictive fuel saving control through the VCU 201 using the vehicle dynamic 3D navigation information (especially the road longitudinal slope distribution function). It is indicated that the following specific examples should not be interpreted as restrictions on the protective range of the present disclosure, but for those in the art to understand the present disclosure properly.

For example, in some embodiments, when it is measured that the slope of the slope road section in front of the vehicle is greater than the predefined first slope threshold (for example, the slope is greater than 2.0°) and the length of the slope road section is larger than the predefined first length threshold (for example, the length is greater than 15 kilometers), the engine 101 can be commanded through the VCU 201 to drive the generator 110, the generated power is increased in advance, the vehicle enters the Charge-Increasing (CI) mode to ensure that the battery packs 130a & 130b are fully charged (SoC approaches 100%) in several seconds or 100 meters before climbing a long slope and there is enough electric power for the vehicle to climb the long slope; preferably, the charge level of the battery pack is basically exhausted (SoC touches the lower red line (LRL)) when the vehicle reaches the apex of the long slope, so that the maximum electric power can be recovered at a near-zero cost through regenerative braking when the vehicle is going down the long slope. It is especially suitable for the scenarios that the road section in front of the vehicle has a "long slope".

In some embodiments, when there are only short slope of the highway within 100 kilometers ahead of the vehicle, short slope refers to the road section whose slope is less than the predefined second slope threshold (e.g., less than 3.0°) and the length of slope section is less than the predefined second length threshold (e.g., less than 10 km, or even less than 2 km), and the average output power of the engine 101 can be regulated by the VCU 201 by means of Intelligent Stop Start (iSS) or Intelligent Power Switching (iPS) to enter the Charge Depleting (CD) or Charge-Sustaining (CS) mode. It is especially suitable for the scenarios that the road section in front of the vehicle has a "short slope" (also called "small slope"). Since the slope length is shorter (for example, the slope length is smaller than 2 km), the vehicle has climbed to the top of the slope before the stored electric energy in the battery packs 130a & 130b is completely exhausted; and the battery packs 130a & 130b can be soon recharged through 100-kilowatt level regenerative braking power of the driving motor 140 in the subsequent downhill phase, and the KWH-level energy is recovered. In this way, the power throughput turnover of the power type battery pack with a limited capacity can be increased, especially, the power throughput turnover of regenerative charge with quasi-zero cost is increased, and the cost effectiveness is higher than that of the solution of using a high-capacity battery pack (large volume/weight, high price) of hundreds of kilowatt hours.

Referring back to Figure 1, in view of driving safety, in some embodiments, the ACE heavy duty truck can further comprise an automotive millimeter-wave radar module (mWR) 230 and a radar antenna 231 that are mounted in the front end of the heavy duty truck, used for monitoring in real time the absolute distance and the relative speed between the heavy duty truck and the vehicle just ahead in the same lane. The maximum forward detection distance range of the said long distance millimeter wave radar (LRR): 200 m~500 m; the field of view (FOV) range: +/- 10 degrees. The millimeter wave radar 230 also includes the vehicle gauge level SRR with the maximum detection distance of 70m and a viewing angle range of +/- 65 degrees. The automotive-grade forward monocular or binocular camera and a processing chip with the maximum detection distance of more than 250 meters can also be used for integrating with the forward-looking millimeter wave radars (LRR & SRR) to enhance the front-end speed and distance measurement properties of the vehicle and the system robustness. For redundancy and robustness of the vehicle's forward speed and distance sensor system, a LiDAR with a small viewing angle (FOV +/- 10 degrees) forward 16-line or 32-line can also be installed. The millimeter wave radar mWR 230 in Figure 1 of the disclosure should be understood as any combination of the above three types of sensors for measuring the speed and distance in front of the vehicle.

In some embodiments, the heavy duty truck further comprises a vehicle-mounted wireless communication gateway (T-Box) 210 and an external antenna 211, used for connecting the heavy duty truck 010 with a cloud computing platform 001 through the 3rd/4th/5th (3G/4G/5G) generation cellular mobile network 002 (see Figure 3) while supporting V2X (vehicle-road, vehicle-vehicle, vehicle-network, vehicle-human, etc.) real-time communication.

In this way, the VCU 201 can receive signals from numerous vehicle sensors including the GNSS 220 and the millimeter wave radar 230 for real-time control of modules or subsystems including the engine 101 and its ECU 102, the generator 110, the ePSD 123 (including the inverters 121, 122a & 122b, the high power soft switch 133, the choppers 132a & 132b), the battery packs 130a & 130b, the driving motors 140 and 170, the automatic transmission 150 plus the TCU 151 and the map unit 240, thus achieving the PAC function of the vehicle in the same highway lane through the "symphony orchestra type" multi-module real time dynamic coordination, i.e., SAE L1 or L2 automatic driving, liberating the driver's feet, reducing the driving labor intensity, while optimizing the vehicle's power and fuel efficiency, and ensuring that the actual vehicle exhaust pollutant emission meets the standards (China VI, Euro VI, EPA-2010) stably within the warranty period of 700,000 km.

Under the premise of ensuring the vehicle dynamic performance, the VCU 201 can achieve minimized comprehensive fuel consumption for the whole journey by making use of electronic horizon 3D road information within 50 km and even 500 km effectively, and through the granularity real-time predictive adaptive power control for an accumulative sequence of 100 m road section.

In addition, the driver can manually turn on or off the additional Predicative-Adaptive-Cruise (PAC: Predicative-Adaptive-Cruise-Control) function when the ACE heavy duty truck is running on a closed expressway to realize the SAE L1 or L2 automatic driving function combined with the mass-produced commercial advanced driver assistance system (ADAS), which basically liberates the driver's feet and reduces the driver's driving labor intensity. From the perspective of driving safety, the PAC function can only be enabled in closed highway conditions without congestion (average speed is not less than 45 km/h).

In some embodiments, the above predictive adaptive cruise (PAC) can include the following three modes: 1) N (Normal Mode), 2) Eco (Eco Mode) and 3) P (Performance Mode).

For example, for a passenger vehicle with a gross weight of 2 tons, its maximum driving power exceeds 100 KW; but for a fully loaded heavy duty truck with a gross weight up to 40 tons, its maximum driving power is only 350 KW. The driving power per unit weight (KW/ton) of the heavy duty truck is far less than that of the passenger vehicle, and the dynamic driving characteristics of the two vehicles are quite different. It is difficult for a heavy duty truck to maintain a constant speed of more than 1.0 degrees up and down the longitudinal slope and follow the passenger vehicle straight ahead with a constant distance when running on an open highway. Every time the vehicle is accelerated uphill or braked downhill, the fuel consumption will increase. When the ACE heavy duty truck enters PAC, it needs to set the upper and lower limits of cruise speed zones reasonably according to the rated cruise speed Vc and mode selected by the driver and control the vehicle within the cruise speed zone. The three PAC modes have different focuses, wherein, the normal mode (N) gives consideration to fuel saving and freight transport timeliness (i.e., vehicle power performance); the fuel saving mode (Eco) emphasizes fuel consumption but relaxes the power performance requirement; the high-performance mode (P) emphasizes freight transport timeliness but relaxes the fuel saving requirement. Preferably, the upper and lower limits of the following cruise speed zones can be selected.

In the normal mode (N), the cruise speed (1.0-0.08) Vc < V < (1.0+0.05) Vc and cannot exceed the legal maximum speed in this road section; in the Eco mode, the cruise speed (1.0-0.12) Vc < V < (1.0+0.05) Vc and cannot exceed the legal maximum speed; in the performance mode (P), the cruise speed (1.0-0.05) Vc < V < (1.0+0.08) Vc and cannot exceed 105% of the legal maximum speed.

The VCU 201 dynamically adjusts the safe following distance $L_s$ of adaptive cruise control according to the operation information including the gross weight, vehicle configuration and vehicle speed, and combining with the current 3D road information (longitude, latitude and longitudinal slope) of the vehicle as well as the longitudinal slope distribution function, bend curvature and other three-dimensional information of roads within the vehicle electronic horizon stored in the map unit 240. Different from fast-moving passenger vehicles, the longitudinal slope data (positive and negative/size) of the road ahead has a great influence on the power performance and braking effectiveness of loaded ACE heavy duty trucks running at a high speed. Although it is not necessary to dynamically adjust the safe following distance $L_s$ of the

passenger vehicle according to the longitudinal slope distribution function of the road because both the driving power (KW/t) and braking power per unit mass are several times as much as those of a heavy duty truck, dynamic adjustment of $L_s$ is very important for the safety of ACE heavy duty truck in the above PAC mode. The safe following distance $L_s$ can be subdivided into three specific distances: L1 is the early warning distance, L2 is the warning distance, L3 is the dangerous distance, where L1 > L2 > L3. The VCU 201 can dynamically calculate the above three following distances (L1, L2, L3) according to the vehicle configuration parameter and operating condition data (e.g., vehicle gross weight and vehicle speed), real-time weather (wind, rain, snow, ice, temperature, etc.) and the 3D road data (longitude, latitude and longitudinal slope, etc.) within a kilometer-level range ahead of the vehicle.

When the distance $L_s$ between an ACE heavy duty truck and a vehicle right ahead is gradually less than L1, L2 and L3 and the relative speed v>0 (indicating the continuous shortening of the following distance between two vehicles), the VCU 201 will remind drivers by enhancing its warning intensity gradually through internal acoustic, visual, tactile and other physical signals. At the same time, the VCU 201 controls the generator set (101 and 110) and the driving motors 140 and 170 to reduce the output power of each power source gradually, and increase the regenerative braking power gradually to slow down the vehicle after the output power of the driving motors 140 and 170 reduce to zero, and recover energy by charging the battery packs 130a & 130b. However, the 500 KW maximum regenerative braking power of the driving motor can only meet the auxiliary braking and deceleration requirement with a deceleration of about 0.1 g (g is acceleration of gravity) for a full load heavy duty truck running at high speed. In emergencies, the driver must step on the brake pedal and start the mechanical braking system of the heavy duty truck to achieve emergency braking with deceleration larger than 0.2 g. The sum of the driver's braking reaction time and the response time of the mechanical braking (pneumatic braking) system of the heavy duty truck is about 1.0 second. However, the system response time of the VCU 201 from 100 kW class driving mode to 100kWclass regenerative braking mode can be completed in 25.0ms, dozens of times faster than the response speed of the traditional heavy duty truck driver + mechanical braking system, and the power regenerative braking system and the mechanical braking system are completely independent of each other. The regenerative braking function of the driving motor of ACE heavy duty truck not only improves the comprehensive braking performance of the vehicle, but also provides safety redundancy. In addition to fuel saving and emission reduction, the predictive adaptive cruise system (PAC) of the ACE heavy duty truck can improve the active safety of vehicle driving and reduce rear-end collisions. When the ACE heavy duty truck is running in the parallel hybrid mode (clutch 111 engaged and locked), the generator 110 and the driving motors 140 and 170 can all jointly participate in vehicle driving or regenerative braking plus direct driving of the engine 101 or engine braking, at this time, both the power performance and braking effectiveness of the vehicle are better than those in the series hybrid mode (clutch 111 disengaged).

The working scenario of predictive adaptive cruise (PAC) is divided into two categories. The first one is that when there is no vehicle within 200 meters ahead in the same lane, the vehicle controls the ACE heavy duty truck to move within the specified speed zone according to the fuel saving control algorithm. The second category is that the ACE heavy duty truck should be controlled beyond the safe following distance $L_s$ when there are preceding vehicles 200 meters right ahead in the same lane, and then the fuel saving control algorithm should be considered.

Heavy duty trucks for long haul logistics will encounter congested roads due to rush hour traffic, road repairing or traffic accidents and other factors from time to time (the average speed is less than 40 km/h; frequent active acceleration and deceleration); at the moment, both the driver's driving labor intensity and the fuel consumption of the heavy duty truck are increased sharply. Congested expressways are one of the long-term "pain points" in the road logistics industry, and the average congestion degree of highways in China is higher than that in America. At the moment, the ACE heavy duty truck can enable the "intelligent following" function, which can only be used when driving at low speed on a closed road (the average speed is less than 30 km/h), not suitable for use on open urban or suburban roads. By using the SRR and the camera 230, a set safety following distance L0 is kept with the lead vehicle right ahead in the same lane in a closed congested highway section, the ACE heavy duty truck is commanded by the VCU 201 to disengage the clutch 111, so that the ACE heavy duty truck operates in the series hybrid mode. The Intelligent Stop Start (iSS) is performed on the engine 101, the vehicle mainly operates in the Charge-Sustaining (CS) mode, and the frequent active acceleration or braking of the vehicle is completely realized by the driving motor. The driving motors 140 and 170 can maintain the maximum torque output from zero speed to rated speed. Both the starting acceleration and braking deceleration of the ACE heavy duty truck are significantly higher than those of the traditional heavy duty truck with engine and even comparable with the acceleration and deceleration performances of the ordinary light duty trucks with the traditional engine. At the moment, the heavy duty truck frequently brakes at low speed, which is very conducive to the 100 kW-level regenerative braking and energy recovery. In the "intelligent following" mode, the ACE heavy duty truck can save more fuel than the traditional heavy duty truck with engine (the fuel saving rate is more than 30%) and greatly reduce the driving labor intensity of drivers.

When a loaded heavy duty truck runs along a long-downhill path of a highway, the risk of performance degradation (Brake Fade) in the mechanical brake system due to long-time braking friction and heating, or even complete failure, cannot be overlooked. In March 2018, 17 people were killed and 34 injured in a traffic accident at a toll station of Lanzhou, China's Lanhai highway, when a heavy duty truck's braking system overheated and failed as it was driving along a 17-kilometer downhill section. European regulations require that retarders must be installed for heavy duty trucks for long haul logistics. Although there is no mandatory regulation requirement for heavy duty trucks in America and China, more and more users choose heavy duty truck retarders. The existing mass-produced retarders, such as eddy current retarder, hydraulic retarder and engine in-cylinder brake retarder, have their own advantages and disadvantages. Both the eddy current retarder and the hydraulic retarder have only one retarding function, which makes no contribution to vehicle driving, increases the vehicle weight and cost more than ten thousand yuan, and leads to a bad retarding effect when the vehicle is running at low speed. The engine in-cylinder brake retarder has the advantage of one machine serving several purposes, but the retarder braking brings great noise, the braking power is mostly below the peak power of the engine, and the retarding effect decreases when the vehicle is running at low speed. In addition to the beneficial effects of fuel saving and emission reduction, the ACE heavy duty truck powertrain of the disclosure can also realize the long-downhill retarder function of ACE heavy duty truck through regenerative braking of the motors (110, 140, 170) and braking of the engine 101 without adding any hardware. It can completely replace the eddy current retarder or hydraulic retarder, and the price ratio is higher than that of several commercial heavy duty truck retarders.

When the ACE heavy duty truck 010 encounters a long downhill path (the absolute value of the longitudinal slope is greater than 2 degrees and the slope length is greater than 5 km), the longitudinal slope power is sufficient to overcome the rolling power plus wind resistance power, and the vehicle is driven to go downhill at a constant speed. The excess longitudinal slope power needs to be recovered through regenerative braking of the motors (110, 140, 170) to avoid the continuous acceleration when the vehicle is going downhill. The clutch 111 commanded by the VCU 201 can be closed and locked, and the vehicle works in the parallel hybrid mode. At this time, the engine 101 can jump out of the intelligent power switching (iPS) control mode and enter the working condition of non-combustion low load idling (the engine braking function is not started) or non-combustion high load idling (the engine braking function is started). The generator 110 and the driving motor 140 or 170 can cooperate to generate power through regenerative braking to recover the mechanical energy generated when the vehicle goes downhill, and the battery packs 130a & 130b are charged via the ePSD 123. When the battery packs 130a & 130b are fully charged (SoC approaches 100%), the choppers 132a & 132b disconnect the battery packs 130a & 130b, the soft switch 133 is switched from an OFF state to an ON state and connected to the brake resistor 131 unidirectionally and electrically, and the excess electric energy is converted into thermal energy and consumed as an effective electric load of regenerative braking power generation. In the parallel hybrid mode, the braking power of the engine and the regenerative braking power of the motor can be superimposed, which can not only greatly improve the total power of the frictionless retarder, but also provide two sets of independent redundant retarding systems to improve the active safety of the heavy duty truck running along a downhill path. In addition to energy recovery for fuel saving and emission reduction at near zero cost, the regenerative braking can also significantly prolong the life of mechanical brake pads and obviously reduce the total operation and maintenance costs of the braking system within the whole life cycle of the ACE heavy duty truck 010.

The ACE heavy duty truck hybrid powertrain system of the disclosure is a fully digital software-defined powertrain system, including the SAE L1 automatic driving function. The bulk commercialization of ACE heavy duty truck will have a profound impact on the heavy duty truck industry for global long haul logistics, similar to the industrial upgrading of the global mobile communications industry from feature phones to smart phones. The ACE heavy truck can be easily upgraded from L1 to L3 or L4 by installing a variety of environment sensors, wire-controlled automatic steering device, autonomous driving AI chips and other hardware and software upgrades. Industry experts agree that it will be difficult for L5 unmanned heavy duty truck to enter bulk commercialization in major global markets by 2030. All automatic driving heavy duty trucks of L1 to L4 must comply with the functional safety standard ISO26262 for road vehicles to achieve a specific safety level (ASIL safety level). The ACE heavy duty truck is based on system integration including drive motors 140 and 170, battery packs 130a & 130b, and ePSD 123 to achieve the high-performance pure electric driving, the regenerative braking and energy recovery, the AEBA and the long-downhill retarder function. Besides the traditional engine and mechanical brake systems of the vehicle, a set of completely independent and redundant active safety system is installed, as well as a redundant vehicle electric driving system (engine with multiple motors). Compared with the traditional heavy duty truck with engine based on the prior art, the ACE heavy duty truck of this disclosure can improve the three ultimate goals of the automobile industry simultaneously with high cost effectiveness: safety, energy saving and environmental protection.

It is predicted that the preliminary small-scale business of "Truck Platooning" of heavy duty truck can be implemented in relatively open closed highway areas in Europe and America from 2020. The "Truck Platooning" of heavy duty truck means reducing the safe following distance between two heavy duty trucks running at a high speed from the regulatory 45 m above to 15 m below greatly through a complete set of advanced driving assistant system (ADAS) + a real-time reliable wireless mobile communication (V2V, V2X) between vehicles as well as between the vehicle and cloud, which helps to reduce the air drag power between the two heavy duty trucks ahead and behind obviously, save 4% fuel of the leading heavy duty truck and save 10% fuel of the following heavy duty truck. In view of safety, the emergency braking performance of the following heavy duty truck should be superior to the leading heavy duty truck, so as to avoid rear-end collisions. The high speed emergency braking performance in the same lane of the ACE heavy duty truck is significantly superior to traditional fuel heavy duty truck with the same gross weight, therefore the ACE heavy duty truck is applicable for serving as following heavy duty truck in the truck platooning of heavy duty truck, which may further save fuel. In view of fuel saving, smaller following distance in truck platooning is not better. When the following distance is less than 7 m, the effective wind speed of the front water tank of the following heavy duty truck will be reduced, and the heat dissipation effect will be lowered; and at the moment, it is required to start the water tank fan with a power dissipation of tens of kilowatts to provide the dynamic heat dissipation power required for the heavy duty truck diesel engine, which may result in no reduction and rise of comprehensive fuel consumption of the following heavy duty truck. The engine displacement of the ACE heavy duty truck is reduced by nearly 25% than the engine displacement of the traditional heavy duty truck, which means both cross section area and heat dissipation power of its water tank may be reduced by about 25%; and compared with traditional heavy duty truck, the ACE heavy duty truck has faster emergency braking response, and shorter braking distance. Therefore, serving as a following vehicle, the ACE heavy duty truck can shorten the safe following distance of a truck platooning of the ACE heavy duty trucks to 6 m, or even 5 m, in an expressway section without significant slope (the absolute value of longitudinal slope is less than 2.0 degrees), and may achieve more than 10% additional fuel saving rate by further reducing the air drag power.

In the North American or European markets, the heavy duty truck driver for long haul logistics are subject to mandatory traffic regulations. They are on duty for 14 hours a day and after 11 hours of continuous driving, they must park and rest for 10 hours. In China, heavy duty truck drivers (single or double drivers) also need to stop for several hours on the way. When parking for a rest, a heavy duty truck is the driver's hotel. During parking, the cab requires electricity and air conditioning, which is cooled in summer and heated in winter. For energy saving and emission reduction, Europe has strict Anti Idling regulation, while China and the United States currently do not have any national Anti Idling regulation. Many states in the United States have local regulations specifying that the engine idle speed of the heavy duty truck during parking shall not exceed 5 minutes. In order to meet the EU Anti Idling regulations and/or improve the quality of life for heavy duty truck drivers during long haul, each European heavy duty truck is equipped with a battery pack or pocket diesel engine based APU worth tens of thousands of yuan, and some American and Chinese trucks are gradually equipped with the above-mentioned system. The ACE heavy duty truck of the present disclosure can fully charge the battery packs 130a & 130b (SoC approaches 100%) before a long parking rest. The battery packs 130a & 130b and the ePSD 123 can completely replace the above-mentioned APU. On the premise of not increasing the hardware cost, it can support all the Hotel Load power demands of heavy duty truck drivers when they park and stop their engines for ten hours, such as A/C heating or refrigeration, electric lamp, TV, refrigerator, microwave oven, induction cooker, etc. It saves energy and reduces emissions, and significantly improves the quality of life for heavy duty truck drivers during long haul. The ACE heavy duty truck 010 can also be used as a 100 KW level mobile AC discharge station under special conditions.

It should be emphasized that the realization of the SAE L1 automatic driving function and the beneficial effect of 30% reduction in comprehensive fuel consumption (L/100 km) of the ACE heavy duty truck than traditional heavy duty fuel truck through the PAC in the same highway lane described in the present disclosure mainly depends on the gas-electric hybrid powertrain technology, plus the fuel saving data set under the vehicle-cloud collaboration and artificial intelligence fuel saving algorithm, and the priori data in the 3D map within the electronic horizon is fully utilized. Human drivers can manually control the ACE heavy duty truck to basically achieve a fuel saving rate of 25%+ (compared with the traditional heavy duty diesel truck); it is commanded by the "fuel saving robot" AI brain to achieve L1 automatic driving in the same lane on highways (predictive adaptive cruise (PAC)) so as to ensure that the comprehensive fuel consumption (L/100 km) of each ACE heavy duty truck is highly decoupled from the vehicle driver's personal driving ability, road experience and working attitude and is consistently lower than the level of an optimal human driver. Different from the L4/L5 automatic drive vehicles, the ACE heavy duty truck of the present disclosure adopts the mature and batch commercial core components and system integration technology, which has obvious fuel saving effect, high cost effectiveness and the ACE heavy duty truck can be industrialized within three years without relying on government subsidies to realize large-scale commercial use. Other commercialized fuel saving technologies of heavy duty trucks for long haul logistics, such as low rolling friction tires, lightweight and wind drag reducing aerodynamics (tractor and trailer) and the like, can be directly superposition-applied to ACE heavy duty trucks. It is expected that the ACE heavy duty truck that will be commercialized in bulk around 2021 will reduce the overall fuel consumption (L/100 km) of the baseline for 2017 version of the traditional heavy duty diesel truck by more than 25%.

Unlike prior art, the ACE heavy duty truck of the embodiments shown in Figure 1 to 3 in the present disclosure depends on the fully digital software defined mixed hybrid powertrain, the VCU 201 gives command in cooperation with the AIU 202, and the minute-level average output power of the engine is regulated dynamically and continuously through the Pulse Code Modulation (PCM) (including iSS in the series hybrid mode or iPS in the parallel hybrid mode) on the transient output power of the engine 101; in addition, the flow direction, path and amplitude of the 100 KW level electric power are regulated dynamically among numerous power sources or loads (e.g. generator 110, driving motor 140 or 170, battery pack 130a or 130b, brake resistor 131 and the like) through the ePSD 123, and several ADAS functions such as PAC, LDW, FCW, AEBA and retarding function of the heavy duty truck for the long downhill are effectively integrated in combination with various vehicle-mounted sensors using the 3D map priori data of the MU 240. In addition to the two benefits of improving vehicle safety and reducing the labor intensity of the human driver for long-distance driving, it also adds dynamic linkage between the cloud and the vehicle-mounted "fuel saving robot" AI brain, just like AlphaGo Zero plays chess. The fuel saving strategy is mastered and continuously evolved through machine learning to achieve the beneficial effect that the comprehensive fuel consumption of the ACE heavy duty truck defeats human drivers.

As discussed above, when running on a loaded highway, the ACE heavy duty truck can harvest 100WH level or KWh level "zero-cost electric energy" (regenerative braking charge) from each downslope between one hundred meter and several kilometers by skillfully using the downhill longitudinal slope power between tens of kilowatts and hundreds of kilowatts generated from subtle changes in the accuracy along the longitudinal slope 0.1° along the road that frequently occurs and by charging the battery packs 130a & 130b through the regenerative braking of the driving motors 140 & 170. Every little help. In addition, the comprehensive energy conversion efficiency from the battery to the driving wheel in ACE heavy duty truck is as two times as that from the fuel tank to the driving wheel. In other words, compared with the chemical energy in the fuel tank, the electric energy in the battery pack of the ACE heavy duty truck can make one to three in the aspect of vehicle driving. The secret of the ACE heavy duty truck saving fuel under the working condition of highways is to maximize the approximately zero cost "regenerative braking charge" accumulated in the battery packs 130a & 130b, supply the driving power of partial vehicles, and increase the total charging and discharging electric energy of the whole journey of the battery packs 130a & 130b through the fast turn around method of discharging with charging, so as to achieve the fuel saving effect.

The VCU 201 evaluates the situation in real time according to the 3D electronic map of the whole journey road of the vehicle, so as to ensure that there is sufficient time to command the clutch 111 to engage and lock before it encounters a long slope with a length of more than 10 km and a longitudinal slope of more than 2.0%. When switching to the parallel hybrid mode, the engine 101 and the generator (MG1) 110 can fully charge the battery packs 130a & 130b in advance and safely increase the vehicle speed to the legal upper speed limit before the vehicle reaches a long slope, so as to delay and reduce the ACE heavy duty truck 010 to the maximum extent on the way uphill, and avoid the peak power of the engine is insufficient to independently support the vehicle to run uphill at constant high speed after the battery pack is used up in the vehicle climbing process, which affects the vehicle power performance and transportation timeliness of the vehicle. According to the vehicle-mounted 3D map, especially the high precision distribution information of longitudinal slope on the road in the whole journey, the VCU 201 can dynamically predict the time functions of the longitudinal slope power and road load power of the vehicle in the whole journey at the kilowatt level precision in real time, so as to adjust the SoC of the battery packs 130a & 130b predictively and dynamically; under the premise of ensuring driving safety and RDE compliance at all times, pursue the optimal balance among the fuel saving effect and the power performance of the ACE heavy duty truck at the predictive adaptive cruise (PAC) mode selected by drivers and meet the vehicle dynamic equation (1-1) in real time. It needs to be emphasized that the optimal value of the daily driving comprehensive fuel consumption of an ACE heavy duty truck is closely related to the configuration and load of this vehicle, longitudinal slope space-time function along the way of the specific journey (or route), weather conditions along the way on that day, traffic condition along the way, etc., but has no high correlation with the macroscopic average fuel consumption value of the heavy duty trucks with similar configuration and load in the whole province and even throughout the country. If the average fuel consumption per minute per road section of the ACE heavy duty truck is the minimum, it can ensure the cumulative comprehensive fuel consumption of this ACE heavy duty truck is optimal daily, monthly, annual and throughout its full life cycle from month to month. For all ACE heavy duty trucks with different configurations and loads, the fuel saving data set of running in a specific freight route that are formed from month to month have common reference and guiding significance for each ACE heavy duty truck that is operated in this journey.

How to quasi real-timely (minute or hour-level delay) upload the dedicated structured big data that are recorded in the above numerous ACE heavy duty trucks during the driving period to the cloud computing platform 001 for storage via a mobile Internet 002 through a vehicle-mounted wireless gateway 210 after desensitization and encryption for subsequent analysis and processing is described below. The cloud platform 001 assembles enough computing power of public or private clouds through the specific open source or algorithm of optimal machine learning, trains the cloud "heavy duty truck fuel saving robot" AI brain through the increasingly accumulated dedicated structured big data of the ACE heavy duty truck, seeks the optimal fuel saving control strategy for specific journeys by focusing on collective intelligence, and serves for individual ACE heavy duty trucks, providing fuel consumption reference value and default fuel saving control strategy for specific journeys for them so that each ACE heavy duty truck can benefit from them. Each ACE heavy duty truck performs "Edge Computing" AI inference computing on vehicle end by means of its VCU 201 in cooperation with the AIU 202, and dynamically modifies the fuel saving control strategy of this vehicle in real time according to the current environment, road conditions and vehicle operating data of the ACE heavy duty truck in this place, achieving minimized comprehensive fuel consumption of this vehicle in this transportation event (i.e., from the starting point to the finishing point of goods transportation by a truck).

In some embodiments, various operating data from the above generator set (101, 102, 110, 121), the ePSD 123, the clutch 111, the driving motors 140 and 170, the automatic transmission 150, battery packs 130a & 130b and other main powertrain subsystems may be measured and collected (the measuring frequency is above 5 Hz) by the vehicle-mounted multi-sensor "IOT" on the ACE heavy duty truck in real time during the running of ACE heavy duty truck 010, and stored in the format of structured big data commonly used in the industry in a concentrated way, such as the vehicle-mounted VCU 201 memory or other vehicle-mounted memories. Of course, it is also feasible to store the measurement data in the memorizers of microprocessors corresponding to subsystems in a distributed way. The so-called "fuel saving structured big data" (also known as the fuel saving data set) refers to a multi-dimensional time sequence of the operating data of various subsystems during the driving of ACE heavy duty truck that are "relatively" recorded through a "mapping relation".

For example, it can dynamically calibrate microprocessor clocks of all vehicle-mounted subsystems including the VCU 201 clock by means of 10-nanosecond level ultrahigh precision time service of the GNSS 220, and annotate and synchronize the structured big data of the dynamic operation of each subsystem of the ACE heavy duty truck with the ordered and unique time sequence. As shown in Figures 1-3, all important subsystems on the vehicle 010, including the VCU 201, AIU 202, engine 101, engine control module 102, generator 110, electrical power split device (ePSD) 123 (including the inverters 121, 122a & 122b; the soft switch 133; the choppers 132a & 132b), clutch 111, driving motors 140 & 170, battery packs 130a & 130b, brake resistor 131, AC switchboard 135, transmission 150, transmission control unit 151, millimeter wave radar 230, mobile communication gateway 210, map unit 240, GNSS 220 and the like have corresponding dedicated microprocessors, memories and sensors. All these subsystems can measure, calculate and record the time sequence of main operating data uniquely annotated with time in real time at the local vehicle end within a measurement frequency ($f_m$) range of 1.0 Hz< $f_m$ <50.0. For example, the engine control module 102 may calculate and record the operating data such as vehicle speed and speed, torque and brake specific fuel consumption (BSFC) of the engine 101 at a measurement frequency of 20 Hz; the generator control unit (inverter) 121 may record the data such as input shaft mechanical speed and torque and internal temperature of the alternator 110 and output DC voltage, current and internal temperature of the generator control unit 121 at a measurement frequency of 20 Hz; the ePSD 123 can record the data such as one DC voltage function at the DC bus junction X and various DC functions at a measurement frequency of 20 Hz; the battery management module (BMS) of battery packs 130a & 130b can record data such as its output DC voltage and current, and current, voltage, temperature and SoC of its internal cell and battery module levels at a measurement frequency of 10.0 Hz; the inverters 122a & 122b can record the data such as mechanical speed and torque of the output shaft of the driving motors 140 and 170, internal temperature of the motors, current and voltage at the DC end of the inverters at a measurement frequency of 20 Hz; the TCU 151 can record the data such as transmission position, input end speed and output end speed at a measurement frequency of above 10 Hz; the satellite navigator 220 can record the data such as speed per hour, longitude and latitude, longitudinal slope and time service of the vehicle at the maximum measurement frequency of 10 Hz; the millimeter wave radar 230 can record the data such as distance and relative speed between the vehicle and the front vehicle at a measurement frequency of 10 Hz. The sensor measurement parameters of subsystems may have overlapping each other, and data overlapping redundancy helps to improve the fault tolerance and error correction of the whole system.

Next, as shown in Figures 1-3, the VCU 201 collects and assembles the dedicated structured big data ("fuel saving data set" for short) related to the vehicle fuel saving of ACE heavy duty trucks that is generated in the running process of the ACE heavy duty truck 010 with the time sequence annotation as the reference of the measurement data time sequence of all subsystems. Later, the "fuel saving data set" will be "real-timely" (subsecond-level delay) or "timely" (hour-level delay) uploaded to the cloud computing platform 001 for centralized or distributed storage via a mobile Internet 002 or wired Internet, for subsequent data analysis and processing.

For example, the fuel saving data set can be "quasi real-timely" uploaded to the server of the cloud computing platform 001 via the wireless communication gateway 210 (as shown in Figure 1) and the cellular mobile network 002 (as shown in Figure 3) for subsequent data processing. The "quasi real-time" indicates that the delay of uploading the fuel saving data packet is within several hours. Optionally, the data packet can be desensitized and encrypted before being uploaded to ensure data security and protect customer privacy and trade secrets. The cloud platform 001 will collect all fuel saving data packets of numerous ACE heavy duty trucks using the present disclosure. The cloud platform trains the artificial intelligence (AI) brain ("fuel saving AI brain" for short) of the "fuel saving robot" by means of these increasingly accumulated structured big data of ACE heavy duty truck groups and by allocating the corresponding computing power through the specific algorithm of machine learning, and seeks the optimal fuel saving control strategy and effect of ACE heavy duty trucks. The commercially available AI training chip is preferably used by the cloud end 001, which has the characteristics of high universality, high performance, high power consumption and high cost; while the AI inference chip is preferably used by the vehicle-end AIU 202, which has the characteristics of specificity, low performance, low power consumption and low cost. The real-time linkage of the vehicle-end fuel saving AI inference chip and the cloud-end fuel saving AI training chip can enable tens of millions of calculations per second according to the constantly changing running conditions of the ACE heavy duty truck, seek a dynamically optimal fuel saving control strategy in each second and minute of time frame (corresponding to 20 m to 1,000 m of driving distance), and finally achieve the macroscopically optimal fuel saving effect of the whole journey for the ACE heavy duty truck 010 through the microcosmically optimal fuel saving in each period, constant accumulation and linear superposition. The vehicle-mounted fuel saving AI brain (VCU 201 plus AIU 202) commands the ACE heavy duty truck 010 running in the same highway lane to achieve the optimal fuel saving effect through predictive adaptive cruise (PAC), and this problem is mathematically equivalent to AlphaGo of Google. Just as AlphaGo can defeat humans, the ACE heavy duty truck "fuel saving robot" of the disclosure can also surpass the human drivers in fuel saving of the heavy duty truck. It should also be emphasized that the "fuel saving robot" of the present disclosure will be a good assistant of the heavy duty truck driver in long haul logistics rather than completely replacing the human driver.

The starting point and finishing point of each freight transportation event of the heavy duty trucks for long haul logistics are predictable, there are very few temporary random changes, the mileages range from hundreds of kilometers to thousands of kilometers, and the duration ranges from several hours to several days. Before start of freight, the VCU 201 of the ACE heavy duty truck 010 can automatically require the AI "fuel saving brain" of the cloud platform 001 through the wireless mobile gateway 210 to download the optimal fuel saving control default program and current optimal fuel consumption value (L/100 km) for the journey, to serve as a reference for locally real-time operation (edge computing) and the dynamic regulation for the fuel saving machine learning algorithm of the VCU 201 and AIU 202 of the vehicle. In this way, we can enjoy the collective intelligence of running in the same road section of ACE heavy duty trucks in the whole industry, so as to achieve the optimal fuel saving effect of long haul logistics industry. After driving the ACE heavy duty truck to a closed highway, drivers can select the PAC mode (normal mode N/Eco mode/performance mode P), activate the PAC function, and replace partial driving functions of drivers with the VCU 201 in cooperation with the AIU 202, so as to achieve driving (acceleration/cruise/slide/deceleration) automation (SAE L1) in the same lane of the ACE heavy duty truck, relax driver's feet, reduce the labor strength in drivers' long-way driving, and achieve the optimal fuel saving effect. Drivers are still responsible for turning and emergency braking of the vehicle and for keeping all-around monitoring on driving of the heavy duty truck constantly. The other beneficial effect of the present disclosure is that the well-known long haul logistics industrial pain point of the actual comprehensive fuel consumption discreteness up to 25% of the vehicle due to human factors of the drivers is eliminated through the optimization of driving fuel consumption managed by the AIU 202, so as to ensure that every ACE heavy duty truck can highly and uniformly achieve the optimal fuel saving effect when running on the same road section. This highlight is very important for transportation companies in terms of reducing cost and increasing efficiency.

In a word, the essential difference between the ACE heavy duty truck 010 with PAC function in the present disclosure and other hybrid vehicles and traditional heavy duty diesel trucks with similar technical features available on the market today is that the former highly focuses on the optimization of energy saving and emission reduction under expressway conditions, can effectively solve the worldwide problem of no obvious fuel saving effect (the fuel saving rate is always less than 10%) of hybrid heavy duty trucks under the working condition of highways than traditional fuel heavy duty trucks that is recognized in the automobile industry, and can achieve the beneficial effect that the actual comprehensive fuel consumption in long haul logistics is reduced by more than 30%, and significantly improve the active safety of the vehicle, and ensure that ACE heavy trucks meet the pollutant emission and carbon emission regulations for a long life (700,000 km emission standard warranty period) under the actual driving environment (RDE) of the three major heavy truck markets in China/US/EU. In other words, when the ACE heavy duty truck 010 is running on a non-congested closed expressway, the driver may only be responsible for the perception of objects or events around the vehicle and lateral vehicle control in a dynamic driving task (DDT), and the heavy duty truck fuel saving robot will dominate the longitudinal vehicle control through the SAE L1 automatic driving function such as predictive adaptive cruise (PAC). In the predictive adaptive cruise control (PAC) mode, the heavy duty truck fuel saving robot (especially including the dynamic cooperation between VCU 201 and AIU 202) performs iSS in the series hybrid mode or iPS in the parallel hybrid mode on the transient output power of the engine 101 by using the vehicle energy management control strategy and the on-board real-time computing power based on the machine learning fuel saving algorithm according to the performance characteristics and parameters of key subsystems of the vehicle, vehicle driving conditions and three-dimensional road priori data within the electronic horizon, so that the battery packs 130a & 130b work stably or switch smoothly among the three modes of Charge-Sustaining (CS), Charge Depleting (CD) and Charge-Increasing (CI), and the ePSD 123 is commanded to distribute 100 KW level electric power dynamically between its three ports, so as to meet the vehicle dynamics equation in real time while meeting the constraints of vehicle power performance, active safety, long-term compliance of exhaust emission RDE and the like, and realize the minimization of the actual fuel consumption in the whole freight transportation event. Compared with the traditional diesel heavy duty truck, the actual comprehensive fuel saving rate can be as high as 30%. The "adaptive cruise control (ACC)" function of the prior art of passenger vehicles or commercial vehicles mainly provides the driving convenience and improves the active safety, with a negligible impact on the energy saving and emission reduction of vehicles; the "predictive cruise control" of the traditional heavy duty truck with internal combustion engine focuses on the vehicle energy management control strategy, but the actual fuel saving effect is only about 3%. Different from the prior art, the technical solution "predictive adaptive cruise (PAC)" of the ACE heavy duty truck of the present disclosure first focuses on the optimization of vehicle energy saving and emission reduction in the long haul logistics scenario. Compared with the traditional diesel heavy duty truck, the actual comprehensive fuel saving rate can be as high as 30%. The technical solution also provides driving convenience and improves the active safety.

The heavy duty truck fuel saving robot of this disclosure will not replace the human driver, and it is always a loyal and reliable assistant of human driver. The Operational Design Domain (ODD) is closed highways. Under highway conditions (average speed is higher than 50 km/h; rarely active acceleration or braking), the fuel saving robot of heavy duty truck drives through the "Predictive Adaptive Cruise" (PAC) of the leading vehicle to realize autonomous refueling and acceleration, braking and deceleration, constant speed cruise (SAE L1 vehicle longitudinal automatic control) of the ACE heavy duty truck in the same highway lane and achieving multiple beneficial effects such as energy saving and emission reduction, alleviates the labor intensity of heavy duty truck drivers in long-distance driving, and improving the active safety performance of vehicles.

The present disclosure does not directly involve the lateral automatic control of vehicle driving, and the vehicle steering control (i.e., lateral control) of ACE heavy duty truck is always completely dominated by human drivers. The ACE heavy duty truck of the present disclosure is easily upgraded to level L3 PA or Level L4 HA vehicles by installing a variety of driving environment sensors and Autonomous Drive AI Controller. Most industry experts in the world believe that heavy duty truck for long haul logistics is most likely to be the first to realize the application scenario of L3/L4 automatic driving commercialized in bulk within ten years among the various types of road vehicles. The ACE heavy duty truck of the disclosure upgrades L3/L4 automatic driving in the long haul logistics application scenario, and the realization of bulk commercialization is lower than the comprehensive cost of upgrading traditional engine and the Lead Time is short.

Although the language specific to structural features and/or method logical actions has been used to describe the topic, it should understand that the restricted topic in the claims may not be restricted to the above specific characteristics or actions described. On the contrary, the above specific characteristics and actions described are only example forms of achieving the claims.

**Claims**

1. An automated, connected, electrified (ACE) heavy duty truck, comprising:

   a generator set, comprising an engine and a generator connected bidirectionally and mechanically;
   an electrical power split device (ePSD), configured as a power electronics network with three ports, wherein the first port of the ePSD is electrically connected with the output end of the generator set bidirectionally and in an AC mode;
   at least one power battery pack, electrically connected with the third port of the ePSD bidirectionally and in a DC mode;
   an automatic transmission, with its output shaft mechanically connected with a main driving axle of the ACE heavy duty truck bidirectionally;
   at least one driving motor, electrically connected with the second port of the ePSD bidirectionally, wherein the output shaft of the main driving motor in the at least one driving motor is mechanically connected with the input shaft of the automatic transmission bidirectionally;
   a controllable clutch, arranged on a direct mechanical connection between the generator set and the driving motor, wherein the first controllable clutch is operable to couple or decouple the direct mechanical connection; and
   a vehicle control unit (VCU), configured to perform dynamic real-time control on at least one of the generator set, the ePSD, the automatic transmission, the at least one power battery pack, the at least one driving motor and the controllable clutch;
   wherein the VCU is also configured for controlling the engine to switch between a first operating point and a second operating point in a pulse width modulation (PWM) mode when the controllable clutch is in a decoupled state, wherein the first operating point corresponds to an operating point at which the engine cuts off fuel injection and runs in an idle operation mode and the generator draws electrical energy from the at least one power battery pack, and the second operating point corresponds to an operating point at which the engine operates in a normal operation mode to drive the generator to generate power.

2. The ACE heavy duty truck of claim 1, wherein the VCU is further configured for controlling the output power of the engine in the PWM mode when the controllable clutch is in a coupled state.

3. A method for achieving fuel saving during the driving of the ACE heavy duty truck of claim 1 or 2, comprising:

Receiving environmental information about the ACE heavy duty truck during the driving;

determining that the environmental information meets a predetermined fuel saving condition;

in response to determining that the environmental information meets the predetermined fuel saving condition, determining the state of the controllable clutch; and

in response to determining that the controllable clutch is in a decoupled state, controlling the engine of the ACE heavy duty truck to switch between the first operating point and the second operating point in the PWM mode, thereby achieving fuel saving of the engine.

4. The method of claim 3, wherein the environmental information comprises at least one of the followings which are automatically annotated and combined by a unique time sequence based on the precise time service of the Global Navigation Satellite System (GNSS) of the ACE heavy duty truck:

a unique dynamic DC voltage and a plurality of dynamic DC currents collected at the DC bus junction of the electrical power split device (ePSD);

real-time longitude, real-time latitude and real-time road longitudinal slope collected from the GNSS;

longitude, latitude and road longitudinal slope collected from a map unit of the ACE heavy duty truck; and

dynamic configuration parameters and dynamic operating data collected from the generator set, the at least one power battery pack, the automatic transmission and the at least one driving motor.

5. The method of claim 3, wherein determining that the environmental information meets the predetermined fuel saving condition comprises:

transmitting the environmental information to an external device; and

receiving, from the external device, information about the environmental information meeting the predetermined fuel saving condition.

6. The method of claim 3, further comprising:

in response to determining that the controllable clutch is in the coupled state, controlling the output power of the engine in the PCM mode.

7. The method of claim 3, wherein in the PWM mode, the cycle and duty cycle of the pulse sequence are determined at least based on the vehicle configuration parameters, dynamic operating data and road three-dimensional information of the ACE heavy duty truck.

8. A method for achieving braking during driving of the ACE heavy duty truck of claim 1 or 2, comprising:

in response to determining that a braking condition is met, determining the state of the controllable clutch;

in response to determining that the controllable clutch is in the decoupled state, controlling the engine to cut off fuel injection and run at the idle operation condition, and controlling the at least one driving motor to generate power via regenerative braking to charge the at least one power battery pack; and

in response to determining that the state of charge of the at least one power battery pack is greater than a first threshold, controlling the generator to reversely drag the engine to achieve braking.

9. The method of claim 8, further comprising:

in response to determining that the controllable clutch is in the coupled state, controlling the engine to cut off fuel injection to achieve braking.

10. The method of claim 8, wherein the ACE heavy duty truck further comprises a brake resistor electrically connected with the third port of the ePSD, wherein when determining that the state of charge is greater than the first threshold, the brake resistor is configured to cooperate with the generator for achieving braking.

11. A method for reminding the driver to carry out emergency braking during driving of the ACE heavy duty truck of claim 1 or 2, comprising:

in response to determining that the braking condition is met, controlling the engine to cut off fuel injection, and controlling the at least one driving motor to superimpose a bipolar PWM torque signal over the average torque of the output shaft of the driving motor, wherein the duty cycle of the bipolar PWM torque signal is 50% and the average value is zero, thereby causing the ACE heavy duty truck to produce vibration and noise to remind the driver to carry out emergency braking measures.

**12.** The method of claim 11, wherein the braking condition comprises: the distance between the ACE heavy duty truck and the vehicle ahead less than a threshold distance.

**13.** A computer readable storage medium on which a computer program is stored, wherein when the computer program is executed by a processor, the VCU is operated to execute the method according to any of claims 3-7, or the method according to any of claims 8-10, or the method according to any of claims 11-12.

**14.** A method for fuel saving control of the ACE heavy duty truck of claim 1 or 2, comprising:

receiving, from a plurality of ACE heavy duty trucks, environmental information about each of the plurality of ACE heavy duty trucks during driving;
deciding whether the corresponding environmental information meets the predetermined fuel saving condition for each of the plurality of heavy duty trucks; and
in response to determining that the environmental information meets the predetermined fuel saving condition, sending information about the environmental information meeting the predetermined fuel saving condition to the corresponding ACE heavy duty truck in the plurality of ACE heavy duty trucks.

**15.** The method of claim 14, wherein the environmental information comprises at least one of the followings which are automatically annotated and combined by a unique time sequence based on the precise time service of the Global Navigation Satellite System (GNSS) of the ACE heavy duty truck:

a unique dynamic DC voltage and a plurality of dynamic DC currents collected at the DC bus junction of the electrical power split device (ePSD);
real-time longitude, real-time latitude and real-time road longitudinal slope collected from the GNSS;
longitude, latitude and road longitudinal slope collected from a map unit of the ACE heavy duty truck; and
dynamic configuration parameters and dynamic operating data collected from the generator set, the at least one power battery pack, the automatic transmission and the at least one driving motor.

FIG. 1

FIG. 2

FIG. 3

## INTERNATIONAL SEARCH REPORT

| International application No. |
| --- |
| **PCT/CN2021/070458** |

### A. CLASSIFICATION OF SUBJECT MATTER

B60W 20/40(2016.01)i; B60K 6/46(2007.01)i

According to International Patent Classification (IPC) or to both national classification and IPC

### B. FIELDS SEARCHED

Minimum documentation searched (classification system followed by classification symbols)

B60W; B60K

Documentation searched other than minimum documentation to the extent that such documents are included in the fields searched

Electronic data base consulted during the international search (name of data base and, where practicable, search terms used)

CNABS; CNTXT; CNKI: 卡车, 重卡, 混合动力, ePSD, 发动机, 电机, 离合器, 发电, 怠速, 高效, 环境; VEN; USTXT; EPTXT; GBTXT; WOTXT: truck, lorry, hybrid, engine, motor, clutch, generate, idle, efficiency, environment.

### C. DOCUMENTS CONSIDERED TO BE RELEVANT

| Category* | Citation of document, with indication, where appropriate, of the relevant passages | Relevant to claim No. |
| --- | --- | --- |
| PX | CN 111746259 A (GANTAN INTERNATIONAL COMPANY et al.) 09 October 2020 (2020-10-09) description, paragraphs 16-214, and figures 1-3 | 1-15 |
| Y | CN 109823188 A (GANTAN INTERNATIONAL COMPANY et al.) 31 May 2019 (2019-05-31) description, paragraphs 76-141, and figures 1-3 | 1-15 |
| Y | CN 101445043 A (BYD COMPANY LTD.) 03 June 2009 (2009-06-03) description, page 2 line 19 to page 4 line 18 and figure 1 | 1-15 |
| Y | CN 1857941 A (SHANGHAI JIAO TONG UNIVERSITY) 08 November 2006 (2006-11-08) description page 4 line 25 to page 8 line 24 and figure 1 | 1-15 |
| A | CN 108973979 A (GANTAN INTERNATIONAL COMPANY et al.) 11 December 2018 (2018-12-11) entire document | 1-15 |
| A | WO 2014052154 A1 (CUMMINS INC.) 03 April 2014 (2014-04-03) entire document | 1-15 |

☐ Further documents are listed in the continuation of Box C.　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 March 2021** | **08 April 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/070458**

| Patent document cited in search report | | | Publication date (day/month/year) | Patent family member(s) | | | Publication date (day/month/year) |
|---|---|---|---|---|---|---|---|
| CN | 111746259 | A | 09 October 2020 | WO | 2020199909 | A1 | 08 October 2020 |
| CN | 109823188 | A | 31 May 2019 | WO | 2020143495 | A1 | 16 July 2020 |
| CN | 101445043 | A | 03 June 2009 | CN | 101445043 | B | 06 October 2010 |
| CN | 1857941 | A | 08 November 2006 | CN | 100406289 | C | 30 July 2008 |
| CN | 108973979 | A | 11 December 2018 | WO | 2020015762 | A1 | 23 January 2020 |
| WO | 2014052154 | A1 | 03 April 2014 | US | 2014088805 | A1 | 27 March 2014 |
| | | | | US | 9260002 | B2 | 16 February 2016 |

Form PCT/ISA/210 (patent family annex) (January 2015)

54

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RICARDO.** Heavy Duty Vehicle Technology Potential and Cost Study. *Final Report for ICCT; 2,* 2017
- **OSCAR DELGADO et al.** *European Heavy-Duty Vehicles: Cost Effectiveness of Fuel-Efficiency Technologies for Long-Haul Tractor-Trailers in the 2025-2030 Timeframe,* January 2018
- **FELIPE RRODRIGUEZ.** *HDV Fuel Efficiency Technologies,* 28 June 2018
- Adoption of New Fuel Efficient Technologies from SuperTruck. *United States Department of Energy to the United States Congress,* June 2016